# EUROPEAN PATENT SPECIFICATION

(11) **EP 3 165 359 B1**
(45) Date of publication and mention of the grant of the patent: **10.04.2019**
(21) Application number: 15815981.4
(22) Date of filing: 01.07.2015
(51) Int. Cl.: C08J 7/04, B65D 65/40, B65D 81/24, B32B 15/08, C08L 43/02

(54) **MULTILAYER STRUCTURE AND METHOD FOR MANUFACTURING SAME, PACKAGING MATERIAL AND PRODUCT IN WHICH SAME IS USED, AND ELECTRONIC DEVICE**
MEHRSCHICHTIGE STRUKTUR UND VERFAHREN ZUR HERSTELLUNG DAVON, VERPACKUNGSMATERIAL UND PRODUKT DAMIT SOWIE ELEKTRONISCHE VORRICHTUNG
STRUCTURE MULTICOUCHE ET PROCÉDÉ POUR SA FABRICATION, MATÉRIAU D'EMBALLAGE ET PRODUIT DANS LEQUEL CEUX-CI SONT UTILISÉS, ET DISPOSITIF ÉLECTRONIQUE

(30) Priority: 02.07.2014 JP 2014136555; 02.07.2014 JP 2014136557; 02.07.2014 JP 2014136559
(43) Date of publication of application: 10.05.2017
(73) Proprietor: Kuraray Co., Ltd., Okayama 710-0801 (JP)
(72) Inventor: SHIMIZU, Yuji, Kurashiki-shi Okayama 713-8550 (JP); SASAKI, Ryoichi, Kurashiki-shi Okayama 713-8550 (JP); INUBUSHI, Yasutaka, Kurashiki-shi Okayama 713-8550 (JP); NAKAYA, Masakazu, Kurashiki-shi Okayama 713-8550 (JP)
(74) Representative: Müller-Boré & Partner Patentanwälte PartG mbB
(86) International application number: PCT/JP2015/003320
(87) International publication number: WO 2016/002222

(56) References cited:
- EP-A1- 2 554 367
- WO-A1-2011/122036
- WO-A1-2012/115175
- WO-A1-2013/051287
- JP-A- 2007 290 369
- JP-A- 2010 030 290
- JP-A- 2011 200 780
- JP-A- 2013 208 794
- DATABASE WPI Week 201370 Thomson Scientific, London, GB; AN 2013-Q39284 XP002777354, & JP 2013 208794 A (KURARAY CO LTD) 10 October 2013 (2013-10-10)

## Description

The present invention relates to a multilayer structure, a method for producing the multilayer structure, a packaging material and a product that include the multilayer structure, and an electronic device.

Layered products in which a gas barrier layer containing aluminum or aluminum oxide as a component is formed on a plastic film have been conventionally well-known. Such layered products are used as packaging materials for protecting articles (such as foods) which are susceptible to quality change induced by oxygen. In many cases, such a gas barrier layer is formed on a plastic film by a dry process such as physical or chemical vapor deposition. Aluminum-deposited films have light shielding properties as well as gas barrier properties and are typically used as packaging materials for dry foods. Aluminum oxide-deposited films, which have transparency, are characterized by allowing visual recognition of contained substances and by enabling check for foreign matters with a metal detector and heating with a microwave oven. These films are thus used as packaging materials in a wide variety of applications such as retort food packaging.

For example, Patent Literature 1 discloses a gas barrier layer containing aluminum, the gas barrier layer being a transparent gas barrier layer composed of aluminum atoms, oxygen atoms, and sulfur atoms. Patent Literature 1 discloses a method for forming the transparent gas barrier layer by reactive sputtering.

Patent Literature 2 discloses a transparent gas barrier layer composed of a reaction product of aluminum oxide particles and a phosphorus compound. Patent Literature 2 discloses a method for forming the gas barrier layer, in which a coating liquid containing aluminum oxide particles and a phosphorus compound is applied onto a plastic film, then dried and heat-treated.

The conventional gas barrier layers have good initial gas barrier properties; however, they may suffer from defects such as cracks and pinholes when exposed to physical stresses such as deformation and impact.

Patent Literature 3 discloses a multilayer structure having good gas barrier properties and capable of maintaining the gas barrier properties at a high level even when exposed to physical stresses such as deformation and impact.

However, a packaging material including the multilayer structure described in Patent Literature 3 may undergo a decrease in interlayer adhesion and hence suffer from appearance defects such as delamination under harsh conditions (at high temperature and high humidity). In particular, when the conventional multilayer structure is used in a retort packaging material, the multilayer structure may undergo a decrease in interlayer adhesion and hence suffer from appearance defects such as delamination after undergoing retorting. Under these circumstances, there is a demand for a multilayer structure that maintains the interlayer adhesion and presents good appearance even after undergoing retorting. In addition, conventional multilayer structures may fail to exhibit sufficient gas barrier properties in actual use. When a multilayer structure is used as a food packaging material, the multilayer structure is exposed to various physical stresses at different stages, including printing, lamination, bag making, food filling, transportation, displaying, and consumption. There has thus been a demand for a multilayer structure capable of maintaining good gas barrier properties even when exposed to such physical stresses. That is, a multilayer structure having higher performance is currently demanded.

The present inventors have confirmed that when the multilayer structure described in Patent Literature 3 is used as a protective sheet for an electronic device, the protective sheet may undergo a decrease in interlayer adhesion and hence suffer from appearance defects such as delamination at high temperature and high humidity. An electronic device including a protective sheet having better properties is also demanded.
Patent Literature 1: JP 2003-251732 A
Patent Literature 2: WO 2011/122036 A1
Patent Literature 3: JP 2013-208794 A

An object of the present invention is to provide: a novel multilayer structure capable of maintaining high performance even after being exposed to physical stresses or after undergoing retorting; a packaging material including the multilayer structure; and a method for producing the multilayer structure. Another object of the present invention is to provide: a packaging material that is capable of maintaining the gas barrier properties at a high level even when exposed to physical stresses and that is resistant to appearance defects even at high temperature and high humidity; and a product including the packaging material. Still another object of the present invention is to provide an electronic device that is capable of maintaining the gas barrier properties at a high level even when exposed to physical stresses and that undergoes less decrease in interlayer adhesion and is thus resistant to appearance defects even at high temperature and high humidity.

Through a detailed study, the present inventors have found that a multilayer structure including predetermined layers can achieve the above objects and have completed the present invention.

The present invention provides a multilayer structure. The multilayer structure includes a base (X), a layer (Y), and a layer (Z) disposed contiguous to the layer (Y). The layer (Y) includes a compound (A) containing a phosphorus atom and a polymer (B) having a hydroxy group and/or carboxyl group. A mass ratio between the compound (A) and the polymer (B) is 15 : 85 to 99 : 1 in the layer (Y). The layer (Z) is a layer containing aluminum atoms.

In the multilayer structure of the present invention, the compound (A) is a polymer having at least one functional group selected from the group consisting of a phosphoric acid group, a phosphorous acid group, a phosphonic acid group, a phosphonous acid group, a phosphinic acid group, and a phosphinous acid group.

In the multilayer structure of the present invention, the compound (A) may be poly(vinylphosphonic acid).

In the multilayer structure of the present invention, the polymer (B) may be a polyvinyl alcohol-based polymer.

In the multilayer structure of the present invention, the layer (Z) may include a layer (Z1) containing a reaction product (E). The reaction product (E) is a reaction product formed by a reaction between a metal oxide (C) containing aluminum and a phosphorus compound (D). In an infrared absorption spectrum of the layer (Z1), a maximum absorption wavenumber in a region of 800 to 1,400 cm⁻¹ may be 1,080 to 1,130 cm⁻¹.

In the multilayer structure of the present invention, the layer (Z) may include a deposited layer (Z2) of aluminum or a deposited layer (Z3) of aluminum oxide.

In the multilayer structure of the present invention, the base (X) may include at least one selected from the group consisting of a thermoplastic resin film layer and a paper layer.

The present invention provides a method for producing the multilayer structure, the method including:
a step (Y-i) of mixing a compound (A) containing a phosphorus atom, a polymer (B) having a hydroxy group and/or carboxyl group, and a solvent to prepare a coating liquid (S) containing the compound (A), the polymer (B), and the solvent;
a step (Y-ii) of forming a layer (Y) using the coating liquid (S); and
a layer (Z) formation step of forming a layer (Z) containing aluminum atoms.

The layer (Y) and the layer (Z) are formed contiguous to each other, and the compound (A) and the polymer (B) are mixed at a mass ratio of 15 : 85 to 99 : 1 in the step (Y-i), wherein the compound (A) is a polymer having at least one functional group selected from the group consisting of a phosphoric acid group, a phosphorous acid group, a phosphonic acid group, a phosphonous acid group, a phosphinic acid group, and a phosphinous acid group.

The present invention also provides a packaging material including the multilayer structure.

The packaging material may further include a layer formed by extrusion coating lamination.

The packaging material of the present invention may be a vertical form-fill-seal bag, a vacuum packaging bag, a pouch, a laminated tube container, an infusion bag, a paper container, a strip tape, a container lid, or an in-mold labeled container.

The present invention provides a product including any one of the packaging materials in at least a part of the product.

The product of the present invention may be adapted to function as a vacuum insulator, the product having an interior with a reduced pressure, the product including a substance contained in the interior, the substance being a core material.

The present invention further provides an electronic device including the multilayer structure.

The electronic device of the present invention may include a protective sheet that protects a surface of a main body of the electronic device. The protective sheet may include the multilayer structure.

The electronic device of the present invention may be a photoelectric conversion device, an information display device, or a lighting device.

According to the present invention, it is possible to obtain a novel multilayer structure capable of maintaining high performance even after being exposed to physical stresses or after undergoing retorting. With the production method of the present invention, the multilayer structure can easily be produced. According to the present invention, it is also possible to obtain: a packaging material that is capable of maintaining the gas barrier properties at a high level even when exposed to physical stresses and that is resistant to appearance defects even at high temperature and high humidity; and a product including the packaging material. According to the present invention, it is further possible to obtain an electronic device that is capable of maintaining the gas barrier properties at a high level even when exposed to physical stresses and that undergoes less decrease in interlayer adhesion and is thus resistant to appearance defects even at high temperature and high humidity.
FIG. 1 is a view showing the configuration of a vertical form-fill-seal bag according to an embodiment of the present invention.
FIG. 2 is a schematic cross-sectional view of a vacuum packaging bag according to an embodiment of the present invention.
FIG. 3 is a view showing the configuration of a flat pouch according to an embodiment of the present invention.
FIG. 4 is a view showing the configuration of a laminated tube container according to an embodiment of the present invention.
FIG. 5 is a view showing the configuration of an infusion bag according to an embodiment of the present invention.
FIG. 6 is a view showing the configuration of a paper container according to an embodiment of the present invention.
FIG. 7 is a view showing the configuration of an in-mold labeled container according to an embodiment of the present invention.
FIG. 8 is a schematic cross-sectional view of a vacuum insulator according to an embodiment of the present invention.
FIG. 9 is a schematic cross-sectional view of a vacuum insulator according to another embodiment of the present invention.
FIG. 10 is a partial cross-sectional view of an electronic device according to an embodiment of the present invention.
FIG. 11 is a perspective view schematically showing a part of an extrusion coating lamination apparatus used in the present invention.

Hereinafter, the present invention will be described with reference to examples. The following description gives examples of materials, conditions, techniques, and value ranges; however, the present invention is not limited to those mentioned as examples. The materials given as examples may be used alone or may be used in combination with one another, unless otherwise specified.

Unless otherwise specified, the meaning of an expression like "a particular layer is stacked on a particular member (such as a base or layer)" as used herein encompasses not only the case where the particular layer is stacked in direct contact with the member but also the case where the particular layer is stacked above the member, with another layer interposed therebetween. The same applies to expressions like "a particular layer is formed on a particular member (such as a base or layer)" and "a particular layer is disposed on a particular member (such as a base or layer)". Unless otherwise specified, the meaning of an expression like "a liquid (such as a coating liquid) is applied onto a particular member (such as a base or layer)" encompasses not only the case where the liquid is applied directly to the member but also the case where the liquid is applied to another layer formed on the member.

Herein, a layer may be termed "layer (Y)" using a reference character "(Y)" to differentiate the layer from other layers. The reference character "(Y)" has no technical meaning, unless otherwise specified. The same applies to other reference characters used in the terms such as "base (X)", "layer (Z)", and "compound (A)". However, an exception is made for the terms such as "hydrogen atom (H)" in which the reference character obviously represents a specific element.

### [Multilayer structure]

The multilayer structure of the present invention includes a base (X), a layer (Y), and a layer (Z) disposed contiguous to the layer (Y). The layer (Y) contains a compound (A) containing a phosphorus atom and a polymer (B) having a hydroxy group and/or carboxyl group. The layer (Z) contains aluminum atoms. The term "multilayer structure" as used in the following description refers to a multilayer structure that includes the base (X) and the layer (Y), unless otherwise specified. In the layer (Y), the mass ratio between the compound (A) and the polymer (B) (compound (A) : polymer (B)) is in the range of 15 : 85 to 99 : 1. When the mass ratio is in this range, the multilayer structure can maintain high performance even after being exposed to physical stresses or after undergoing retorting.

In the layer (Y), at least a portion of the compound (A) and at least a portion of the polymer (B) may have undergone a reaction. When the compound (A) has undergone a reaction in the layer (Y), a moiety derived from the compound (A) in the reaction product is regarded as the compound (A). In this case, the mass of the compound (A) used in the formation of the reaction product (the mass of the compound (A) that has yet to undergo the reaction) is included in the mass of the compound (A) in the layer (Y). When the polymer (B) has undergone a reaction in the layer (Y), a moiety derived from the polymer (B) in the reaction product is regarded as the polymer (B). In this case, the mass of the polymer (B) used in the formation of the reaction product (the mass of the polymer (B) that has yet to undergo the reaction) is included in the mass of the polymer (B) in the layer (Y).

The polymer (B) typically contains no phosphorus atoms. More specifically, the polymer (B) does not contain the functional group (phosphorus atom-containing functional group) described later. A compound possessing the features of both the compound (A) and the polymer (B) is regarded as the compound (A) in the calculation of the mass ratio.

In the layer (Y), the mass ratio between the compound (A) and the polymer (B) is preferably in the range of 20 : 80 to 99 : 1, more preferably in the range of 60 : 40 to 99 : 1, even more preferably in the range of 65 : 35 to 91 : 9, and particularly preferably in the range of 65 : 35 to 80 : 20. When the mass ratio is in such a range, the multilayer structure can maintain high performance even after being exposed to physical stresses or after undergoing retorting. The base (X) and the layer (Y) will hereinafter be described.

### [Base (X)]

The material of the base (X) is not particularly limited, and a base made of any of various materials can be used. Examples of the material of the base (X) include: resins such as thermoplastic resins and thermosetting resins; fiber assemblies such as fabrics and paper; wood; and glass. Among these, thermoplastic resins and paper are preferred. The base (X) in a preferred example includes at least one selected from the group consisting of a thermoplastic resin film layer and a paper layer. The base (X) may be a composite made of a plurality of materials and may be a single-layer or multilayer base.

The form of the base (X) is not particularly limited. The base (X) may be a laminar base such as a film or sheet or may be any of various formed bodies having a three-dimensional shape such as the shape of a sphere, polygon, or pipe. Among these, a laminar base is useful particularly when the multilayer structure (laminated structure) is used as or in a packaging material or solar cell member. The multilayer structure including such a base (X) is superior in terms of processability into a packaging material and various properties required for use as or in a packaging material.

Examples of thermoplastic resins that may be used in the base (X) include: polyolefin resins such as polyethylene and polypropylene; polyester resins such as polyethylene terephthalate, polyethylene-2,6-naphthalate, polybutylene terephthalate, and copolymers thereof; polyamide resins such as nylon-6, nylon-66, and nylon-12; hydroxy group-containing polymers such as polyvinyl alcohol and ethylene-vinyl alcohol copolymer; polystyrene; poly(meth)acrylate; polyacrylonitrile; polyvinyl acetate; polycarbonate; polyarylate; regenerated cellulose; polyimide; polyetherimide; polysulfone; polyethersulfone; polyetheretherketone; and ionomer resins. When the multilayer structure is used as or in a packaging material, the material of the base (X) is preferably at least one thermoplastic resin selected from the group consisting of polyethylene, polypropylene, polyethylene terephthalate, nylon-6, and nylon-66.

When a film made of such a thermoplastic resin is used as the base (X), the base (X) may be an oriented film or non-oriented film. In terms of high suitability for processes (such as suitability for printing or lamination) of the resulting multilayer structure, an oriented film, particularly a biaxially-oriented film, is preferred. The biaxially-oriented film may be a biaxially-oriented film produced by any one method selected from simultaneous biaxial stretching, sequential biaxial stretching, and tubular stretching.

Examples of the paper that may be used in the base (X) include kraft paper, high-quality paper, simili paper, glassine paper, parchment paper, synthetic paper, white paperboard, manila board, milk carton board, cup paper, and ivory paper. The use of paper in the base makes it possible to obtain a multilayer structure for a paper container.

When the base (X) is in the form of a layer, the thickness of the base (X) is preferably in the range of 1 to 1,000 µm, more preferably in the range of 5 to 500 µm, and even more preferably in the range of 9 to 200 µm, in terms of high mechanical strength and good processability of the resulting multilayer structure.

### [Layer (Y)]

The layer (Y) includes the compound (A) and the polymer (B). The compound (A) is a compound containing a phosphorus atom. The polymer (B) has a hydroxy group and/or carboxyl group. The compound (A) and the polymer (B) will be described hereinafter.

### [Compound (A)]

The compound (A) is a polymer (Aa) having a predetermined functional group containing a phosphorus atom. The polymer (Aa) is a polymer having at least one phosphorus atom-containing functional group selected from the group consisting of a phosphoric acid group, a phosphorous acid group, a phosphonic acid group, a phosphonous acid group, a phosphinic acid group, and a phosphinous acid group. The functional group of the polymer (Aa) is preferably a phosphoric acid group and/or phosphonic acid group and more preferably a phosphonic acid group.

Examples of the polymer (Aa) include: polymers of phosphono(meth)acrylic acid esters such as 6-[(2-phosphonoacetyl)oxy]hexyl acrylate, 2-phosphonooxyethyl methacrylate, phosphonomethyl methacrylate, 11-phosphonoundecyl methacrylate, and 1,1-diphosphonoethyl methacrylate; polymers of vinylphosphonic acids such as vinylphosphonic acid, 2-propene-1-phosphonic acid, 4-vinylbenzylphosphonic acid, and 4-vinylphenylphosphonic acid; polymers of vinylphosphinic acids such as vinylphosphinic acid and 4-vinylbenzylphosphinic acid; and phosphorylated starch. The polymer (Aa) may be a homopolymer of a monomer having the at least one phosphorus atom-containing functional group or may be a copolymer of two or more monomers. Alternatively, a mixture of two or more polymers each consisting of a single monomer may be used as the polymer (Aa). In particular, a polymer of a phosphono(meth)acrylic acid ester and/or a polymer of a vinylphosphonic acid is preferred, and a polymer of a vinylphosphonic acid is more preferred. That is, a preferred example of the polymer (Aa) is poly(vinylphosphonic acid). The polymer (Aa) can be obtained also by homopolymerization or copolymerization of a vinylphosphonic acid derivative such as a vinylphosphonic acid halide or vinylphosphonic acid ester, followed by hydrolysis.

Alternatively, the polymer (Aa) may be a copolymer of a monomer having the at least one phosphorus atom-containing functional group and a vinyl monomer. Examples of the vinyl monomer copolymerizable with the monomer having the phosphorus atom-containing functional group include (meth)acrylic acid, (meth)acrylic acid esters, acrylonitrile, methacrylonitrile, styrene, nuclear-substituted styrenes, alkyl vinyl ethers, alkyl vinyl esters, perfluoroalkyl vinyl ethers, perfluoroalkyl vinyl esters, maleic acid, maleic anhydride, fumaric acid, itaconic acid, maleimide, and phenylmaleimide. Among these, (meth)acrylic acid esters, acrylonitrile, styrene, maleimide, and phenylmaleimide are preferred.

In order to obtain a multilayer structure that has better bending resistance, the proportion of the structural units derived from the monomer having the phosphorus atom-containing functional group in the total structural units of the polymer (Aa) is preferably 10 mol% or more, more preferably 20 mol% or more, even more preferably 40 mol% or more, and particularly preferably 70 mol% or more, and may be 100 mol%.

The molecular weight of the polymer (Aa) is not particularly limited. It is preferable that the number average molecular weight be in the range of 1,000 to 100,000. When the number average molecular weight is in this range, both a high level of improving effect of stacking of the layer (Y) on bending resistance and a high level of viscosity stability of the coating liquid (S) described later can be achieved. When the layer (Z) described later is stacked, the improving effect on bending resistance is further enhanced by using the polymer (Aa) whose molecular weight per phosphorus atom is in the range of 100 to 500.

### [Polymer (B)]

Examples of the polymer (B) having a hydroxy group and/or carboxyl group include: polyvinyl alcohol-based polymers such as polyvinyl alcohol, modified polyvinyl alcohol containing 1 to 50 mol% of α-olefin units having 4 or less carbon atoms, and polyvinyl acetal (e.g., polyvinyl butyral); polysaccharides such as cellulose and starch; (meth)acrylic polymers such as polyhydroxyethyl (meth)acrylate, poly(meth)acrylic acid, and ethylene-acrylic acid copolymer; and maleic polymers such as a hydrolysate of ethylene-maleic anhydride copolymer, a hydrolysate of styrene-maleic anhydride copolymer, and a hydrolysate of isobutylene-maleic anhydride alternating copolymer. Among these, the polyvinyl alcohol-based polymers are preferred. More specifically, polyvinyl alcohol and modified polyvinyl alcohol containing 1 to 15 mol% of α-olefin units having 4 or less carbon atoms are preferred.

The polymer (B) may be a homopolymer of a monomer having a polymerizable group (e.g., vinyl acetate or acrylic acid), may be a copolymer of two or more monomers, or may be a copolymer of a monomer having a hydroxy group and/or carboxyl group and a monomer having none of these groups. A mixture of two or more polymers (B) may be used.

The molecular weight of the polymer (B) is not particularly limited. In order to obtain a multilayer structure that has better gas barrier properties and mechanical properties (e.g., drop impact resistance), the number average molecular weight of the polymer (B) is preferably 5,000 or more, more preferably 8,000 or more, and even more preferably 10,000 or more. The upper limit of the number average molecular weight of the polymer (B) is not particularly defined, and is, for example, 1,500,000 or less.

The viscosity-average degree of polymerization of the polyvinyl alcohol-based polymer used in the present invention is preferably 100 to 4,000. In order to obtain a multilayer structure that has high interlayer adhesion, the viscosity-average degree of polymerization is more preferably 200 to 3,500, even more preferably 300 to 3,000, and particularly preferably 500 to 2,800. The values of the viscosity-average degree of polymerization are those determined according to JIS K 6726 (1994).

The degree of saponification of the polyvinyl alcohol-based resin used in the present invention is preferably 75.0 to 99.85 mol%. In order to obtain a multilayer structure that has high interlayer adhesion, the degree of saponification is more preferably 80.0 to 99.5 mol%, even more preferably 85.0 to 99.3 mol%, and particularly preferably 90.0 to 99.1 mol%. The values of the degree of saponification are those determined according to JIS K 6726 (1994).

The viscosity of the polyvinyl alcohol-based polymer used in the present invention is preferably 1.0 to 200 mPa•s. In order to obtain a multilayer structure that has high interlayer adhesion, the viscosity is more preferably 3.0 to 150 mPa•s, even more preferably 11 to 90 mPa•s, and particularly preferably 20 to 85 mPa•s. The values of the viscosity are those measured for a 4 mass% aqueous solution of the polyvinyl alcohol-based polymer using a B-type rotational viscometer at 20°C according to JIS K 6726 (1994).

The polyvinyl alcohol-based polymer used in the present invention is preferably one that has a degree of saponification of 85.0 to 99.3 mol%, a viscosity-average degree of polymerization of 200 to 3,500, and a viscosity of 11 to 90 mPa•s, and more preferably one that has a degree of saponification of 85.0 to 99.3 mol%, a viscosity-average degree of polymerization of 500 to 2,800, and a viscosity of 20 to 85 mPa•s.

The layer (Y) included in the multilayer structure of the present invention may consist only of the compound (A) and the polymer (B) or may further include an additional component. Examples of the additional component include: metal salts of inorganic acids such as a metal carbonate, a metal hydrochloride, a metal nitrate, a metal hydrogen carbonate, a metal sulfate, a metal hydrogen sulfate, and a metal borate; metal salts of organic acids such as a metal oxalate, a metal acetate, a metal tartrate, and a metal stearate; metal complexes such as a cyclopentadienyl metal complex (e.g., titanocene) and a cyanometal complex; layered clay compounds; crosslinking agents; polymer compounds other than the polymer (Aa) and polymer (B); plasticizers; antioxidants; ultraviolet absorbers; and flame retardants. The content of the additional component in the layer (Y) of the multilayer structure is preferably 50 mass% or less, more preferably 20 mass% or less, even more preferably 10 mass% or less, and particularly preferably 5 mass% or less, and may be 0 mass% (which means that the additional component is not contained). The layer (Y) is free of aluminum atoms which are contained in the layer (Z). In other words, the layer (Y) differs from the layer (Z) by being substantially free of aluminum atoms which are contained in the layer (Z).

In terms of allowing the multilayer structure to maintain good appearance, the content of the polymer (B) in the layer (Y) is preferably 85 mass% or less, more preferably 50 mass% or less, even more preferably 20 mass% or less, and particularly preferably 10 mass% or less, with respect to the mass of the layer (Y) (defined as 100 mass%). The polymer (B) may or may not react with another component in the layer (Y).

It is preferable for the thickness of one layer (Y) to be 0.003 µm or more, in terms of better bending resistance of the multilayer structure of the present invention. The upper limit of the thickness of the layer (Y) is not particularly defined; however, the improving effect on bending resistance reaches a plateau when the thickness of the layer (Y) exceeds 1.0 µm. Hence, it is preferable to set the upper limit of the (total) thickness of the layer(s) (Y) to 1.0 µm for economical reasons. The thickness of the layer. (Y) can be controlled depending on the concentration of the later-described coating liquid (S) used for forming the layer (Y) or the method for applying the liquid (S).

### [Layer (Z)]

The multilayer structure of the present invention includes the layer (Z) containing aluminum atoms. The layer (Y) and the layer (Z) are stacked contiguous to (in contact with) each other. In other words, the multilayer structure of the present invention includes the layer (Z) disposed contiguous to the layer (Y). When the multilayer structure includes two or more layers (Y) and/or two or more layers (Z), it is preferable that at least one layer (Y) and at least one layer (Z) be stacked contiguous to each other.

The layer (Z) may be a layer (Z1) containing a reaction product (E) formed by a reaction between a metal oxide (C) containing aluminum and a phosphorus compound (D). A compound formed by a reaction among the metal oxide (C), the phosphorus compound (D), and still another compound is also classified as the reaction product (E) herein. The layer (Z) may be a layer (Z2) that is a deposited layer of aluminum or a layer (Z3) that is a deposited layer of aluminum oxide.

### [Layer (Z1)]

Examples of the structure of the reaction product (E) contained in the layer (Z1) include a structure in which particles of the metal oxide (C) are bonded together via phosphorus atoms derived from the phosphorus compound (D). The forms in which the particles are bonded via phosphorus atoms include a form in which the particles are bonded via atomic groups containing a phosphorus atom, and examples of such a form include a form in which the particles are bonded via atomic groups containing a phosphorus atom and containing no metal atom. The layer (Z1) of the multilayer structure of the present invention may partially contain the metal oxide (C) and/or phosphorus compound (D) that remains uninvolved in any reaction.

In the layer (Z1), the molar ratio between the metal atoms constituting the metal oxide (C) and the phosphorus atoms derived from the phosphorus compound (D), as expressed by [Metal atoms constituting metal oxide (C)] : [Phosphorus atoms derived from phosphorus compound (D)], is preferably in the range of 1.0 : 1.0 to 3.6 : 1.0 and more preferably in the range of 1.1 : 1.0 to 3.0 : 1.0. If the molar ratio falls outside such a range, the gas barrier properties deteriorate. The molar ratio in the layer (Z1) can be adjusted depending on the mixing ratio between the metal oxide (C) and the phosphorus compound (D) in a coating liquid for forming the layer (Z1). The molar ratio in the layer (Z1) is typically equal to that in the coating liquid.

In an infrared absorption spectrum of the layer (Z1), a maximum absorption wavenumber in the region of 800 to 1,400 cm⁻¹ is preferably 1,080 to 1,130 cm⁻¹. In the process in which the metal oxide (C) and the phosphorus compound (D) react to form the reaction product (E), a metal atom (M) derived from the metal oxide (C) and a phosphorus atom (P) derived from the phosphorus compound (D) are linked via an oxygen atom (O) to form a bond represented by M-O-P. As a result, a characteristic absorption band attributed to this bond appears in an infrared absorption spectrum of the reaction product (E). A study by the present inventors has revealed that the resulting multilayer structure exhibits good gas barrier properties when the characteristic absorption band attributed to the M-O-P bond is observed in the region of 1,080 to 1,130 cm⁻¹. It has been found that the resulting multilayer structure exhibits much better gas barrier properties particularly when the characteristic absorption band corresponds to the strongest absorption in the region of 800 to 1,400 cm⁻¹ where absorptions attributed to bonds between various atoms and oxygen atoms are generally observed.

By contrast, if a metal compound such as a metal alkoxide or metal salt and the phosphorus compound (D) are first mixed together and the mixture is then subjected to hydrolytic condensation, the resulting product is a composite material in which the metal atoms derived from the metal compound and the phosphorus atoms derived from the phosphorus compound (D) have been almost homogeneously mixed and reacted. In this case, in an infrared absorption spectrum of the composite material, the maximum absorption wavenumber in the region of 800 to 1,400 cm⁻¹ falls outside the range of 1,080 to 1,130 cm⁻¹.

In the infrared absorption spectrum of the layer (Z1), the half width of the maximum absorption band in the region of 800 to 1,400 cm⁻¹ is preferably 200 cm⁻¹ or less, more preferably 150 cm⁻¹ or less, even more preferably 100 cm⁻¹ or less, and particularly preferably 50 cm⁻¹ or less, in terms of the gas barrier properties of the resulting multilayer structure.

The infrared absorption spectrum of the layer (Z1) can be measured by the method described below in "EXAMPLES". If the measurement is not possible by the method described in "EXAMPLES", the measurement may be conducted by another method, examples of which include, but are not limited to: reflection spectroscopy such as reflection absorption spectroscopy, external reflection spectroscopy, or attenuated total reflection spectroscopy; and transmission spectroscopy such as Nujol method or pellet method performed on the layer (Z1) scraped from the multilayer structure.

The layer (Z1) has a structure in which particles of the metal oxide (C) are bonded together via phosphorus atoms derived from the phosphorus compound (D) and not via metal atoms other than those derived from the metal oxide (C). That is, the layer (Z1) has a structure in which the particles of the metal oxide (C) may be bonded together via metal atoms derived form the metal oxide (C) but are not bonded via other metal atoms. The "structure in which particles of the metal oxide (C) are bonded together via phosphorus atoms derived from the phosphorus compound (D) and not via metal atoms other than those derived from the metal oxide (C)" as defined herein refers to a structure in which the main chain of the bond between the bonded particles of the metal oxide (C) has a phosphorus atom derived from the phosphorus compound (D) and does not have any metal atoms other than those derived from the metal oxide (C), and embraces a structure in which the side chain of the bond has a metal atom. It should be noted that the layer (Z1) may partially have a structure in which the particles of the metal oxide (C) are bonded together via both phosphorus atoms derived from the phosphorus compound (D) and metal atoms (structure in which the main chain of the bond between the bonded particles of the metal oxide (C) has both a phosphorus atom derived from the phosphorus compound (D) and a metal atom).

In the layer (Z1), the number of moles of metal atoms binding the particles of the metal oxide (C) together and being different from those derived from the metal oxide (C) is preferably in the range of 0 to 1 times (e.g., 0 to 0.9 times) the number of moles of phosphorus atoms binding the particles of the metal oxide (C) together.

Examples of the form of bonding between each particle of the metal oxide (C) and a phosphorus atom in the layer (Z1) include a form in which the metal atom (M) constituting the metal oxide (C) and the phosphorus atom (P) are bonded via the oxygen atom (O). The particles of the metal oxide (C) may be bonded together via the phosphorus atom (P) derived from one molecule of the phosphorus compound (D) or may be bonded together via the phosphorus atoms (P) derived from two or more molecules of the phosphorus compound (D). Specific examples of the form of bonding between two bonded particles of the metal oxide (C) include a bonding form represented by (Mα)-O-P-O-(Mβ), a bonding form represented by (Mα)-O-P-[O-P]ₙ-O-(Mβ), a bonding form represented by (Mα)-O-P-E-P-O-(Mβ), and a bonding form represented by (Mα)-O-P-E-P-[O-P-E-P]ₙ-O-(Mβ), where (Mα) denotes a metal atom constituting one of the bonded particles of the metal oxide (C) and (Mβ) denotes a metal atom constituting the other of the particles of the metal oxide (C). In the examples of the bonding form, n represents an integer of 1 or more, E represents a constituent atomic group present between two phosphorus atoms when the phosphorus compound (D) has two or more phosphorus atoms per molecule, and the other substituents bonded to the phosphorus atoms are omitted.

In the layer (Z1), it is preferable that one particle of the metal oxide (C) be bonded to two or more other particles of the metal oxide (C), in terms of the gas barrier properties of the resulting multilayer structure.

The metal oxide (C) may be a hydrolytic condensate of a compound (G) containing the metal atom (M) to which a hydrolyzable characteristic group is bonded. Examples of the characteristic group include R¹ in the general formula (I) described later. The hydrolytic condensate of the compound (G) can be regarded substantially as a metal oxide. Thus, the hydrolytic condensate of the compound (G) may be referred to as "metal oxide (C)" herein. That is, the term "metal oxide (C)" as used herein is interchangeable with the term "hydrolytic condensate of the compound (G)", while the term "hydrolytic condensate of the compound (G)" as used herein is interchangeable with the term "metal oxide (C)".

The thickness of the layer (Z1) (or, for a multilayer structure including two or more layers (Z1), the total thickness of the layers (Z1)) is preferably in the range of 0.05 µm to 4.0 µm and more preferably in the range of 0.1 µm to 2.0 µm. Thinning the layer (Z1) provides a reduction in the dimensional change that the multilayer structure can undergo during a process such as printing or lamination. Thinning the layer (Z1) also provides an increase in the flexibility of the multilayer structure, thus making it possible to allow the multilayer structure to have mechanical characteristics close to mechanical characteristics intrinsic to the base. When the multilayer structure of the present invention has two or more layers (Z1), it is preferable for the thickness of each layer (Z1) to be preferably 0.05 µm or more, in terms of the gas barrier properties. The thickness of the layer (Z1) can be controlled depending on the concentration of the later-described coating liquid (T) used for forming the layer (Z1) or the method for applying the liquid (T).

The thickness of the layer (Z1) can be measured by observing a cross-section of the multilayer structure with a scanning electron microscope or transmission electron microscope. The thicknesses of the layer (Y) and other layers can be measured in the same manner.

### [Metal oxide (C)]

The metal oxide (C) used in the present invention is typically in the form of particles when reacted with the phosphorus compound (D).

The metal atoms constituting the metal oxide (C) (the metal atoms may be collectively referred to as "metal atoms (M)") include at least one metal atom selected from atoms of metals belonging to Groups 2 to 14 of the periodic table, and include at least aluminum atoms. The metal atoms (M) may consist of aluminum atoms alone or may include aluminum atoms and other metal atoms. A mixture of two or more metal oxides (C) may be used.

The proportion of aluminum atoms in the metal atoms (M) is typically 50 mol% or more, and may be in the range of 60 mol% to 100 mol% or in the range of 80 mol% to 100 mol%. Examples of the metal oxide (C) include metal oxides produced by methods such as liquid-phase synthesis, gas-phase synthesis, and solid grinding.

### [Compound (G)]

In terms of ease of control of the reaction and in terms of good gas barrier properties of the resulting multilayer structure, the compound (G) preferably includes at least one compound (G1) represented by the following general formula [I].

Al(Rⁱ)ₖ(R²)₃₋ₖ [I]

In the formula, R¹ is a halogen atom (fluorine atom, chlorine atom, bromine atom, or iodine atom), NO₃, an optionally substituted alkoxy group having 1 to 9 carbon atoms, an optionally substituted acyloxy group having 2 to 9 carbon atoms, an optionally substituted alkenyloxy group having 3 to 9 carbon atoms, an optionally substituted β-diketonato group having 5 to 15 carbon atoms, or a diacylmethyl group having an optionally substituted acyl group having 1 to 9 carbon atoms. R² is an optionally substituted alkyl group having 1 to 9 carbon atoms, an optionally substituted aralkyl group having 7 to 10 carbon atoms, an optionally substituted alkenyl group having 2 to 9 carbon atoms, or an optionally substituted aryl group having 6 to 10 carbon atoms. k is an integer of 1 to 3. When there are two or more atoms or groups represented by R¹, the atoms or groups represented by R¹ may be the same as or different from each other. When there are two or more atoms or groups represented by R², the atoms or groups represented by R² may be the same as or different from each other.

The compound (G) may include, in addition to the compound (G1), at least one compound (G2) represented by the following general formula [II].

M¹(R³)ₘ(R⁴)ₙ₋ₘ [II]

In the formula, M¹ is at least one metal atom different from an aluminum atom and selected from atoms of metals belonging to Groups 2 to 14 of the periodic table. R³ is a halogen atom (fluorine atom, chlorine atom, bromine atom, or iodine atom), NO₃, an optionally substituted alkoxy group having 1 to 9 carbon atoms, an optionally substituted acyloxy group having 2 to 9 carbon atoms, an optionally substituted alkenyloxy group having 3 to 9 carbon atoms, an optionally substituted β-diketonato group having 5 to 15 carbon atoms, or a diacylmethyl group having an optionally substituted acyl group having 1 to 9 carbon atoms. R⁴ is an optionally substituted alkyl group having 1 to 9 carbon atoms, an optionally substituted aralkyl group having 7 to 10 carbon atoms, an optionally substituted alkenyl group having 2 to 9 carbon atoms, or an optionally substituted aryl group having 6 to 10 carbon atoms. m is an integer of 1 to n. n is equal to the valence of M¹. When there are two or more atoms or groups represented by R³, the atoms or groups represented by R³ may be the same as or different from each other. When there are two or more atoms or groups represented by R⁴, the atoms or groups represented by R⁴ may be the same as or different from each other.

Examples of the alkoxy groups represented by R¹ and R³ include methoxy, ethoxy, n-propoxy, isopropoxy, n-butoxy, isobutoxy, sec-butoxy, tert-butoxy, benzyloxy, diphenylmethoxy, trityloxy, 4-methoxybenzyloxy, methoxymethoxy, 1-ethoxyethoxy, benzyloxymethoxy, 2-trimethylsilylethoxy, 2-trimethylsilylethoxymethoxy, phenoxy, and 4-methoxyphenoxy groups.

Examples of the acyloxy groups represented by R¹ and R³ include acetoxy, ethylcarbonyloxy, n-propylcarbonyloxy, isopropylcarbonyloxy, n-butylcarbonyloxy, isobutylcarbonyloxy, sec-butylcarbonyloxy, tert-butylcarbonyloxy, and n-octylcarbonyloxy groups.

Examples of the alkenyloxy groups represented by R¹ and R³ include allyloxy, 2-propenyloxy, 2-butenyloxy, 1-methyl-2-propenyloxy, 3-butenyloxy, 2-methyl-2-propenyloxy, 2-pentenyloxy, 3-pentenyloxy, 4-pentenyloxy, 1-methyl-3-butenyloxy, 1,2-dimethyl-2-propenyloxy, 1,1-dimethyl-2-propenyloxy, 2-methyl-2-butenyloxy, 3-methyl-2-butenyloxy, 2-methyl-3-butenyloxy, 3-methyl-3-butenyloxy, 1-vinyl-2-propenyloxy, and 5-hexenyloxy groups.

Examples of the β-diketonato groups represented by R¹ and R³ include 2,4-pentanedionato, 1,1,1-trifluoro-2,4-pentanedionato, 1,1,1,5,5,5-hexafluoro-2,4-pentanedionato, 2,2,6,6-tetramethyl-3,5-heptanedionato, 1,3-butanedionato, 2-methyl-1,3-butanedionato, 2-methyl-1,3-butanedionato, and benzoylacetonato groups.

Examples of the acyl groups of the diacylmethyl groups represented by R¹ and R³ include aliphatic acyl groups having 1 to 6 carbon atoms such as formyl, acetyl, propionyl (propanoyl), butyryl (butanoyl), valeryl (pentanoyl), and hexanoyl groups; and aromatic acyl (aroyl) groups such as benzoyl and toluoyl groups.

Examples of the alkyl groups represented by R² and R⁴ include methyl, ethyl, n-propyl, isopropyl, n-butyl, isobutyl, sec-butyl, tert-butyl, n-pentyl, isopentyl, n-hexyl, isohexyl, 3-methylpentyl, 2-methylpentyl, 1,2-dimethylbutyl, cyclopropyl, cyclopentyl, and cyclohexyl groups.

Examples of the aralkyl groups represented by R² and R⁴ include benzyl and phenylethyl (phenethyl) groups.

Examples of the alkenyl groups represented by R² and R⁴ include vinyl, 1-propenyl, 2-propenyl, isopropenyl, 3-butenyl, 2-butenyl, 1-butenyl, 1-methyl-2-propenyl, 1-methyl-1-propenyl, 1-ethyl-1-ethenyl, 2-methyl-2-propenyl, 2-methyl-1-propenyl, 3-methyl-2-butenyl, and 4-pentenyl groups.

Examples of the aryl groups represented by R² and R⁴ include phenyl, 1-naphthyl, and 2-naphthyl groups.

Examples of the substituents in R¹, R², R³, and R⁴ include: alkyl groups having 1 to 6 carbon atoms; alkoxy groups having 1 to 6 carbon atoms such as methoxy, ethoxy, n-propoxy, isopropoxy, n-butoxy, isobutoxy, sec-butoxy, tert-butoxy, n-pentyloxy, isopentyloxy, n-hexyloxy, cyclopropyloxy, cyclobutyloxy, cyclopentyloxy, and cyclohexyloxy groups; alkoxycarbonyl groups having 1 to 6 carbon atoms such as methoxycarbonyl, ethoxycarbonyl, n-propoxycarbonyl, isopropoxycarbonyl, n-butoxycarbonyl, isobutoxycarbonyl, sec-butoxycarbonyl, tert-butoxycarbonyl, n-pentyloxycarbonyl, isopentyloxycarbonyl, cyclopropyloxycarbonyl, cyclobutyloxycarbonyl, and cyclopentyloxycarbonyl groups; aromatic hydrocarbon groups such as phenyl, tolyl, and naphthyl groups; halogen atoms such as fluorine, chlorine, bromine, and iodine atoms; acyl groups having 1 to 6 carbon atoms; aralkyl groups having 7 to 10 carbon atoms; aralkyloxy groups having 7 to 10 carbon atoms; alkylamino groups having 1 to 6 carbon atoms; and dialkylamino groups having an alkyl group having 1 to 6 carbon atoms.

It is preferable for R¹ to be a halogen atom, NO₃, an optionally substituted alkoxy group having 1 to 6 carbon atoms, an optionally substituted acyloxy group having 2 to 6 carbon atoms, an optionally substituted β-diketonato group having 5 to 10 carbon atoms, or a diacylmethyl group having an optionally substituted acyl group having 1 to 6 carbon atoms.

It is preferable for R² to be an optionally substituted alkyl group having 1 to 6 carbon atoms. In the formula [I], k is preferably 3.

It is preferable for R³ to be a halogen atom, NO₃, an optionally substituted alkoxy group having 1 to 6 carbon atoms, an optionally substituted acyloxy group having 2 to 6 carbon atoms, an optionally substituted β-diketonato group having 5 to 10 carbon atoms, or a diacylmethyl group having an optionally substituted acyl group having 1 to 6 carbon atoms.

It is preferable for R⁴ to be an optionally substituted alkyl group having 1 to 6 carbon atoms. It is preferable for M¹ to be an atom of a metal belonging to Group 4 of the periodic table and more preferably a titanium or zirconium atom. When M¹ is an atom of a metal belonging to Group 4 of the periodic table, m in the formula [II] is preferably 4.

Boron and silicon are categorized as metals herein, although they may be classified as semimetals in other contexts.

Examples of the compound (G1) include aluminum chloride, aluminum nitrate, aluminum acetate, tris(2,4-pentanedionato)aluminum, trimethoxyaluminum, triethoxyaluminum, tri-n-propoxyaluminum, triisopropoxyaluminum, tri-n-butoxyaluminum, tri-sec-butoxyaluminum, and tri-tert-butoxyaluminum. Among these, triisopropoxyaluminum and tri-sec-butoxyaluminum are more preferred. A mixture of two or more compounds (G1) may be used as the compound (G).

Examples of the compound (G2) include: titanium compounds such as tetrakis(2,4-pentanedionato)titanium, tetramethoxytitanium, tetraethoxytitanium, tetraisopropoxytitanium, tetra-n-butoxytitanium, and tetrakis(2-ethylhexoxy)titanium; and zirconium compounds such as tetrakis(2,4-pentanedionato)zirconium, tetra-n-propoxyzirconium, and tetra-n-butoxyzirconium. These may be used alone or two or more compounds (G2) may be used in combination.

The proportion of the compound (G1) in the total amount of the compound (G) is not particularly limited as long as the effect of the present invention is obtained. The proportion of the compound (e.g., the compound (G2)) other than the compound (G1) in the total amount of the compound (G) is preferably 20 mol% or less, more preferably 10 mol% or less, and even more preferably 5 mol% or less, and may be 0 mol%, for example.

The compound (G) is hydrolyzed, so that at least some of the hydrolyzable characteristic groups of the compound (G) are converted to hydroxy groups. The hydrolysate is then condensed to form a compound in which the metal atoms (M) are linked together via an oxygen atom (O). The repetitions of this condensation results in the formation of a compound that can be substantially regarded as a metal oxide. In general, the thus formed metal oxide (C) has hydroxy groups present on its surface.

A compound is categorized as the metal oxide (C) herein when the ratio, [the number of moles of the oxygen atoms (O) bonded only to the metal atoms (M)]/[the number of moles of the metal atoms (M)], is 0.8 or more in the compound. The "oxygen atom (O) bonded only to the metal atom (M)", as defined herein, refers to the oxygen atom (O) in the structure represented by M-O-M, and does not include an oxygen atom that is bonded to both the metal atom (M) and hydrogen atom (H) as is the case for the oxygen atom (O) in the structure represented by M-O-H. The above ratio in the metal oxide (C) is preferably 0.9 or more, more preferably 1.0 or more, and even more preferably 1.1 or more. The upper limit of this ratio is not particularly defined. When the valence of the metal atom (M) is denoted by n, the upper limit is typically expressed as n/2.

In order for the hydrolytic condensation to take place, it is important that the compound (G) has hydrolyzable characteristic groups. When there are no such groups bonded, hydrolytic condensation reaction does not occur or proceeds very slowly, which makes difficult the preparation of the metal oxide (C) intended.

The hydrolytic condensate of the compound (G) may be produced, for example, from a particular raw material by a technique employed in commonly-known sol-gel processes. As the raw material there can be used at least one selected from the group consisting of the compound (G), a partial hydrolysate of the compound (G), a complete hydrolysate of the compound (G), a compound formed by partial hydrolytic condensation of the compound (G), and a compound formed by condensation of a part of a complete hydrolysate of the compound (G).

The metal oxide (C) to be mixed with the phosphorus compound (D)-containing material (the phosphorus compound (D) itself or a composition containing the phosphorus compound (D)) is preferably substantially free of phosphorus atoms.

The layer (Z1) has a particular structure in which the particles of the metal oxide (C) are bonded together via phosphorus atoms derived from the phosphorus compound (D). The shape and size of the particles of the metal oxide (C) contained in the layer (Z1) and the shape and size of the particles of the metal oxide (C) to be mixed with the phosphorus compound (D)-containing material (the phosphorus compound (D) itself or a composition containing the phosphorus compound (D)) may be the same or different. That is, the particles of the metal oxide (C) used as a raw material of the layer (Z1) may change in shape or size during the process of formation of the layer (Z1).

### [Phosphorus compound (D)]

The phosphorus compound (D) has a moiety capable of reacting with the metal oxide (C) and typically has two or more such moieties. In a preferred example, the phosphorus compound (D) contains 2 to 20 such moieties (atomic groups or functional groups). Examples of such moieties include a moiety capable of reacting with a functional group (e.g., hydroxy group) present on the surface of the metal oxide (C). Examples of such a moiety include a halogen atom bonded directly to a phosphorus atom and an oxygen atom bonded directly to a phosphorus atom. Such a halogen atom or oxygen atom is capable of undergoing condensation reaction (hydrolytic condensation reaction) with a hydroxy group present on the surface of the metal oxide (C). In general, the functional group (e.g., hydroxy group) present on the surface of the metal oxide (C) is bonded to the metal atom (M) constituting the metal oxide (C).

The phosphorus compound (D) used may be one that has a structure in which a halogen atom or oxygen atom is bonded directly to a phosphorus atom. Such a phosphorus compound (D) is capable of forming bonds with hydroxy groups present on the metal oxide (C) through (hydrolytic) condensation. The phosphorus compound (D) may have one phosphorus atom or may have two or more phosphorus atoms.

Examples of the phosphorus compound (D) include: phosphorus oxoacids such as phosphoric acid, diphosphoric acid, triphosphoric acid, polyphosphoric acid formed by condensation of 4 or more molecules of phosphoric acid, phosphorous acid, phosphonic acid, phosphonous acid, phosphinic acid, and phosphinous acid; salts of these oxoacids (e.g., sodium phosphate); and derivatives of these oxoacids (e.g., halides such as phosphoryl chloride and dehydration products such as phosphorus pentoxide).

One of these phosphorus compounds (D) may be used alone or two or more thereof may be used in combination. Among the above examples of the phosphorus compound (D), phosphoric acid is preferably used alone or in combination with another phosphorus compound (D). The use of phosphoric acid improves the stability of the coating liquid (T) described later and the gas barrier properties of the resulting multilayer structure.

The layer (Z1) may contain a particular polymer (F). The polymer (F) may be a polymer having at least one functional group selected from the group consisting of a hydroxy group, a carboxyl group, a carboxylic anhydride group, and a salt of a carboxyl group. For example, the polymer (F) may be any of the polymers mentioned as examples of the polymer (B). The layer (Z1) may further contain an additional component other than the polymer (F). Examples of the additional component include the substances mentioned as examples of the additional component that may be contained in the layer (Y). The content of the additional component in the layer (Z1) is preferably 50 mass% or less, more preferably 20 mass% or less, even more preferably 10 mass% or less, and particularly preferably 5 mass% or less.

### [Inorganic deposited layer: layer (Z2) and layer (Z3)]

The multilayer structure may include an inorganic deposited layer. The inorganic deposited layer can be formed by vapor deposition of an inorganic substance. Examples of the inorganic substance include metals (such as aluminum), metal oxides (such as silicon oxide and aluminum oxide), metal nitrides (such as silicon nitride), metal oxynitrides (such as silicon oxynitride), and metal carbonitrides (such as silicon carbonitride). Among these, aluminum oxide, silicon oxide, magnesium oxide, and silicon nitride are preferred in that an inorganic deposited layer formed of any of these substances has good barrier properties against oxygen and water vapor. The layer (Z) in the multilayer structure of the present invention may be an inorganic deposited layer containing aluminum. For example, the layer (Z) may include a layer (Z2) that is a deposited layer of aluminum and/or a layer (Z3) that is a deposited layer of aluminum oxide. In an example, the layer (Z) is the layer (Z2) or layer (Z3).

The method for forming the inorganic deposited layer is not particularly limited, and available methods include: physical vapor deposition processes such as vacuum vapor deposition (e.g., resistive heating vapor deposition, electron beam vapor deposition, and molecular beam epitaxy), sputtering, and ion plating; and chemical vapor deposition processes such as thermal chemical vapor deposition (e.g., catalytic chemical vapor deposition), photochemical vapor deposition, plasma chemical vapor deposition (e.g., capacitively coupled plasma process, inductively coupled plasma process, surface wave plasma process, electron cyclotron resonance plasma process, and dual magnetron process), atomic layer deposition, and organometallic vapor deposition.

The thickness of the inorganic deposited layer is preferably in the range of 0.002 to 0.5 µm, more preferably in the range of 0.005 to 0.2 µm, and even more preferably in the range of 0.01 to 0.1 µm, although the specific preferred thickness depends on the type of the component of the inorganic deposited layer. A thickness at which good barrier properties and mechanical properties of the multilayer structure are achieved can be selected within the above range. If the thickness of the inorganic deposited layer is less than 0.002 µm, the inorganic deposited layer tends to have a low ability to repeatedly exhibit the barrier properties against oxygen and water vapor, and the inorganic deposited layer may fail to exhibit sufficient barrier properties. If the thickness of the inorganic deposited layer is more than 0.5 µm, the barrier properties of the inorganic deposited layer are likely to deteriorate when the multilayer structure is pulled or bent.

### [Method for producing multilayer structure]

The multilayer structure of the present invention can be produced by a production method of the present invention. The features described for the multilayer structure of the present invention can be applied to the production method of the present invention and may not be described repeatedly. The features described for the production method of the present invention can be applied to the multilayer structure of the present invention.

The production method of the present invention is a method for producing a multilayer structure including a base (X), a layer (Y), and a layer (Z). This production method includes a step of forming the layer (Z) containing aluminum atoms and a layer (Y) formation step including steps (Y-i) and (Y-ii). In the step (Y-i), a compound (A) containing a phosphorus atom, a polymer (B) having a hydroxy group and/or carboxyl group, and a solvent are mixed to prepare a coating liquid (S) containing the compound (A), the polymer (B), and the solvent. In the step (Y-ii), the layer (Y) is formed on the base (X) or on the layer (Z) using the coating liquid (S). In the step (Y-i), the compound (A) and the polymer (B) are mixed at a mass ratio of 15 : 85 to 99 : 1. This results in the formation of the layer (Y) containing the compound (A) and polymer (B) mixed at this ratio. The compound (A), the polymer (B), and the mass ratio therebetween are as previously described, and will not be described repeatedly.

### [Coating liquid (S)]

The coating liquid (S) is typically a solution of the compound (A) and polymer (B) in a solvent. The coating liquid (S) may be prepared by dissolving the compound (A) and polymer (B) in the solvent. Alternatively, a solution obtained through production of the compound (A) and/or polymer (B) may be used per se. When the solubility of the compound (A) and/or polymer (B) is low, the dissolution may be promoted by heating or ultrasonication.

The solvent used in the coating liquid (S) can be optionally selected depending on the types of the compound (A) and polymer (B). The solvent is preferably water, an alcohol, or a mixed solvent thereof. The solvent may include any of the following substances as long as the dissolution of the compound (A) and/or polymer (B) is not hindered: ethers such as tetrahydrofuran, dioxane, trioxane, and dimethoxyethane; ketones such as acetone and methyl ethyl ketone; glycols such as ethylene glycol and propylene glycol; glycol derivatives such as methyl cellosolve, ethyl cellosolve, and n-butyl cellosolve; glycerin; acetonitrile; amides such as dimethylformamide; dimethyl sulfoxide; and sulfolane.

The concentration of the solids of the compound (A) and/or polymer (B) in the coating liquid (S) is preferably in the range of 0.01 to 60 mass%, more preferably in the range of 0.1 to 50 mass%, and even more preferably in the range of 0.2 to 40 mass%, in terms of the storage stability and coating properties of the liquid. The solids concentration can be determined in the same manner as described later for the coating liquid (T).

In terms of the storage stability of the coating liquid (S) and the gas barrier properties of the multilayer structure, the pH of the coating liquid (S) is preferably in the range of 0.1 to 6.0, more preferably in the range of 0.2 to 5.0, and even more preferably in the range of 0.5 to 4.0. The pH of the coating liquid (S) can be adjusted by a commonly-known method. For example, the pH can be adjusted by adding an acidic or basic compound to the coating liquid (S).

The coating liquid (S) may be subjected to degassing and/or defoaming as necessary. Examples of the method for the degassing and/or defoaming include those using depressurization, heating, centrifugation, ultrasonication, or the like. A method including depressurization is preferred.

The viscosity of the coating liquid (S) to be applied is preferably 3,000 mPa•s or less and more preferably 2,000 mPa•s or less, as measured with a Brookfield rotational viscometer (SB-type viscometer: rotor No. 3, rotational speed = 60 rpm) at a temperature at which the coating liquid (S) is applied. Adjusting the viscosity to 3,000 mPa•s or less improves the leveling of the coating liquid (S), thus allowing the resulting multilayer structure to have better appearance. The viscosity of the coating liquid (S) is preferably 50 mPa•s or more, more preferably 100 mPa•s or more, and even more preferably 200 mPa•s or more.

Examples of the method that can be employed to adjust the viscosity of the coating liquid (S) include adjustment of the solids concentration, adjustment of the pH, and addition of a viscosity modifier. The coating liquid (S) may contain the additional component that may be contained in the layer (Y) described above, as long as the effect of the present invention is obtained.

In the step (Y-ii), the layer (Y) is formed typically by applying the coating liquid (S) and then removing the solvent. The method for applying the coating liquid (S) is not particularly limited, and any commonly-known method can be employed. Examples of the application method include casting, dipping, roll coating, gravure coating, screen printing, reverse coating, spray coating, kiss coating, die coating, metering bar coating, chamber doctor-using coating, curtain coating, and bar coating.

In the step (Y-ii), the layer (Y) is formed typically by removing the solvent from the coating liquid (S). The method for removing the solvent from the coating liquid (S) is not particularly limited, and any commonly-known drying method can be employed. Examples of the drying method include hot air drying, hot roll contact drying, infrared heating, and microwave heating. The drying temperature is preferably 0 to 15°C or more lower than the onset temperature of fluidization of the base (X). The drying temperature is preferably in the range of 70 to 200°C, more preferably in the range of 80 to 180°C, and even more preferably in the range of 90 to 160°C. The removal of the solvent may be performed either at ordinary pressure or at reduced pressure. When the step (Y-ii) is carried out between the steps (Z-ii) and (Z-iii) described later, the solvent may be removed by heat treatment in the step (Z-iii) described later.

The layers (Y) may be formed on both surfaces of the base (X) that is in the form of a layer, with or without the layer (Z) interposed between each layer (Y) and the base (X). In an example of such a case, a first layer (Y) is formed by applying the coating liquid (S) to one of the surfaces and then removing the solvent. Next, a second layer (Y) is formed by applying the coating liquid (S) to the other surface and then removing the solvent. The composition of the coating liquid (S) applied may be the same for both of the surfaces or may be different for each surface.

### [Layer (Z) formation step]

The production method of the present invention includes a step of forming the layer (Z) containing aluminum atoms on the base (X) or on the layer (Y). The layer (Z) formation step results in the multilayer structure including the layer (Z). The layer (Z) and the layer (Y) are formed contiguous to each other.

The layer (Z) formation step may be performed at any time. For example, the layer (Z) formation step may be performed before the step (Y-i), before the step (Y-ii), after the step (Y-ii), or at any time between the steps (Y-i) and (Y-ii). When the layer (Y) is to be disposed between the base (X) and the layer (Z), the layer (Z) formation step is performed after the step (Y-ii). When the layer (Z) is to be disposed between the base (X) and the layer (Y), the layer (Z) formation step is performed before the step (Y-ii). In this case, the coating liquid (S) is applied to the layer (Z) in the step (Y-ii).

When the layer (Z) is a layer (Z2) that is a deposited layer of aluminum or a layer (Z3) that is a deposited layer of aluminum oxide, the deposited layer can be formed by any of the common vapor deposition processes mentioned above. Thus, the following will describe the method for forming the layer (Z1) in detail. An example of the method for forming the layer (Z1) is described in JP 2013-208794 A.

When the layer (Z1) is to be formed, the layer (Z) formation step may include the steps (Z-i), (Z-ii), and (Z-iii) described hereinafter. In the step (Z-i), a metal oxide (C), a phosphorus compound (D), and a solvent are mixed to prepare a coating liquid (T). In the step (Z-ii), the coating liquid (T) is applied onto the base (X) to form a precursor layer of the layer (Z1) on the base (X) or on the layer (Y). In the step (Z-iii), the precursor layer is heat-treated at a temperature of 110°C or higher to form the layer (Z1) on the base (X) or on the layer (Y). The details of the steps (Z-i) to (Z-iii) will be described below.

When the layer (Z1) is to be formed between the base (X) and the layer (Y), the step (Z-i), step (Z-ii), step (Z-iii), and step (Y-ii) are carried out typically in this order. There is no particular limitation on when the step (Y-i) should be performed. The step (Y-i) may be performed at any time prior to the step (Y-ii), and may be performed in parallel with the step (Z-i). When the layer (Y) is to be formed between the base (X) and the layer (Z1), the step (Y-ii) is carried out before the step (Z-ii) (may be carried out before the step (Z-i)). The step (Y-ii) may be carried out between the step (Z-ii) and the step (Z-iii). It is preferable to carry out the step (Y-ii) after the step (Z-iii) to allow the resulting multilayer structure to have good appearance.

### [Step (Z-i)]

In the step (Z-i), the metal oxide (C), the phosphorus compound (D), and a solvent are at least mixed to prepare the coating liquid (T) containing them. From another standpoint, the metal oxide (C) and the phosphorus compound (D) are reacted in the solvent in the step (Z-i).

Another compound (e.g., the polymer (F)) may be present with the metal oxide (C), phosphorus compound (D), and solvent when they are mixed.

### [Dispersion of metal oxide (C)]

The metal oxide (C) to be mixed with the phosphorus compound (D) (the metal oxide (C) immediately prior to mixing) may be the metal oxide (C) itself or in the form of a composition including the metal oxide (C). In a preferred example, the metal oxide (C), when mixed with the phosphorus compound (D), is in the form of a dispersion obtained by dispersing the metal oxide (C) in a solvent. The solvent used can be of any type, and is preferably water or a mixed solvent containing water.

When the metal oxide (C) is aluminum oxide, the preparation of a dispersion of aluminum oxide is started by subjecting an aluminum alkoxide to hydrolytic condensation in an aqueous solution whose pH has optionally been adjusted by addition of an acid, thus giving a slurry of aluminum oxide. Next, the slurry is deflocculated in the presence of a certain amount of acid to obtain the dispersion of aluminum oxide. A dispersion of the metal oxide (C) containing an atom of a metal other than aluminum can be produced in the same manner.

Preferred examples of the acid catalyst used in hydrolytic condensation include hydrochloric acid, sulfuric acid, nitric acid, acetic acid, lactic acid, and butyric acid, among which nitric acid and acetic acid are more preferred. When an acid catalyst is used in hydrolytic condensation, it is preferable to use the acid catalyst in an appropriate amount depending on the type of the acid so that the pH falls within the range of 2.0 to 4.0 before the hydrolytic condensation.

The step (Z-i) preferably includes the following steps (Z-i-1)to (Z-i-3).

Step (Z-i-1): Step of preparing a dispersion (J) containing the metal oxide (C).

Step (Z-i-2): Step of preparing a solution (K) containing the phosphorus compound (D).

Step (Z-i-3): Step of mixing the dispersion (J) obtained in the step (Z-i-1) and the solution (K) obtained in the (Z-i-2).

The step (Z-i-2) may be performed prior to the step (Z-i-1), simultaneously with the step (Z-i-1), or subsequent to the step (Z-i-1).

### [Step (Z-i-1)]

In the step (Z-i-1), the dispersion (J) containing the metal oxide (C) is prepared. The dispersion (J) may be a dispersion of the metal oxide (C). The dispersion (J) can be prepared, for example, by mixing the compound (G), water, and optionally an acid catalyst and/or organic solvent and subjecting the compound (G) to condensation or hydrolytic condensation according to procedures employed in commonly-known sol-gel processes. The dispersion of the metal oxide (C) resulting from condensation or hydrolytic condensation of the compound (G) can be used per se as the dispersion (J) containing the metal oxide (C). The dispersion (J) may be subjected to a certain process (such as deflocculation as described above or addition or removal of the solvent for concentration control) as necessary. The solvent used in the step (Z-i-1) is not particularly limited. Preferred are: alcohols such as methanol, ethanol, and isopropanol; water; and mixed solvents thereof. The step (Z-i-1) may further include a step of subjecting at least one compound selected from the compound (G) and a hydrolysate of the compound (G) to condensation (e.g., hydrolytic condensation).

### [Step (Z-i-2)]

In the step (Z-i-2), the solution (K) containing the phosphorus compound (D) is prepared. The solution (K) is prepared by dissolving the phosphorus compound (B) in a solvent. When the solubility of the phosphorus compound (D) is low, the dissolution may be promoted by heating or ultrasonication.

The solvent used in the preparation of the solution (K) may be selected as appropriate depending on the type of the phosphorus compound (D), and preferably contains water. The solvent may contain any of organic solvents such as methanol, ethanol, tetrahydrofuran, 1,4-dioxane, trioxane, dimethoxyethane, acetone, methyl ethyl ketone, ethylene glycol, propylene glycol, methyl cellosolve, ethyl cellosolve, n-butyl cellosolve, glycerin, acetonitrile, N,N-dimethylformamide, dimethyl sulfoxide, and sulfolane, as long as the organic solvent does not hinder the dissolution of the phosphorus compound (D).

### [Step (Z-i-3)]

In the step (Z-i-3), the dispersion (J) and the solution (K) are mixed. The mixing of the dispersion (J) and the solution (K) is preferably performed under stirring. In this case, the solution (K) may be added to the dispersion (J) which is being stirred, or the dispersion (J) may be added to the solution (K) which is being stirred. Continuing stirring further for 30 minutes after the completion of the mixing may yield the coating liquid (T) having good storage stability.

When mixed in the step (Z-i-3), the dispersion (J) and solution (K) preferably have a temperature of 50°C or lower, more preferably 30°C or lower, even more preferably 20°C or lower.

The coating liquid (T) may contain the polymer (F). The coating liquid (T) may contain at least one acid compound (Q) selected from acetic acid, hydrochloric acid, nitric acid, trifluoroacetic acid, and trichloroacetic acid, as necessary.

The solution obtained in the step (Z-i-3) can be used per se as the coating liquid (T). In this case, the solvent contained in the dispersion (J) or in the solution (K) typically serves as the solvent of the coating liquid (T). Alternatively, the solution obtained in the step (Z-i-3) may be subjected to a process such as addition of an organic solvent, adjustment of the pH, or addition of an additive, and the resulting liquid may be used as the coating liquid (T).

An organic solvent may be added to the solution obtained in the step (Z-i-3) to the extent that the organic solvent does not impair the stability of the resulting coating liquid (T). The addition of an organic solvent may make easier the application of the coating liquid (T) onto the base (X) or layer (Y) in the step (Z-ii). The organic solvent is preferably one capable of being uniformly mixed in the resulting coating liquid (T). Examples of the organic solvent include methanol, ethanol, tetrahydrofuran, 1,4-dioxane, trioxane, dimethoxyethane, acetone, methyl ethyl ketone, ethylene glycol, propylene glycol, methyl cellosolve, ethyl cellosolve, n-butyl cellosolve, glycerin, acetonitrile, N,N-dimethylformamide, dimethyl sulfoxide, and sulfolane.

The solids concentration in the coating liquid (T) is preferably in the range of 1 to 20 mass%, more preferably in the range of 2 to 15 mass%, and even more preferably in the range of 3 to 10 mass%, in terms of the storage stability of the coating liquid (T) and the quality of application of the coating liquid (T) onto the base. The solids concentration in the coating liquid (T) can be calculated, for example, by distilling off the solvent from the coating liquid (T) and dividing the mass of the remaining solids by the initial mass of the coating liquid (T) yet to be subjected to the distillation.

The pH of the coating liquid (T) is preferably in the range of 0.1 to 6.0, more preferably in the range of 0.2 to 5.0, and even more preferably in the range of 0.5 to 4.0, in terms of the storage stability of the coating liquid (T) and the gas barrier properties of the multilayer structure. The pH of the coating liquid (T) can be adjusted by a commonly-known method, an example of which is to add an acidic or basic compound to the coating liquid (T).

Examples of the method that can be employed to adjust the viscosity of the coating liquid (T) to the range specified above include, but are not limited to, adjustment of the solids concentration, adjustment of the pH, and addition of a viscosity modifier. The coating liquid (T) may contain the additional component that may be contained in the layer (Y) described above, as long as the effect of the present invention is obtained.

### [Step (Z-ii)]

In the step (Z-ii), the coating liquid (T) is applied onto the base (X) or onto the layer (Y) to form a precursor layer of the layer (Z1) on the base (X) or on the layer (Y). The coating liquid (T) may be applied directly onto at least one surface of the base (X) or applied onto the base (X) with another layer (layer (Y)) interposed therebetween. An adhesive layer (L) may be formed on a surface of the base (X) by treating the surface of the base (X) with a commonly-known anchor coating agent or applying a commonly-known adhesive to the surface of the base (X) before application of the coating liquid (T). The coating liquid (T) may be applied to the layer (Y) formed on the base (X) in the step (Y-ii) to form the precursor layer of the layer (Z1) on the layer (Y).

The coating liquid (T) may be subjected to degassing and/or defoaming as necessary. Examples of the method for the degassing and/or defoaming include those using depressurization, heating, centrifugation, ultrasonication, or the like. A method including depressurization is preferred.

The viscosity of the coating liquid (T) to be applied in the step (Z-ii) is preferably 3,000 mPa•s or less and more preferably 2,000 mPa•s or less, as measured with a Brookfield rotational viscometer (SB-type viscometer: rotor No. 3, rotational speed = 60 rpm) at a temperature at which the coating liquid (T) is applied. Adjusting the viscosity to 3,000 mPa•s or less improves the leveling of the coating liquid (T), thus allowing the resulting multilayer structure to have better appearance. The viscosity of the coating liquid (T) to be applied in the step (Z-ii) can be adjusted by changing the concentration and temperature of the coating liquid (T) and the time and intensity of the stirring performed after mixing in the step (Z-i-3). For example, long-time stirring following the mixing in the step (Z-i-3) may reduce the viscosity. The method for applying the coating liquid (T) onto the base (X) or onto the layer (Y) is not particularly limited, and any commonly-known method can be used. Examples of the application method include those which can be used to apply the coating liquid (S) in the step (Y-ii).

In the step (Z-ii), the precursor layer of the layer (Z1) is formed typically by removing the solvent from the coating liquid (T). The method for removing the solvent is not particularly limited, and any commonly-known drying method can be employed. Examples of the drying method include hot air drying, hot roll contact drying, infrared heating, and microwave heating. The drying temperature is preferably 0 to 15°C or more lower than the onset temperature of fluidization of the base (X). When the coating liquid (T) contains the polymer (F), the drying temperature is preferably 15 to 20°C or more lower than the onset temperature of pyrolysis of the polymer (F). The drying temperature is preferably in the range of 70 to 200°C, more preferably in the range of 80 to 180°C, and even more preferably in the range of 90 to 160°C. The removal of the solvent may be performed either at ordinary pressure or at reduced pressure. The solvent may be removed by the heat treatment in the step (Z-iii) described later.

In an example where the layers (Z1) are stacked on both surfaces of the base (X) that is in the form of a layer, a first layer (a precursor layer of a first layer (Z1)) is formed first by application of the coating liquid (T) to one surface of the base (X) followed by removal of the solvent. Next, a second layer (a precursor of a second layer (Z1)) is formed by application of the coating liquid (T) to the other surface of the base (X) followed by removal of the solvent. The composition of the coating liquid (T) applied may be the same for both of the surfaces or may be different for each surface.

When the layers (Z1) are stacked on a plurality of surfaces of the base (X) that has a three-dimensional shape, a layer (a precursor of the layer (Z1)) may be formed individually on each surface by the above method. Alternatively, a plurality of layers (precursor layers of the layers (Z1)) may be simultaneously formed by applying and drying the coating liquid (T) simultaneously on the plurality of surfaces of the base (X).

### [Step (Z-iii)]

In the step (Z-iii), the precursor layer (the precursor layer of the layer (Z1)) formed in the step (Z-ii) is heat-treated at a temperature of 110°C or higher to form the layer (Z1).

In the step (Z-iii), a reaction takes place in which particles of the metal oxide (C) are bonded together via phosphorus atoms (phosphorus atoms derived from the phosphorus compound (D)). From another standpoint, a reaction of formation of the reaction product (E) takes place in the step (Z-iii). In order for the reaction to take place to a sufficient extent, the temperature of the heat treatment is preferably 110°C or higher, more preferably 140°C or higher, even more preferably 170°C or higher, and particularly preferably 190°C or higher. A lowered temperature of the heat treatment increases the time required to achieve a sufficient degree of reaction, and can cause a reduction in production efficiency. The preferred upper limit of the temperature of the heat treatment depends, for example, on the type of the base (X). For example, when a thermoplastic resin film made of polyamide resin is used as the base (X), the temperature of the heat treatment is preferably 190°C or lower. When a thermoplastic resin film made of polyester resin is used as the base (X), the temperature of the heat treatment is preferably 220°C or lower. The heat treatment may be performed, for example, in an air atmosphere, in a nitrogen atmosphere, or in an argon atmosphere.

The length of time of the heat treatment is preferably in the range of 0.1 seconds to 1 hour, more preferably in the range of 1 second to 15 minutes, and even more preferably in the range of 5 to 300 seconds.

The method of the present invention for producing a multilayer structure may include a step of irradiating the layer (Z1) or the precursor layer of the layer (Z1) with ultraviolet light. The ultraviolet irradiation may be performed at any time after the step (Z-ii) (e.g., after the removal of the solvent from the applied coating liquid (T) is almost completed). The method for the ultraviolet irradiation is not particularly limited, and any commonly-known method can be employed. The wavelength of the ultraviolet light for irradiation is preferably in the range of 170 to 250 nm and more preferably in the range of 170 to 190 nm and/or 230 to 250 nm. Alternatively, irradiation with a radioactive ray such as an electron ray or a y ray may be performed instead of the ultraviolet irradiation. The ultraviolet irradiation may allow the multilayer structure to exhibit a higher level of gas barrier performance.

Treatment of a surface of the base (X) with a commonly-known anchor coating agent or application of a commonly-known adhesive onto a surface of the base (X) may be performed before the application of the coating liquid (T) to dispose the adhesive layer (L) between the base (X) and the layer (Z1). In this case, aging treatment is preferably performed. Specifically, the base (X) to which the coating liquid (T) has been applied is preferably left at a relatively low temperature for a long period of time after the application of the coating liquid (T) but before the heat treatment of the step (Z-iii). The temperature of the aging treatment is preferably lower than 110°C, more preferably 100°C or lower, and even more preferably 90°C or lower. The temperature of the aging treatment is preferably 10°C or higher, more preferably 20°C or higher, and even more preferably 30°C or higher. The length of time of the aging treatment is preferably in the range of 0.5 to 10 days, more preferably in the range of 1 to 7 days, and even more preferably in the range of 1 to 5 days. Such aging treatment further enhances the adhesion between the base (X) and the layer (Z1).

The multilayer structure thus obtained can be used per se as the multilayer structure of the present invention. As described above, another member (e.g., an additional layer) may be adhered to or formed on the multilayer structure obtained as above, and the resulting layered product may be used as the multilayer structure of the present invention. The adhering of the member can be done by a commonly-known method.

### [Extrusion coating lamination]

The multilayer structure of the present invention can further include a layer formed by extrusion coating lamination; that is, after the layer (Y) is stacked on the base (X) or layer (Z) directly or with the adhesive layer (L) interposed therebetween, an additional layer may be formed by extrusion coating lamination on the layer (Y) directly or with the adhesive layer (L) interposed therebetween. The method for extrusion coating lamination that can be used in the present invention is not particularly limited, and any commonly-known method can be used. In a typical method for extrusion coating lamination, a molten thermoplastic resin is fed to a T-die, and the thermoplastic resin is extruded through a flat slit of the T-die and then cooled to produce a laminated film.

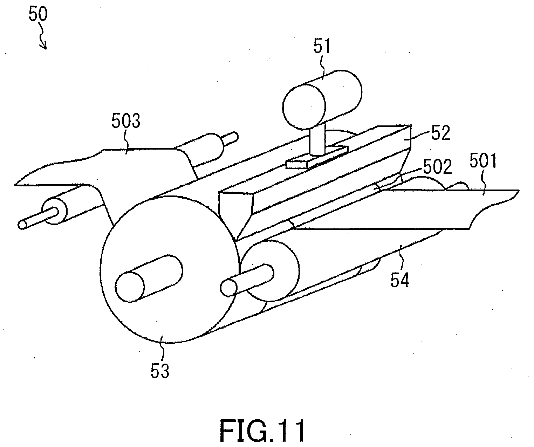

An example of single lamination, which is the most common method for extrusion coating lamination, will now be described with reference to the drawings. An example of the apparatus used in single lamination is shown in FIG. 11. FIG. 11 schematically shows only a key part of the apparatus, and actual apparatuses are different from that shown in FIG. 11. The apparatus 50 shown in FIG. 11 includes an extruder 51, a T-die 52, a cooling roll 53, and a rubber roll 54. The cooling roll 53 and the rubber roll 54 are arranged in such a manner that their roll surfaces are in contact with each other.

A thermoplastic resin is heated and melted in the extruder, and then extruded through the flat slit of the T-die 52 into a resin film 502. This resin film 502 is used as a layer containing the thermoplastic resin. Meanwhile, a layered product 501 is delivered from a sheet feeder (not shown) and is pressed, together with the resin film 502, between the cooling roll 53 and the rubber roll 54. The layered product 501 and the resin film 502, stacked on each other, are pressed together between the cooling roll 53 and the rubber roll 54 to produce a laminated film (multilayer structure) 503 including the layered product 501 and the resin film 502 united together.

Examples of the method for extrusion coating lamination other than the above single lamination include sandwich lamination and tandem lamination. The sandwich lamination is a method in which a molten thermoplastic resin is extruded onto a first base supplied from an unwinder (feed roll) and is laminated to a second base supplied from another unwinder. The tandem lamination is a method in which two single-lamination machines connected together are used to produce a layered product consisting of five layers at a time.

The use of the layered product previously described allows fabrication of a multilayer structure that maintains high barrier performance even after extrusion coating lamination.

### [Adhesive layer (L)]

In the multilayer structure of the present invention, the layer (Y) and/or layer (Z) may be stacked in direct contact with the base (X). Alternatively, the layer (Y) and/or layer (Z) may be stacked on the base (X) with another layer interposed therebetween. For example, the layer (Y) and/or layer (Z) may be stacked on the base (X) with the adhesive layer (L) interposed therebetween. This configuration may achieve enhanced adhesion between the base (X) and the layer (Y) and/or layer (Z). The adhesive layer (L) may be formed from an adhesive resin. The adhesive layer (L) made of an adhesive resin can be formed by treating a surface of the base (X) with a commonly-known anchor coating agent or by applying a commonly-known adhesive to a surface of the base (X). The adhesive is preferably a two-component reactive polyurethane adhesive including a polyisocyanate component and a polyol component which are to be mixed and reacted. The addition of a small amount of additive such as a commonly-known silane coupling agent to the anchor coating agent or adhesive may further enhance the resulting adhesion. Examples of the silane coupling agent include, but are not limited to, silane coupling agents having a reactive group such as an isocyanate, epoxy, amino, ureido, or mercapto group. Strong adhesion between the base (X) and the layer (Y) and/or layer (Z) via the adhesive layer (L) makes it possible to more effectively prevent deterioration in the gas barrier properties and appearance of the multilayer structure of the present invention when the multilayer structure is subjected to a process such as printing or lamination, and also makes it possible to increase the drop impact resistance of a packaging material including the multilayer structure of the present invention. The thickness of the adhesive layer (L) is preferably in the range of 0.01 to 10.0 µm and more preferably in the range of 0.03 to 5.0 µm.

### [Additional layer]

The multilayer structure of the present invention may include an additional layer for imparting various properties such as heat-sealing properties or for improving the barrier properties or mechanical properties. Such a multilayer structure of the present invention can be formed, for example, by stacking the layer (Y) and layer (Z) on the base (X) directly or with the adhesive layer (L) interposed therebetween and then adhering or forming the additional layer on the layer (Y) or (Z) directly or with the adhesive layer (L) interposed therebetween. Examples of the additional layer include, but are not limited to, an ink layer and a polyolefin layer.

The multilayer structure of the present invention may include an ink layer on which a product name or a decorative pattern is to be printed. Such a multilayer structure of the present invention can be produced, for example, by stacking the layer (Y) and layer (Z) on the base (X) directly or with the adhesive layer (L) interposed therebetween and then forming the ink layer directly on the layer (Y) or (Z). Examples of the ink layer include a film resulting from drying of a liquid prepared by dispersing a polyurethane resin containing a pigment (e.g., titanium dioxide) in a solvent. The ink layer may be a film resulting from drying of an ink or electronic circuit-forming resist containing a polyurethane resin free of any pigment or another resin as a main component. Methods that can be used to apply the ink layer onto the layer (Y) include gravure printing and various coating methods using a wire bar, a spin coater, or a die coater. The thickness of the ink layer is preferably in the range of 0.5 to 10.0 µm and more preferably in the range of 1.0 to 4.0 µm.

In the multilayer structure of the present invention, the polymer (B) present in the layer (Y) has a hydroxy group and/or carboxyl group with high affinity to the adhesive layer (L) or additional layer (e.g., ink layer) and hence improves the adhesion between the layer (Y) and another layer. This can enable the multilayer structure to maintain interlayer adhesion after retorting and thus can prevent the multilayer structure from suffering from an appearance defect such as delamination.

Placing a polyolefin layer as an outermost layer of the multilayer structure of the present invention can impart heat-sealing properties to the multilayer structure or improve the mechanical characteristics of the multilayer structure. In terms of, for example, the impartation of heat-sealing properties and the improvement in mechanical characteristics, the polyolefin is preferably polypropylene or polyethylene. It is also preferable to stack at least one film selected from the group consisting of a film made of a polyester, a film made of a polyamide, and a film made of a hydroxy group-containing polymer, in order to improve the mechanical characteristics of the multilayer structure. In terms of the improvement in mechanical characteristics, the polyester is preferably polyethylene terephthalate, the polyamide is preferably nylon-6, and the hydroxy group-containing polymer is preferably ethylene-vinyl alcohol copolymer. Between the layers there may be an anchor coat layer or layer made of an adhesive provided as necessary.

A structure made up of the layer (Y) and layer (Z) stacked contiguously may hereinafter be referred to as a "layer (YZ)". The order of arrangement in the layer (YZ) may be either "layer (Y)/layer (Z)" or "layer (Z)/layer (Y)". Furthermore, a multilayer structure including the base (X) and the layer (YZ) stacked on the base (X) may hereinafter be referred to as a "multilayer barrier film". The multilayer structure of the present invention may have, for example, a configuration of "multilayer barrier film/ink layer/polyolefin layer", "multilayer barrier film/ink layer/adhesive layer (L)/polyolefin layer", "multilayer barrier film/adhesive layer (L)/polyolefin layer", or "polyolefin layer/adhesive layer (L)/multilayer barrier film/adhesive layer (L)/polyolefin layer". The multilayer structure of the present invention may include a first polyolefin layer disposed as one of the outermost layers and a second polyolefin layer disposed as the other outermost layer. In this case, the first polyolefin layer and the second polyolefin layer may be the same as or different from each other.

### [Configuration of multilayer structure]

Specific examples of the configuration of the multilayer structure of the present invention are listed below. The multilayer structure may have an adhesive layer such as the adhesive layer (L) or an additional layer; however, the adhesive layer or additional layer is omitted in the following specific examples.
(1) Layer (YZ)/polyester layer,
(2) Layer (YZ)/polyester layer/layer (YZ),
(3) Layer (YZ)/polyamide layer,
(4) Layer (YZ)/polyamide layer/layer (YZ),
(5) Layer (YZ)/polyolefin layer,
(6) Layer (YZ)/polyolefin layer/layer (YZ),
(7) Layer (YZ)/hydroxy group-containing polymer layer,
(8) Layer (YZ)/hydroxy group-containing polymer layer/layer (YZ),
(9) Layer (YZ)/paper layer,
(10) Layer (YZ)/paper layer/layer (YZ),
(11) Layer (YZ)/inorganic deposited layer/polyester layer,
(12) Layer (YZ)/inorganic deposited layer/polyamide layer,
(13) Layer (YZ)/inorganic deposited layer/polyolefin layer,
(14) Layer (YZ)/inorganic deposited layer/hydroxy group-containing polymer layer,
(15) Layer (YZ)/polyester layer/polyamide layer/polyolefin layer,
(16) Layer (YZ)/polyester layer/layer (YZ)/polyamide layer/polyolefin layer,
(17) Polyester layer/layer (YZ)/polyamide layer/polyolefin layer,
(18) Layer (YZ)/polyamide layer/polyester layer/polyolefin layer,
(19) Layer (YZ)/polyamide layer/layer (YZ)/polyester layer/polyolefin layer,
(20) Polyamide layer/layer (YZ)/polyester layer/polyolefin layer,
(21) Layer (YZ)/polyolefin layer/polyamide layer/polyolefin layer,
(22) Layer (YZ)/polyolefin layer/layer (YZ)/polyamide layer/polyolefin layer,
(23) Polyolefin layer/layer (YZ)/polyamide layer/polyolefin layer,
(24) Layer (YZ)/polyolefin layer/polyolefin layer,
(25) Layer (YZ)/polyolefin layer/layer (YZ)/polyolefin layer,
(26) Polyolefin layer/layer (YZ)/polyolefin layer,
(27) Layer (YZ)/polyester layer/polyolefin layer,
(28) Layer (YZ)/polyester layer/layer (YZ)/polyolefin layer,
(29) Polyester layer/layer (YZ)/polyolefin layer,
(30) Layer (YZ)/polyamide layer/polyolefin layer,
(31) Layer (YZ)/polyamide layer/layer (YZ)/polyolefin layer,
(32) Polyamide layer/layer (YZ)/polyolefin layer,
(33) Layer (YZ)/polyester layer/paper layer,
(34) Layer (YZ)/polyamide layer/paper layer,
(35) Layer (YZ)/polyolefin layer/paper layer,
(36) Polyolefin layer/paper layer/polyolefin layer/layer (YZ)/polyester layer/polyolefin layer,
(37) Polyolefin layer/paper layer/polyolefin layer/layer (YZ)/polyamide layer/polyolefin layer,
(38) Polyolefin layer/paper layer/polyolefin layer/layer (YZ)/polyolefin layer,
(39) Paper layer/polyolefin layer/layer (YZ)/polyester layer/polyolefin layer,
(40) Polyolefin layer/paper layer/layer (YZ)/polyolefin layer,
(41) Paper layer/layer (YZ)/polyester layer/polyolefin layer,
(42) Paper layer/layer (YZ)/polyolefin layer,
(43) Layer (YZ)/paper layer/polyolefin layer,
(44) Layer (YZ)/polyester layer/paper layer/polyolefin layer,
(45) Polyolefin layer/paper layer/polyolefin layer/layer (YZ)/polyolefin layer/hydroxy group-containing polymer layer,
(46) Polyolefin layer/paper layer/polyolefin layer/layer (YZ)/polyolefin layer/polyamide layer,
(47) Polyolefin layer/paper layer/polyolefin layer/layer (YZ)/polyolefin layer/polyester layer,
(48) Inorganic deposited layer/layer (YZ)/polyester layer,
(49) Inorganic deposited layer/layer (YZ)/polyester layer/layer (YZ)/inorganic deposited layer,
(50) Inorganic deposited layer/layer (YZ)/polyamide layer,
(51) Inorganic deposited layer/layer (YZ)/polyamide layer/layer (YZ)/inorganic deposited layer,
(52) Inorganic deposited layer/layer (YZ)/polyolefin layer,
(53) Inorganic deposited layer/layer (YZ)/polyolefin layer/layer (YZ)/inorganic deposited layer

When the multilayer structure of the present invention is used as or in a protective sheet for electronic devices, it is preferable for the multilayer structure to have any of the configurations (1) to (8), (11) to (32), and (48) to (53) among the above configurations.

According to the present invention, it is possible to obtain a multilayer structure that has an oxygen transmission rate of 2 mL/(m²•day•atm) or less at 20°C and 85% RH. It is preferable for the multilayer structure of the present invention to have an oxygen transmission rate of 1.5 mL/(m²•day•atm) or less, more preferably 1.3 mL/(m²•day•atm) or less at 20°C and 85% RH. The method and conditions for measurement of the oxygen transmission rate are as described later in "EXAMPLES".

According to the present invention, it is possible to obtain a multilayer structure that has a moisture permeability of 2.0 g/(m²•day) or less at 40°C and 90% RH. It is preferable for the multilayer structure of the present invention to have a moisture permeability of 1.0 g/(m²•day) or less, more preferably 0.50 g/(m²•day) or less, even more preferably 0.30 g/(m²•day) or less, at 40°C and 90% RH. The method and conditions for measurement of the moisture permeability are as described later in "EXAMPLES".

### [Applications]

The multilayer structure of the present invention has good gas barrier properties and is capable of maintaining the gas barrier properties at a high level even when exposed to physical stresses such as deformation and impact. The present invention also makes it possible to obtain a multilayer structure having good appearance. The multilayer structure of the present invention and a packaging material including the multilayer structure can therefore be used in various applications.

### [Packaging material]

The packaging material of the present invention includes a multilayer structure including a base (X), a layer (Y) stacked on the base (X), and a layer (Z) disposed contiguous to the layer (Y). The packaging material may consist only of the multilayer structure. That is, in the following description, the term "packaging material" may be interchanged with the term "multilayer structure". In addition, the term "packaging material" is typically interchangeable with the term "package". The packaging material may be composed of the multilayer structure and another member.

The packaging material according to a preferred embodiment of the present invention has barrier properties against inorganic gases (such as hydrogen, helium, nitrogen, oxygen, and carbon dioxide), natural gases, water vapor, and organic compounds that are liquid at ordinary temperature and pressure (such as ethanol and gasoline vapor).

When the packaging material of the present invention is in the form of a packaging bag, the multilayer structure may be used over the entirety of the packaging bag or the multilayer structure may be used in a part of the packaging bag. For example, the multilayer structure may constitute 50% to 100% of the total area of the packaging bag. The same applies to the case where the packaging material is in a form other than a packaging bag (in the form of a container or a lid, for example).

The packaging material of the present invention can be fabricated by various methods. For example, a container (packaging material) may be fabricated by subjecting a sheet of the multilayer structure or a film material including the multilayer structure (such a material will hereinafter be simply referred to as "film material") to a joining process and thereby forming the sheet of the multilayer structure or the film material into a predetermined container shape. Examples of the method for shaping include thermoforming, injection molding, and extrusion blow molding. Alternatively, a container (packaging material) may be fabricated by forming the layer (Y) on the base (X) that has been formed in a predetermined container shape. A container thus fabricated may be referred to as a "packaging container" herein.

The packaging material including the multilayer structure of the present invention may be used after being formed into any of various shaped products by secondary processing. Such a shaped product may be a vertical form-fill-seal bag, a vacuum packaging bag, a pouch, a laminated tube container, an infusion bag, a paper container, a strip tape, a container lid, an in-mold labeled container, or a vacuum insulator. These shaped products may be formed through heat sealing.

### [Vertical form-fill-seal bag]

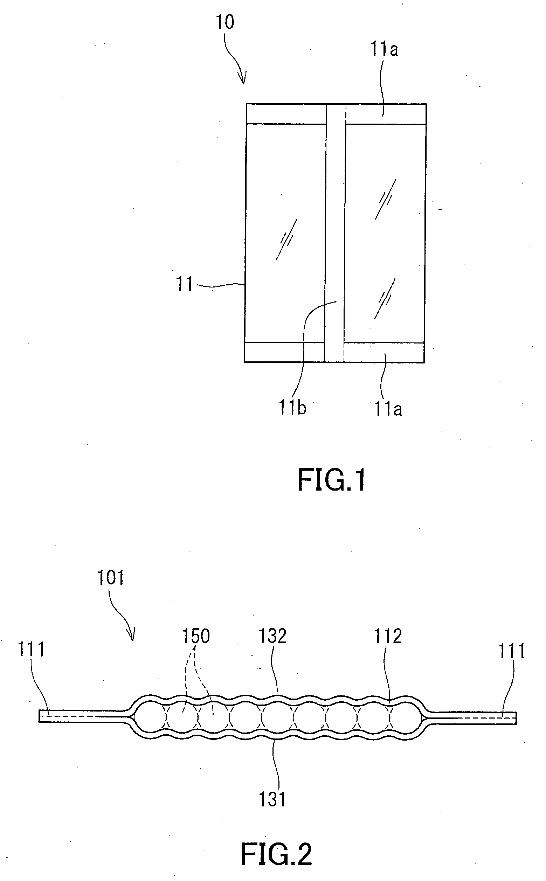

The packaging material including the multilayer structure of the present invention may be a vertical form-fill-seal bag. An example is shown in FIG. 1. A vertical form-fill-seal bag 10 of FIG. 1 is formed of a multilayer structure 11 sealed at three portions, i.e., two edge portions 11a and a body portion 11b. The vertical form-fill-seal bag 10 can be produced by a vertical form-fill-seal machine. Various methods can be employed for bag making by a vertical form-fill-seal machine. In any method, the substance to be contained in the bag is fed through the top opening of the bag into its interior, and the opening is then sealed to produce the vertical form-fill-seal bag. The vertical form-fill-seal bag is composed of, for example, one film material heat-sealed at three portions, its upper edge, lower edge, and side. The vertical form-fill-seal bag including the multilayer structure of the present invention has good gas barrier properties and maintains the gas barrier properties even when exposed to physical stresses such as deformation and impact. The vertical form-fill-seal bag is therefore capable of preventing quality degradation of the contained substance over a long period of time.

Preferred configurations of the multilayer structure for the vertical form-fill-seal bag include configurations of "multilayer barrier film/polyamide layer/polyolefin layer", "multilayer barrier film/polyolefin layer", and "polyolefin layer/multilayer barrier film/polyolefin layer". These configurations may employ a polyamide film as the base of the multilayer barrier film. The vertical form-fill-seal bag maintains its gas barrier properties even when exposed to physical stresses such as deformation and impact. When the layer (YZ) lies on one surface of the base in the multilayer structure of the present invention, the layer (YZ) may face either outwardly or inwardly in the vertical form-fill-seal bag. When a heat-sealable layer is provided only on a side corresponding to the inner side of the packaging material (bag), the body portion of the bag is typically sealed with a fin seal. When heat-sealable layers are provided on both sides corresponding to the inner and outer sides of the shaped product, the body portion of the product is typically sealed with a lap seal.

### [Vacuum packaging bag]

The packaging material including the multilayer structure of the present invention may be a vacuum packaging bag. An example is shown in FIG. 2. A vacuum packaging bag 101 of FIG. 2 is a container including film materials 131 and 132 as barrier members which are joined (sealed) together at their edges 111. The interior of the hermetically-closed vacuum packaging bag has a reduced pressure and, in general, the central portions 112 of the film materials 131 and 132, which are bounded by the edges 111, are deformed to be in close contact with a substance 150 contained in the bag and function as a separation barrier separating the interior of the bag 101 from the outside. The vacuum packaging bag can be produced using a nozzle-type or chamber-type vacuum packaging machine. The vacuum packaging bag as the packaging container according to the present invention has good gas barrier properties and maintains the gas barrier properties even when exposed to physical stresses such as deformation and impact. The barrier performance of the vacuum packaging bag therefore hardly decreases over a long period of time.

Preferred configurations of the multilayer structure for the vacuum packaging bag include configurations of "multilayer barrier film/polyamide layer/polyolefin layer" and "polyamide layer/multilayer barrier film/polyolefin layer". These configurations may employ a polyamide film as the base of the multilayer barrier film. The vacuum packaging bag including such a multilayer structure is superior particularly in terms of the gas barrier properties exhibited after vacuum packaging or after vacuum packaging and heat sterilization. When the layer (YZ) is stacked only on one surface of the base, the layer (YZ) may be located outwardly or inwardly of the base in the vacuum packaging bag.

### [Pouch]

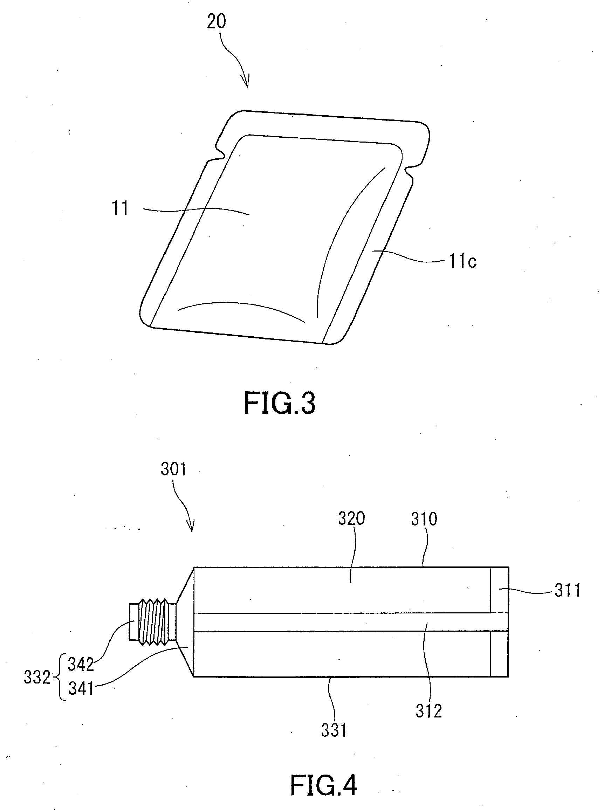

The packaging material including the multilayer structure of the present invention may be a pouch. An example is shown in FIG. 3. A flat pouch 20 of FIG. 3 is formed of two multilayer structures 11 joined together at their edges 11c. The term "pouch" as used herein generally refers to a container including a film material as a barrier member and intended to contain a food, a daily commodity, or a medical product. Pouches can have various shapes and applications, and examples include a spouted pouch, a zippered pouch, a flat pouch, a stand-up pouch, a horizontal form-fill-seal pouch, and a retort pouch. Such a pouch may be formed by stacking a multilayer barrier film and at least another layer together. The pouch as the packaging container according to the present invention has good gas barrier properties and maintains the gas barrier properties even when exposed to physical stresses such as deformation and impact. The pouch is therefore capable of preventing the contained substance from changing in quality after transportation or long-term storage. An example of the pouch can hold good transparency, which allows easy identification of the contained substance and easy check for change in the quality of the contained substance caused by degradation.

Preferred configurations of the multilayer structure for the pouch include configurations of "multilayer barrier film/polyamide layer/polyolefin layer" and "polyamide layer/multilayer barrier film/polyolefin layer". When the layer (YZ) is stacked only on one surface of the base, the layer (YZ) may be located outwardly or inwardly of the base in a spouted pouch.

### [Laminated tube container]

The packaging material including the multilayer structure of the present invention may be a laminated tube container. An example is shown in FIG. 4. A laminated tube container 301 of FIG. 4 includes: a body portion 331 including a laminated film 310 as a separation barrier 320 separating the interior of the container from the outside; and a shoulder portion 332. The shoulder portion 332 includes a tubular outlet portion 342 having a through hole (outlet orifice) and a base portion 341 having the shape of a hollow frustum of a cone. More specifically, the laminated tube container includes: the body portion 331 that is a tubular portion having one end closed; the shoulder portion 332 disposed at the other end of the body portion 331; an end sealed portion 311; and a side sealed portion 312, and the shoulder portion 332 includes: the tubular outlet portion 342 having a through hole (outlet orifice) and having a male thread on its outer circumference; and the base portion 341 having the shape of a hollow frustum of a cone. A cap having a female thread engageable with the male thread may be detachably attached to the outlet portion 342. It is preferable for the laminated film 310 forming the barrier member of the body portion 331 to have flexibility. A shaped component made of metal or resin can be used as the shoulder portion 332. The laminated tube container as the packaging container according to the present invention has good gas barrier properties and maintains the gas barrier properties even when exposed to physical stresses such as deformation and impact. In addition, the laminated tube container has good transparency, which allows easy identification of the contained substance or easy check for change in the quality of the contained substance caused by degradation.

Preferred configurations for the laminated tube container include configurations of "polyolefin layer/multilayer barrier film/polyolefin layer" and "polyolefin layer/pigment-containing polyolefin layer/polyolefin layer/multilayer barrier film/polyolefin layer". When the layer (YZ) is stacked only on one surface of the base, the layer (YZ) may be located outwardly or inwardly of the base in the laminated tube container.

### [Infusion bag]

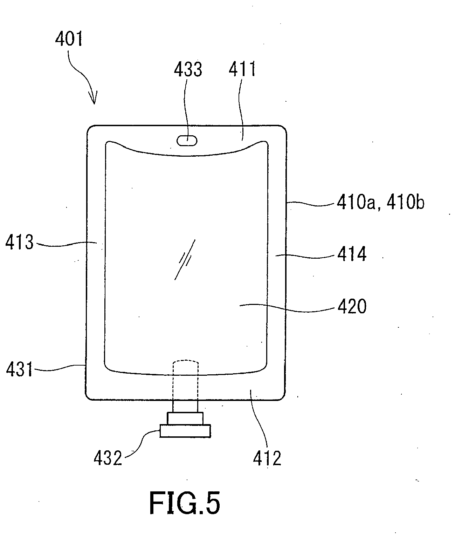

The packaging material including the multilayer structure of the present invention may be an infusion bag. The infusion bag is a container intended to contain an infusion drug and includes the film material as a separation barrier separating the interior for containing the infusion drug from the outside. An example is shown in FIG. 5. As shown in FIG. 5, the infusion bag includes a bag body 431 for containing a substance and may further include a plug member 432 attached at an edge 412 of the bag body 431. The plug member 432 functions as a passage for letting out an infusion contained in the interior of the bag body 431. The infusion bag may include a hanging hole 433 for hanging the bag, the hole being formed in an edge 411 opposite to the edge 412 at which the plug member 432 is attached. The bag body 431 is formed of two film materials 410a and 410b joined together at the edges 411, 412, 413, and 414. The film materials 410a and 410b function together as a separation barrier 420 separating the interior of the bag from the outside of the bag in a central portion of the bag body 431 which is bounded by the edges 411, 412, 413, and 414. The infusion bag as the packaging container according to the present invention has good gas barrier properties and maintains the gas barrier properties even when exposed to physical stresses such as deformation and impact. The infusion bag can therefore prevent the contained liquid medical product from changing in quality before, during, and after heat sterilization, after transportation, and after storage.

Preferred configurations of the multilayer structure for the infusion bag include configurations of "multilayer barrier film/polyamide layer/polyolefin layer" and "polyamide layer/multilayer barrier film/polyolefin layer". When the layer (YZ) is stacked only on one surface of the base, the layer (YZ) may be located outwardly or inwardly of the base in the infusion bag.

### [Paper container]

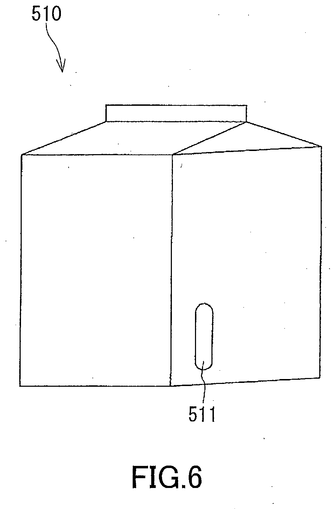

The packaging material including the multilayer structure of the present invention may be a paper container. The paper container is a container having a separation barrier separating the interior for containing a substance from the outside, the separation barrier including a paper layer. In a preferred example, at least a part of the separation barrier includes a multilayer structure, and the multilayer structure includes the base (X) and the layer (Y). The paper layer may be included in the base (X). An example is shown in FIG. 6. A paper container 510 has a window portion 511 on a side surface of its body portion. The paper layer has been removed from the base included in the window portion of the windowed container, so that the contained substance can be visually seen through the window portion 511. Also in the window portion 511 from which the paper layer has been removed, the layer configuration of the multilayer structure with improved gas barrier properties remains intact. The paper container 510 of FIG. 6 can be formed by subjecting a flat sheet of layered product to folding and joining (sealing) process. The paper container may be formed in a predetermined shape having a bottom such as a shape of the brick type or the gable top type. The paper container as the packaging container according to the present invention suffers little deterioration in gas barrier properties even when subjected to a folding process. In addition, the paper container can be preferably used as a windowed container by virtue of the layer (YZ) having good transparency. The paper container is also suitable for heating by a microwave oven.

Preferred configurations of the multilayer structure for the paper container include a configuration of "heat-resistant polyolefin layer/paper layer/heat-resistant polyolefin layer/multilayer barrier film/heat-resistant polyolefin layer". In this example, each heat-resistant polyolefin layer may be either a biaxially-oriented heat-resistant polyolefin film or a non-oriented heat-resistant polyolefin film. The heat-resistant polyolefin layers disposed as the outermost layers of the multilayer structure are preferably non-oriented polypropylene films in terms of ease of forming process. Similarly, the heat-resistant polyolefin layer disposed inwardly of the outermost layers of the multilayer structure is preferably a non-oriented polypropylene film. In a preferred example, all the heat-resistant polyolefin layers included in the multilayer structure are non-oriented polypropylene films.

### [Strip tape]

When a paper container is fabricated by subjecting a sheet of layered product to a joining (sealing) process, a strip tape may be used as a component for sealing of the layered product. The strip tape is a strip-shaped member used to join together portions of a barrier member (layered product) constituting a separation barrier of the paper container. The paper container according to the present invention may include the strip tape at a bonding portion at which portions of the layered product are joined together. In this case, the strip tape may include a multilayer structure having the same layer configuration as the multilayer structure included in the separation barrier of the paper container. In a preferred example of the strip tape, both of the outermost layers are polyolefin layers adapted for heat sealing. Such a strip tape serves to prevent the property deterioration at the bonding portion where the gas barrier properties or water vapor barrier properties are prone to deterioration. This strip tape is therefore useful also for a paper container that does not fall under the category of the packaging container according to the present invention.

### [Container lid]

The packaging material including the multilayer structure of the present invention may be a container lid. The container lid includes the film material functioning as a part of a separation barrier separating the interior of a container from the outside of the container. The container lid is combined with a container body, for example, by a joining (sealing) process using heat sealing or an adhesive in such a manner as to close an opening of the container body. A container (lidded container) having a hermetically-closed internal space is thus formed. The container lid is joined to the container body typically at its edge(s). In this case, the central portion bounded by the edge(s) faces the internal space of the container. The container body may be, for example, a shaped body having a cup shape, a tray shape, or another shape. The container body includes, for example, a wall portion and a flange portion for sealing of the container lid. The container lid as the packaging material according to the present invention has good gas barrier properties and maintains the gas barrier properties even when exposed to physical stresses such as deformation and impact, thus being capable of preventing quality degradation of the contained substance such as a food over a long period of time. The container lid can be preferably used as a lid of a container used for storage of a substance such as a foodstuff.

Preferred configurations of the multilayer structure for the container lid include configurations of "multilayer barrier film/polyamide layer/polyolefin layer" and "multilayer barrier film/polyolefin layer". These configurations may employ a polyamide film as the base of the multilayer barrier film. Adhesive layers may be provided between these layers. When the layer (YZ) lies on one surface of the base in the multilayer structure, the layer (YZ) may be located inwardly of the base (closer to the container than the base) or outwardly of the base.

### [In-mold labeled container]

The packaging material including the multilayer structure of the present invention may be an in-mold labeled container. The in-mold labeled container includes a container body and a multilayer label (multilayer structure) according to the present invention which is provided on the surface of the container body. The container body is formed through injection of a molten resin into a mold. The shape of the container body is not particularly limited, and may be a cup shape or a bottle shape, for example.

An example of the method for producing the container according to the present invention includes: a first step of placing a multilayer label of the present invention in a cavity between a female mold member and a male mold member; and a second step of injecting a molten resin into the cavity to perform molding of a container body and lamination of the multilayer label of the present invention to the container body simultaneously. Each step can be carried out in the same manner as in commonly-known methods, except for using the multilayer label of the present invention.

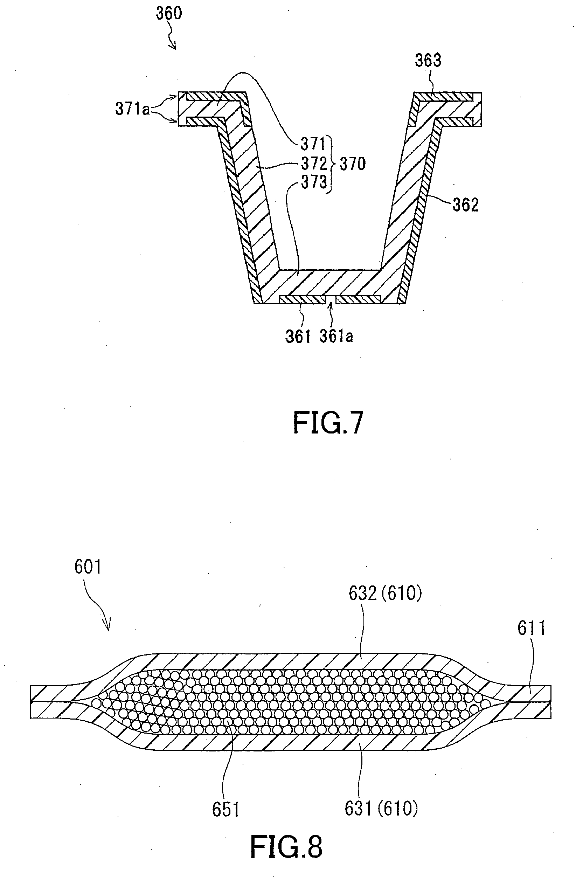

A cross-sectional view of an example of the container of the present invention is shown in FIG. 7. A container 360 of FIG. 7 includes a cup-shaped container body 370 and multilayer labels 361 to 363 laminated to the surface of the container body 370. The multilayer labels 361 to 363 are each the multilayer label of the present invention. The container body 370 includes a flange portion 371, a body portion 372, and a bottom portion 373. The flange portion 371 has at its edges projections 371a extending upwardly and downwardly. The multilayer label 361 is disposed to cover the outer surface of the bottom portion 373. At the center of the multilayer label 361 there is formed a through hole 361a for injecting a resin in the in-mold labeling. The multilayer label 362 is disposed to cover the outer surface of the body portion 372 and the under surface of the flange portion 371. The multilayer label 363 is disposed to cover a part of the inner surface of the body portion 372 and the top surface of the flange portion 371. The multilayer labels 361 to 363 are fused with the container body 370 and united with the container body 360 by in-mold labeling. As shown in FIG. 7, the edge surfaces of the multilayer label 363 are fused with the container body 360 and are not exposed to the outside.

### [Vacuum insulator]

A product according to the present invention which at least partially includes the packaging material as described above may be a vacuum insulator. The vacuum insulator of the present invention is a heat insulator including a sheath material and a core material disposed in an interior bounded by the sheath material, and the interior in which the core material is disposed has a reduced pressure. A vacuum insulator thinner and lighter than an insulator made of urethane foam can provide heat insulating properties comparable to the heat insulating properties provided by the urethane foam insulator. The vacuum insulator of the present invention is capable of maintaining the heat-insulating effect over a long period of time and can therefore be used, for example, as or in: a heat insulating material for home electric appliances such as refrigerators, hot-water supply systems, and rice cookers; a residential heat insulating material used in walls, ceilings, attics, floors, etc.; a vehicle roof member; an insulating panel for automatic vending machines etc.; and a heat transfer apparatus such as an apparatus employing a heat pump.

An example of the vacuum insulator according to the present invention is shown in FIG. 8. A vacuum insulator 601 of FIG. 8 includes a core material 651 in the form of particles and a sheath material 610 enclosing the core material 651. The sheath material 610 is constituted by two film materials 631 and 632 joined together at their edges 611, and the core material 651 is disposed in an interior bounded by the sheath material 610. In the central portion bounded by the edges 611, the sheath material 610 functions as a separation barrier separating the interior containing the core material 651 from the outside and, due to pressure difference between the interior and the outside, is in close contact with the core material 651. The interior in which the core material 651 is disposed has a reduced pressure.

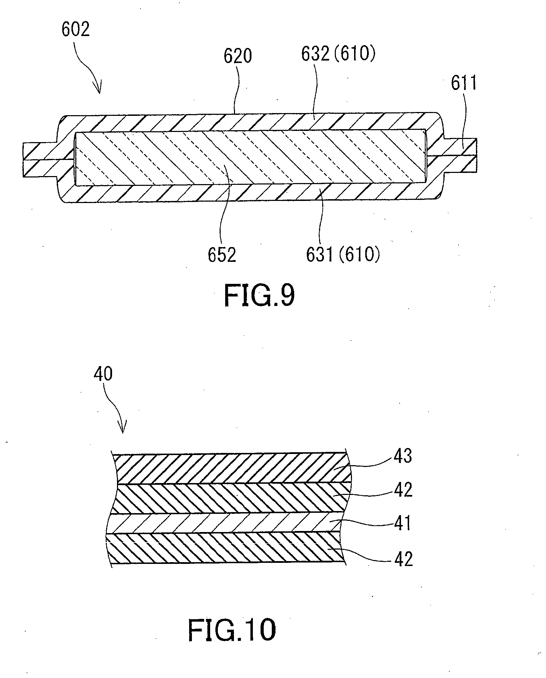

Another example of the vacuum insulator according to the present invention is shown in FIG. 9. A vacuum insulator 602 of FIG. 9 has the same configuration as the vacuum insulator 601, except for including, instead of the core material 651, a core material 652 formed as a single body. The sheath material 610 functions as a separation barrier 620 separating the interior containing the core material 652 from the outside and, due to pressure difference between the interior and the outside of the insulator, is in close contact with the core material 652. The interior in which the core material 652 is disposed has a reduced pressure. The core material 652 is typically a foamed resin.

The component and form of the core material are not particularly limited as long as they are adapted for heat insulation. Examples of the core material include a perlite powder, a silica powder, a precipitated silica powder, diatomite, calcium silicate, glass wool, rockwool, artificial (synthetic) wool, and foamed resins (such as styrene foam and urethane foam). A hollow container or a honeycomb structure formed in a predetermined shape can also be used as the core material.

Preferred configurations of the multilayer structure for the vacuum insulator include configurations of "multilayer barrier film/polyamide layer/polyolefin layer" and "polyamide layer/multilayer barrier film/polyolefin layer". Adhesive layers may be provided between these layers. When the layer (YZ) is stacked only on one surface of the base, the layer (YZ) may be located outwardly or inwardly of the base in the vacuum insulator.

### [Electronic device]

An example of the electronic device of the present invention will now be described. A partial cross-sectional view of the electronic device is shown in FIG. 10. An electronic device 40 of FIG. 10 includes an electronic device body 41, a sealing material 42 for sealing the electronic device body 41, and a protective sheet (multilayer structure) 43 for protecting the surface of the electronic device body 41. The sealing material 42 covers the entire surface of the electronic device body 41. The protective sheet 43 is disposed over one side of the electronic device body 41, with the sealing material 42 interposed therebetween. On the side opposite to that on which the protective sheet 43 is disposed there may be disposed another protective sheet. In this case, the protective sheet disposed on the opposite side may be the same as or different from the protective sheet 43. It suffices for the protective sheet 43 to be disposed in such a manner as to protect the surface of the electronic device body 41. The protective sheet 43 may be disposed directly on the surface of the electronic device body 41 or may be disposed over the surface of the electronic device body 41, with another member such as the sealing material 42 being interposed therebetween.

The electronic device body 41 is not particularly limited and is, for example, a photoelectric conversion device such as a solar cell, an information display device such as an organic EL display, liquid crystal display, or electronic paper, or a lighting device such as an organic EL light-emitting element. The sealing material 42 is an optional member that can be added as appropriate depending on, for example, the type and use of the electronic device body 41. Examples of the sealing material 42 include ethylene-vinyl acetate copolymer and polyvinyl butyral.

A preferred example of the electronic device body 41 is a solar cell. Examples of the solar cell include a silicon solar cell, a compound semiconductor solar cell, and an organic thin-film solar cell. Examples of the silicon solar cell include a monocrystalline silicon solar cell, a polycrystalline silicon solar cell, and an amorphous silicon solar cell. Examples of the compound semiconductor solar cell include a III-V compound semiconductor solar cell, a II-VI compound semiconductor solar cell, and a I-III-VI compound semiconductor solar cell. Examples of the organic thin-film solar cell include a p-n heterojunction organic thin-film solar cell and a bulk heterojunction organic thin-film solar cell. The solar cell may be an integrated solar cell including a plurality of unit cells connected in series.

Depending on the type of the electronic device body 41, it can be fabricated by a so-called roll-to-roll process. In the roll-to-roll process, a flexible substrate (e.g., a stainless steel substrate or a resin substrate) wound around a feed roll is delivered from the feed roll, an element is formed on this substrate to fabricate the electronic device body 41, and the electronic device body 41 is wound on a take-up roll. In this case, it is advantageous that the protective sheet 43 be prepared beforehand in the form of a flexible long sheet, more particularly in the form of a wound roll of the long sheet. In an example, the protective sheet 43 delivered from a feed roll is stacked onto the electronic device body 41 that has yet to be wound on the take-up roll and is wound up together with the electronic device body 41. In another example, the electronic device body 41 that has been wound on the take-up roll once may be fed from the roll again and stacked onto the protective sheet 43. In a preferred example of the present invention, the electronic device per se has flexibility.

The protective sheet 43 includes the multilayer structure described above. The protective sheet 43 may consist only of the multilayer structure. Alternatively, the protective sheet 43 may include the multilayer structure and another member (e.g., an additional layer) stacked on the multilayer structure. The thickness and material of the protective sheet 43 are not particularly limited, as long as the sheet is a sheet of layered product suitable for protection of a surface of an electronic device and includes the multilayer structure described above.

The protective sheet 43 may, for example, include a surface protection layer disposed on one or both of the surfaces of the multilayer structure. It is preferable for the surface protection layer to be a layer made of a scratch-resistant resin. A surface protection layer for a device such as a solar cell which may be used outdoors is preferably made of a resin having high weather resistance (e.g., light resistance). For protecting a surface required to permit transmission of light, a surface protection layer having high light transmittance is preferred. Examples of the material of the surface protection layer (surface protection film) include poly(meth)acrylic acid ester, polycarbonate, polyethylene terephthalate, polyethylene-2,6-naphthalate, polyvinyl fluoride (PVF), polyvinylidene fluoride (PVDF), polytetrafluoroethylene (PTFE), polychlorotrifluoroethylene (PCTFE), ethylene-tetrafluoroethylene copolymer (ETFE), ethylene-chlorotrifluoroethylene copolymer (ECTFE), tetrafluoroethylene-perfluoroalkyl vinyl ether copolymer (PFA), and tetrafluoroethylene-hexafluoropropylene copolymer (FEP). In an example, the protective sheet includes a poly(meth)acrylic acid ester layer disposed on one of its surfaces.

An additive (e.g., an ultraviolet absorber) may be added to the surface protection layer to increase the durability of the surface protection layer. A preferred example of the surface protection layer having high weather resistance is an acrylic resin layer to which an ultraviolet absorber has been added. Examples of the ultraviolet absorber include, but are not limited to, ultraviolet absorbers based on benzotriazole, benzophenone, salicylate, cyanoacrylate, nickel, or triazine. In addition, another additive such as a stabilizer, light stabilizer, or antioxidant may be used in combination.

The multilayer structure of the present invention can have barrier properties against water vapor as well as gas barrier properties. Such a multilayer structure is capable of maintaining the water vapor barrier properties at a high level even when exposed to physical stresses such as deformation and impact. This characteristic can be highly beneficial to the durability of a product fabricated using the multilayer structure of the present invention, particularly when the product is a solar cell member or display member.

The present invention encompasses embodiments obtainable by combining the above features in various manners within the technical scope of the present invention as long as such embodiments exert the effect of the present invention.

### EXAMPLES

Hereinafter, the present invention will be described in more detail by way of examples. The present invention is not limited by these examples in any respect, and it should be understood that many modifications can be made by any ordinarily skilled person in the art within the technical concept of the present invention. Measurement and evaluation in Examples and Comparative Examples given below were performed as will now be described.

### (1) Measurement of infrared absorption spectrum

The measurement was performed by attenuated total reflection spectroscopy using a Fourier transform infrared spectrophotometer. The measurement conditions were as follows.

Apparatus: Spectrum One, manufactured by PerkinElmer, Inc.
Measurement mode: Attenuated total reflection spectroscopy
Measurement range: 800 to 1,400 cm⁻¹

### (2) Measurement of respective thicknesses of layers

Each multilayer structure was cut using a focused ion beam (FIB) to prepare a section (thickness: 0.3 µm) for cross-sectional observation. The prepared section was secured to a sample stage with a carbon tape and subjected to platinum ion sputtering at an accelerating voltage of 30 kV for 30 seconds. The cross-section of the multilayer structure was observed using a field-emission transmission electron microscope to determine the respective thicknesses of the layers. The measurement conditions were as follows.

Apparatus: JEM-2100F, manufactured by JEOL Ltd.
Accelerating voltage: 200 kV
Magnification: × 250,000

### (3) Evaluation of appearance of multilayer structure

### (3-1) Evaluation of appearance of multilayer structure that has yet to undergo retorting

The appearance of each multilayer structure was evaluated by visual inspection and classified into the following ranks.
AA: Very good appearance that was colorless, transparent, and uniform.
A: Good appearance that was transparent and uniform.
B: Good appearance having no unevenness, albeit being non-transparent.
C: Cloudiness or unevenness was observed.

### (3-2) Evaluation of appearance of multilayer structure having undergone retorting

The appearance of each multilayer structure having undergone retorting was evaluated by visual inspection and classified into the following ranks.
A: The multilayer structure showed no interlayer delamination and had good appearance.
B: The multilayer structure showed partial interlayer delamination.

### (4) Measurement of oxygen transmission rate

A sample was set to an oxygen transmission testing apparatus in such a manner that the layer as the base faced the carrier gas side, and the oxygen transmission rate was measured. The measurement conditions were as follows.

Apparatus: MOCON OX-TRAN 2/20, manufactured by ModernControls, Inc.
Temperature: 20°C
Humidity on oxygen feed side: 85% RH
Humidity on carrier gas side: 85% RH
Oxygen pressure: 1 atmosphere
Carrier gas pressure: 1 atmosphere

### (5) Measurement of water vapor transmission rate

A sample was set to a water vapor transmission testing apparatus in such a manner that the layer as the base faced the carrier gas side, and the moisture permeability (water vapor transmission rate) was measured. The measurement conditions were as follows.

Apparatus: MOCON PERMATRAN 3/33, manufactured by ModernControls, Inc.
Temperature: 40°C
Humidity on water vapor feed side: 90% RH
Humidity on carrier gas side: 0% RH

### (6) Evaluation of adhesion

The adhesion between the layer (Y) and a layer (an adhesive layer or ink layer in the present examples) contiguous to the layer (Y) was evaluated by measurement of a T-peel strength (adhesive strength per 15 mm width). The measurement was performed five times, and an average of the measured values was employed as an index. The measurement conditions were as follows.

Apparatus: Autograph AGS-H, manufactured by Shimadzu Corporation
Peel rate: 250 mm/min
Temperature: 23°C
Humidity: 50% RH

### <Production example of coating liquid (T-1) for forming layer (Z)>

Distilled water in an amount of 230 parts by mass was heated to 70°C under stirring. Triisopropoxyaluminum in an amount of 88 parts by mass was added dropwise to the distilled water over 1 hour, the liquid temperature was gradually increased to 95°C, and isopropanol generated was distilled off. In this manner, hydrolytic condensation was performed. To the resulting liquid was added 4.0 parts by mass of a 60 mass% aqueous nitric acid solution, and this was followed by stirring at 95°C for 3 hours to deflocculate agglomerates of particles of the hydrolytic condensate. After that, the liquid was concentrated so that it had a solids concentration of 10 mass% in terms of aluminum oxide. To 18.66 parts by mass of the thus obtained dispersion were added 58.19 parts by mass of distilled water, 19.00 parts by mass of methanol, and 0.50 parts by mass of a 5 mass% aqueous polyvinyl alcohol solution (PVA 124, manufactured by KURARAY CO., LTD.; degree of saponification = 98.5 mol%, viscosity-average degree of polymerization = 2,400, viscosity of 4 mass% aqueous solution at 20°C = 60 mPa•s). This was followed by stirring to obtain a homogeneous dispersion. Subsequently, 3.66 parts by mass of an 85 mass% aqueous phosphoric acid solution was added dropwise to the dispersion under stirring, with the liquid temperature held at 15°C. The stirring was continued at 15°C until a viscosity of 1,500 mPa•s was reached, and the intended coating liquid (T-1) was thus obtained. In the coating liquid (T-1), the molar ratio between aluminum atoms and phosphorus atoms, as expressed by aluminum atoms : phosphorus atoms, was 1.15 : 1.00.

### <Synthesis example of polymer (Aa-1)>

Under nitrogen atmosphere, 8.5 g of 2-phosphonooxyethyl methacrylate and 0.1 g of azobisisobutyronitrile were dissolved in 17 g of methyl ethyl ketone, and the resulting solution was stirred at 80°C for 12 hours. The polymer solution obtained was cooled and then added to 170 g of 1,2-dichloroethane. This was followed by decantation to collect the polymer formed as a precipitate. Subsequently, the polymer was dissolved in tetrahydrofuran, and the solution was subjected to purification by reprecipitation using 1,2-dichloroethane as a poor solvent. The purification by reprecipitation was repeated three times, followed by vacuum drying at 50°C for 24 hours to obtain a polymer (Aa-1). The polymer (Aa-1) was a polymer of 2-phosphonooxyethyl methacrylate. As a result of GPC analysis, the number average molecular weight of the polymer was determined to be 10,000 on a polystyrene-equivalent basis.

### <Synthesis example of polymer (Aa-2)>

A polymer (Aa-2) was obtained in the same manner as in the synthesis example of the polymer (Aa-1), except for using a mixture of 2-phosphonooxyethyl methacrylate and acrylonitrile (at a molar ratio, 2-phosphonooxyethyl methacrylate : acrylonitrile, of 2 : 1) instead of using 2-phosphonooxyethyl methacrylate alone. The polymer (Aa-2) was a copolymer of 2-phosphonooxyethyl methacrylate and acrylonitrile. As a result of GPC analysis, the number average molecular weight of the polymer was determined to be 10,000 on a polystyrene-equivalent basis.

### <Synthesis example of polymer (Aa-3)>

Under nitrogen atmosphere, 10 g of vinylphosphonic acid and 0.025 g of 2,2'-azobis(2-amidinopropane) dihydrochloride were dissolved in 5 g of water, and the resulting solution was stirred at 80°C for 3 hours. After being cooled, the polymer solution was diluted by the addition of 15 g of water and then filtered using "Spectra/Por" (registered trademark), a cellulose membrane manufactured by Spectrum Laboratories, Inc. Water was removed from the filtrate by distillation, followed by vacuum drying at 50°C for 24 hours to obtain a polymer (Aa-3). The polymer (Aa-3) was poly(vinylphosphonic acid). As a result of GPC analysis, the number average molecular weight of the polymer was determined to be 10,000 on a polyethylene glycol-equivalent basis.

### <Production example of coating liquid (S-1) for forming layer (Y)>

First, a mixture containing 91 mass% of the polymer (Aa-1) obtained in the above synthesis example and 9 mass% of polyvinyl alcohol (PVA 124, manufactured by KURARAY CO., LTD.) was prepared. This mixture was dissolved in a mixed solvent of water and methanol (at a mass ratio, water : methanol, of 7 : 3) to obtain a coating liquid (S-1) having a solids concentration of 1 mass%.

### <Production examples of coating liquids (S-2) to (S-13) and coating liquids (CS-1) to (CS-8)>

Coating liquids (S-2) to (S-13) and coating liquids (CS-1) to (CS-8) were produced in the same manner as in the production of the coating liquid (S-1), except for varying the types of, and ratio between, the compound (A) and polymer (B) in accordance with Table 1 given below. The layers formed by the coating liquids (CS-1) to (CS-8) do not correspond to the layer (Y), and are denoted by "layer (CY)" in Table 1.

The details of films used in Examples and Comparative Examples were as follows.
1) PET 12: Oriented polyethylene terephthalate film; "Lumirror P60" (trade name), manufactured by Toray Industries, Inc. and having a thickness of 12 µm
2) PET 50: Polyethylene terephthalate film with improved adhesion to ethylene-vinyl acetate copolymer; "SHINEBEAM Q1A15" (trade name), manufactured by TOYOBO CO., LTD. and having a thickness of 50 µm
3) ONY: Oriented nylon film; "EMBLEM ONBC" (trade name), manufactured by UNITIKA LTD. and having a thickness of 15 µm
4) CPP 50: Non-oriented polypropylene film; "RXC-18" (trade name), manufactured by Mitsui Chemicals Tohcello, Inc. and having a thickness of 50 µm
5) CPP 60: Non-oriented polypropylene film; "RXC-18" (trade name), manufactured by Mitsui Chemicals Tohcello, Inc. and having a thickness of 60 µm
6) CPP 70: Non-oriented polypropylene film; "RXC-21" (trade name), manufactured by Mitsui Chemicals Tohcello, Inc. and having a thickness of 70 µm
7) CPP 100: Non-oriented polypropylene film; "RXC-21" (trade name), manufactured by Mitsui Chemicals Tohcello, Inc. and having a thickness of 100 µm

### [Example 1]

### <Example 1-1>

First, a PET 12 was prepared as the base (X). The coating liquid (T-1) was applied onto this base using a bar coater in such a manner that the dry thickness would be 0.3 µm. The applied film was dried at 110°C for 5 minutes and then heat-treated at 160°C for 1 minute to form the layer (Z1) on the base. A structure having a configuration of "base (X)/layer (Z1)" was thus obtained. As a result of measurement of the infrared absorption spectrum of the obtained structure, the maximum absorption wavenumber in the region of 800 to 1,400 cm⁻¹ was determined to be 1,108 cm⁻¹, and the half width of the absorption band was determined to be 37 cm⁻¹. Subsequently, the coating liquid (S-1) was applied onto the structure using a bar coater in such a manner that the dry thickness would be 0.05 µm, and then was dried at 220°C for 1 minute to form the layer (Y). A multilayer structure (1-1) having a configuration of "base (X)/layer (Z1)/layer (Y)" was thus obtained.

The oxygen transmission rate and moisture permeability of the multilayer structure (1-1) obtained were measured by the methods described above. The oxygen transmission rate was 0.2 mL/(m²•day•atm), and the moisture permeability was 0.2 g/(m²•day). A sample with a size of 15 cm × 10 cm was cut out from the multilayer structure (1-1), and this sample was allowed to stand at 23°C and 50% RH for 24 hours, after which, under the same conditions, the sample was longitudinally stretched by 3% and allowed to keep the stretched state for 10 seconds. The multilayer structure (1-1) having undergone stretching was thus prepared. The oxygen transmission rate of the multilayer structure (1-1) having undergone stretching was measured by the method described above. The appearance of the multilayer structure (1-1) was also evaluated.

An adhesive layer was formed on the obtained multilayer structure (1-1), and then an ONY was laminated onto the adhesive layer to obtain a layered product. Next, an adhesive layer was formed on the oriented nylon film of the layered product, and then a CPP 70 was laminated onto the adhesive layer. The resulting layered product was allowed to stand at 40°C for 5 days for aging. In this way, a multilayer structure (1-2) having a configuration of "base (X)/layer (Z1)/layer (Y)/adhesive layer/ONY/adhesive layer/CPP" was obtained. The two adhesive layers were each formed by applying a two-component reactive polyurethane adhesive using a bar coater in such a manner that the dry thickness would be 3 µm and then by drying the applied adhesive. The two-component reactive polyurethane adhesive used was an adhesive composed of "A-525S" (product name) of "TAKELAC" (registered trademark) manufactured by Mitsui Chemicals, Inc. and "A-50" (product name) of "TAKENATE" (registered trademark) manufactured by Mitsui Chemicals, Inc.

The multilayer structure (1-2) was subjected to heat sealing to fabricate a pouch, and the pouch was filled with 100 g of water. Subsequently, the resulting pouch was subjected to hot water treatment using a retorting apparatus (Flavor Ace RSC-60, manufactured by HISAKA WORKS, LTD.) at 120°C and 0.15 MPaG for 30 minutes. The appearance of the multilayer structure (1-2) having undergone hot water treatment was evaluated. After the appearance evaluation, the pouch was dried at 23°C and 50% RH for 24 hours. The T-peel strength of the multilayer structure (1-2) was measured after the drying.

### <Examples 1-2 to 1-12 and Reference Example 1-13>

Multilayer structures (2-1) to (13-1) of Examples 1-2 to 1-12 and Reference Example 1-13 were fabricated in the same manner as in the fabrication of the multilayer structure (1-1) of Example 1-1, except for substituting the coating liquids (S-2) to (S-13) for the coating liquid (S-1). In addition, multilayer structures (2-2) to (13-2) were obtained in the same manner as in the fabrication of the multilayer structure (1-2) of Example 1-1, except for substituting the multilayer structures (2-1) to (13-1) for the multilayer structure (1-1).

### <Comparative Examples 1-1 to 1-8>

Multilayer structures (C1-1) to (C8-1) of Comparative Examples 1-1 to 1-8 were fabricated in the same manner as in the fabrication of the multilayer structure (1-1) of Example 1-1, except for substituting the coating liquids (CS-1) to (CS-8) for the coating liquid (S-1). In addition, multilayer structures (C1-2) to (C8-2) were obtained in the same manner as in the fabrication of the multilayer structure (1-2) of Example 1-1,'except for substituting the multilayer structures (C1-1) to (C8-1) for the multilayer structure (1-1).

### <Examples 1-14 and 1-15>

A multilayer structure (14-1) of Example 1-14 and a multilayer structure (15-1) of Example 1-15 were fabricated in the same manner as in the fabrication of the multilayer structure (1-1) of Example 1-1, except for using a deposited layer formed by vacuum deposition instead of the layer (Z1). In Example 1-14, the deposited layer used was the layer (Z2) of aluminum with a thickness of 0.03 µm. In Example 1-15, the deposited layer used was the layer (Z3) of aluminum oxide with a thickness of 0.03 µm. In addition, multilayer structures (14-2) and (15-2) were obtained in the same manner as in the fabrication of the multilayer structure (1-2) of Example 1-1, except for substituting the multilayer structures (14-1) and (15-1) for the multilayer structure (1-1).

### <Example 1-16>

First, the layer (Z3) of aluminum oxide with a thickness of 0.03 µm was formed on the base (X) by vacuum deposition. Next, the layer (Z1) was formed on the layer (Z3) using the coating liquid (T-1). Subsequently, the layer (Y) was formed on the layer (Z1) using the coating liquid (S-1). In this way, a multilayer structure (16-1) having a configuration of "base (X)/layer (Z3)/layer (Z1)/layer (Y)" was fabricated. The fabrication of the multilayer structure (16-1) was performed under the same conditions as in Example 1-1, except for the formation of the layer (Z3). In addition, a multilayer structure (16-2) was obtained in the same manner as in the fabrication of the multilayer structure (1-2) of Example 1-1, except for substituting the multilayer structure (16-1) for the multilayer structure (1-1).

### <Example 1-17>

First, the layer (Z1-1) was formed on the base (X) using the coating liquid (T-1). Next, the layer (Z3) of aluminum oxide with a thickness of 0.03 µm was formed on the layer (Z1) by vacuum deposition. Subsequently, the layer (Y) was formed on the layer (Z3) using the coating liquid (S-1). In this way, a multilayer structure (17-1) having a configuration of "base (X)/layer (Z1)/layer (Z3)/layer (Y)" was fabricated. The fabrication of the multilayer structure (17-1) was performed under the same conditions as in Example 1-1, except for the formation of the layer (Z3). In addition, a multilayer structure (17-2) was obtained in the same manner as in the fabrication of the multilayer structure (1-2) of Example 1-1, except for substituting the multilayer structure (17-1) for the multilayer structure (1-1).

### <Example 1-18>

A multilayer structure (18-2) having a configuration of "base (X)/layer (Z1)/layer (Y)/ink layer/ONY/adhesive layer/CPP" was obtained in the same manner as in the fabrication of the multilayer structure (1-2) of Example 1-1, except for substituting the coating liquid (S-6) for the coating liquid (S-1) and forming an ink layer on the multilayer structure (6-1). The multilayer structure obtained was evaluated. The ink layer was formed by applying an ink using a bar coater in such a manner that the dry thickness would be 2 µm and then by drying the applied ink. The ink used was "R641 AT White" (product name) of "Fine Star" (registered trademark) manufactured by TOYO INK CO., LTD.

### <Comparative Example 1-9>

A multilayer structure (C9-2) was obtained in the same manner as in the fabrication of the multilayer structure (18-2) of Example 1-18, except for substituting the coating liquid (CS-2) for the coating liquid (S-6).

The conditions of production of the multilayer structures (1-1) to (17-1) of Examples and the conditions of production of the multilayer structures (C1-1) to (C8-1) of Comparative Examples are shown in Table 1. In Table 1, "A: B" refers to "compound (A) : polymer (B)". The polymers (B) listed in Table 1 are the following substances.

PVA 124: Polyvinyl alcohol (KURARAY POVAL (registered trademark) manufactured by KURARAY CO., LTD., degree of saponification = 98.5 mol%, viscosity-average degree of polymerization = 2,400, viscosity of 4 mass% aqueous solution at 20°C = 60 mPa • s)
PVA 424H: Polyvinyl alcohol (KURARAY POVAL (registered trademark) manufactured by KURARAY CO., LTD., degree of saponification = 79.5 mol%, viscosity-average degree of polymerization = 2,400, and viscosity of 4 mass% aqueous solution at 20°C = 48 mPa • s)
RS-2117: Hydroxy group-containing water-soluble polymer (EXCEVAL (registered trademark) manufactured by KURARAY CO., LTD., degree of saponification = 98.2 mol%, viscosity-average degree of polymerization = 1,700, viscosity of 4 mass% aqueous solution at 20°C = 26.5 mPa • s, degree of ethylene modification = 3.0 mol%)
PAA: Polyacrylic acid (Aron-15H (registered trademark) manufactured by TOAGOSEI CO., LTD., number average molecular weight = 210,000, weight average molecular weight = 1,290,000)
Starch: Starch manufactured by Wako Pure Chemical Industries, Ltd. (being soluble and having purity of Wako 1st Grade)

**[Table 1]**

| | Multilayer structure No. | Layer configuration | Coating liquid (S) | | | |
|---|---|---|---|---|---|---|
| | | | No. | Compound (A) | Polymer (B) | A : B (mass ratio) |
| Example 1-1 | 1-1 | (X)/(Z1)/(Y) | S-1 | Aa-1 | PVA 124 | 91 : 9 |
| Example 1-2 | 2-1 | (X)/(Z1)/(Y) | S-2 | Aa-2 | PVA 124 | 91 : 9 |
| Example 1-3 | 3-1 | (X)/(Z1)/(Y) | S-3 | Aa-3 | PVA 124 | 99 : 1 |
| Example 1-4 | 4-1 | (X)/(Z1)/(Y) | S-4 | Aa-3 | PVA 124 | 91 : 9 |
| Example 1-5 | 5-1 | (X)/(Z1)/(Y) | S-5 | Aa-3 | PVA 124 | 83 : 17 |
| Example 1-6 | 6-1 | (X)/(Z1)/(Y) | S-6 | Aa-3 | PVA 124 | 77 : 23 |
| Example 1-7 | 7-1 | (X)/(Z1)/(Y) | S-7 | Aa-3 | PVA 124 | 60 : 40 |
| Example 1-8 | 8-1 | (X)/(Z1)/(Y) | S-8 | Aa-3 | PVA 124 | 20 : 80 |
| Example 1-9 | 9-1 | (X)/(Z1)/(Y) | S-9 | Aa-3 | PVA 424H | 91 : 9 |
| Example 1-10 | 10-1 | (X)/(Z1)/(Y) | S-10 | Aa-3 | RS-2117 | 91 : 9 |
| Example 1-11 | 11-1 | (X)/(Z1)/(Y) | S-11 | Aa-3 | PAA | 91 : 9 |
| Example 1-12 | 12-1 | (X)/(Z1)/(Y) | S-12 | Aa-3 | Starch | 91 : 9 |
| Reference Example 1-13 | 13-1 | (X)/(Z1)/(Y) | S-13 | Phosphoric acid | PVA 124 | 70 : 30 |
| Example 1-14 | 14-1 | (X)/(Z2)/(Y) | S-1 | Aa-1 | PVA 124 | 91 : 9 |
| Example 1-15 | 15-1 | (X)/(Z3)/(Y) | S-1 | Aa-1 | PVA 124 | 91 : 9 |
| Example 1-16 | 16-1 | (X)/(Z3)/(Z1)/(Y) | S-1 | Aa-1 | PVA 124 | 91 : 9 |
| Example 1-17 | 17-1 | (X)/(Z1)/(Z3)/(Y) | S-1 | Aa-1 | PVA 124 | 91 : 9 |
| Example 1-18 | 6-1 | (X)/(Z1)/(Y) | S-6 | Aa-3 | PVA 124 | 77 : 23 |
| Comparative Example 1-1 | C1-1 | (X)/(Z1)/(Y) | CS-1 | Aa-1 | - | 100 : 0 |
| Comparative Example 1-2 | C2-1 | (X)/(Z1)/(Y) | CS-2 | Aa-3 | - | 100 : 0 |
| Comparative Example 1-3 | C3-1 | (X)/(Z1)/(Y) | CS-3 | - | PVA 124 | 0 : 100 |
| Comparative Example 1-4 | C4-1 | (X)/(Z1)/(Y) | CS-4 | - | PAA | 0 : 100 |
| Comparative Example 1-5 | C5-1 | (X)/(Z1)/(Y) | CS-5 | - | Starch | 0 : 100 |
| Comparative Example 1-6 | C6-1 | (X)/(Z1)/(Y) | CS-6 | Aa-3 | PVA 124 | 99.8 : 0.2 |
| Comparative Example 1-7 | C7-1 | (X)/(Z1)/(Y) | CS-7 | Aa-3 | PVA 124 | 10 : 90 |
| Comparative Example 1-8 | C8-1 | (X)/(Z1)/(Y) | CS-8 | Phosphoric acid | PVA 124 | 10 : 90 |
| Comparative Example 1-9 | C2-1 | (X)/(Z1)/(Y) | CS-2 | Aa-3 | - | 100 : 0 |

The results of evaluation of the multilayer structures (1-1) to (17-1) and (C1-1) to (C8-1) are shown in Table 2.

**[Table 2]**

| | Multilayer structure No. | Layer configuration | Appearance | Oxygen transmission rate mL/(m²•day•atm) | | Moisture permeability g/(m²•day) |
|---|---|---|---|---|---|---|
| | | | | Before stretching | After stretching | Before stretching |
| Example 1-1 | 1-1 | (X)/(Z1)/(Y) | AA | 0.2 | 0.5 | 0.2 |
| Example 1-2 | 2-1 | (X)/(Z1)/(Y) | AA | 0.2 | 2.2 | 0.2 |
| Example 1-3 | 3-1 | (X)/(Z 1)/(Y) | AA | 0.2 | 1.0 | 0.2 |
| Example 1-4 | 4-1 | (X)/(Z1)/(Y) | AA | 0.2 | 0.5 | 0.2 |
| Example 1-5 | 5-1 | (X)/(Z1)/(Y) | A | 0.2 | 0.5 | 0.2 |
| Example 1-6 | 6-1 | (X)/(Z1)/(Y) | A | 0.2 | 1.0 | 0.2 |
| Example 1-7 | 7-1 | (X)/(Z 1)/(Y) | A | 0.2 | 0.5 | 0.2 |
| Example 1-8 | 8-1 | (X)/(Z 1)/(Y) | A | 0.2 | 0.5 | 0.2 |
| Example 1-9 | 9-1 | (X)/(Z1)/(Y) | AA | 0.2 | 1.5 | 0.2 |
| Example 1-10 | 10-1 | (X)/(Z1)/(Y) | AA | 0.2 | 1.5 | 0.2 |
| Example 1-11 | 11-1 | (X)/(Z1)/(Y) | AA | 0.2 | 2.0 | 0.2 |
| Example 1-12 | 12-1 | (X)/(Z1)/(Y) | AA | 0.2 | 1.3 | 0.2 |
| Example 1-13 | 13-1 | (X)/(Z1)/(Y) | A | 0.2 | 1.5 | 0.2 |
| Example 1-14 | 14-1 | (X)/(Z2)/(Y) | B | 1.8 | 2.3 | 0.8 |
| Example 1-15 | 15-1 | (X)/(Z3)/(Y) | AA | 0.8 | 2.4 | 0.5 |
| Example 1-16 | 16-1 | (X)/(Z3)/(Z1)/(Y) | AA | 0.2 | 1.0 | 0.2 |
| Example 1-17 | 17-1 | (X)/(Z1)/(Z3)/(Y) | AA | 0.2 | 1.0 | 0.2 |
| Example 1-18 | 6-1 | (X)/(Z1)/(Y) | A | 0.2 | 1.0 | 0.2 |
| Comparative Example 1-1 | C1-1 | (X)/(Z1)/(Y) | A | 0.2 | 2.5 | 0.2 |
| Comparative Example 1-2 | C2-1 | (X)/(Z1)/(Y) | A | 0.2 | 2.5 | 0.2 |
| Comparative Example 1-3 | C3-1 | (X)/(Z1)/(Y) | A | 0.2 | 50.0 | 0.2 |
| Comparative Example 1-4 | C4-1 | (X)/(Z1)/(Y) | A | 0.2 | 35.0 | 0.2 |
| Comparative Example 1-5 | C5-1 | (X)/(Z1)/(Y) | A | 0.2 | 40.0 | 0.2 |
| Comparative Example 1-6 | C6-1 | (X)/(Z1)/(Y) | A | 0.2 | 30.0 | 0.2 |
| Comparative Example 1-7 | C7-1 | (X)/(Z1)/(Y) | C | 0.2 | 3.6 | 0.2 |
| Comparative Example 1-8 | C8-1 | (X)/(Z1)/(Y) | C | 0.2 | 3.6 | 0.2 |
| Comparative Example 1-9 | C2-1 | (X)/(Z1)/(Y) | A | 0.2 | 2.5 | 0.2 |

The results of evaluation of the multilayer structures (1-2) to (18-2) and (C1-2) to (C9-2) are shown in Table 3.

**[Table 3]**

| | Multilayer structure No. | Appearance evaluated after retorting | Peel strength (N/15mm) |
|---|---|---|---|
| Example 1-1 | 1-2 | A | 4.1 |
| Example 1-2 | 2-2 | A | 4.5 |
| Example 1-3 | 3-2 | A | 3.2 |
| Example 1-4 | 4-2 | A | 4.4 |
| Example 1-5 | 5-2 | A | 4.4 |
| Example 1-6 | 6-2 | A | 4.7 |
| Example 1-7 | 7-2 | A | 4.1 |
| Example 1-8 | 8-2 | A | 3.6 |
| Example 1-9 | 9-2 | A | 4.9 |
| Example 1-10 | 10-2 | A | 4.9 |
| Example 1-11 | 11-2 | A | 2.0 |
| Example 1-12 | 12-2 | A | 2.6 |
| Example 1-13 | 13-2 | A | 4.9 |
| Example 1-14 | 14-2 | A | 2.9 |
| Example 1-15 | 15-2 | A | 3.4 |
| Example 1-16 | 16-2 | A | 4.4 |
| Example 1-17 | 17-2 | A | 4.4 |
| Example 1-18 | 18-2 | A | 4.4 |
| Comparative Example 1-1 | C1-2 | B | 1.5 |
| Comparative Example 1-2 | C2-2 | B | 1.5 |
| Comparative Example 1-3 | C3-2 | B | 1.6 |
| Comparative Example 1-4 | C4-2 | B | 1.5 |
| Comparative Example 1-5 | C5-2 | B | 1.5 |
| Comparative Example 1-6 | C6-2 | B | 1.4 |
| Comparative Example 1-7 | C7-2 | B | 1.5 |
| Comparative Example 1-8 | C8-2 | B | 1.5 |
| Comparative Example 1-9 | C9-2 | B | 1.4 |

As seen in the above tables, the multilayer structures of the present invention showed good appearance after undergoing heat treatment. In addition, the multilayer structures of the present invention maintained the gas barrier properties at a high level when exposed to a strong stretching stress. Furthermore, the multilayer structures of the present invention maintained good cohesion after undergoing retorting. The multilayer structure of Example 1-14 having deposited aluminum had good appearance without unevenness, although being non-transparent due to the presence of the aluminum layer.

### <Example 1-19>

A vertical form-fill-seal bag was fabricated using the multilayer structure (1-2) obtained in Example 1-1. Specifically, the multilayer structure (1-2) was first cut into a 400-mm-wide piece, which was fed to a vertical form-fill-seal packaging machine (manufactured by ORIHIRO Co., Ltd.) to fabricate a vertical form-fill-seal bag of the fin seal type (having a width of 160 mm and a length of 470 mm). Next, the vertical form-fill-seal bag consisting of the multilayer structure (1-2) was filled with 2 kg of water using the form-fill-seal packaging machine. The processability of the multilayer structure (1-2) in the form-fill-seal packaging machine was good, and no defects such as wrinkles or streaks were not found in the appearance of the vertical form-fill-seal bag obtained.

### <Example 1-20>

A vacuum packaging bag was fabricated using the multilayer structure (1-2) obtained in Example 1-1. Specifically, two pieces of layered product in the shape of a 22 cm × 30 cm rectangle were cut out from the multilayer structure (1-2) first. The two pieces of the multilayer structure (1-2) were then stacked together in such a manner that the CPPs were located interiorly, and the rectangular stack was heat-sealed at its three sides to form a bag. Wood spheres (having a diameter of 30 mm) were selected as a model of a solid food and put into the bag in such a manner that the spheres were closely arranged in a single layer to be in contact with each other. After that, the air inside the bag was removed by degassing, and the remaining one side was heat-sealed to fabricate a vacuum-packaged product. In the vacuum-packaged product obtained, the multilayer structure (1-2) was in close contact with the spheres along the irregularities of the spheres.

### <Example 1-21>

A spouted pouch was fabricated using the multilayer structure (1-2) obtained in Example 1-1. Specifically, the multilayer structure (1-2) was first cut into two pieces of a given shape. The two pieces of the multilayer structure (1-2) were then stacked together in such a manner that the CPP layers were located interiorly. The periphery of the stack was heat-sealed, and a spout made of polypropylene was then attached by heat sealing. In this way, a spouted pouch of the flat pouch type was successfully fabricated without any problem.

### <Example 1-22>

A laminated tube container was fabricated using the multilayer structure (1-1) obtained in Example 1-1. Specifically, a two-component reactive polyurethane adhesive was first applied to two CPP 100s using a bar coater in such a manner that the dry thickness would be 3 µm, and the adhesive was then dried. The two-component reactive polyurethane adhesive used was the two-component reactive polyurethane adhesive used in Example 1-1. Next, the two CPP 100s and the multilayer structure (1-1) were laminated together. In this way, a multilayer structure (22) was obtained.

The multilayer structure (22) was cut into a piece of a given shape, which was formed into a tubular roll having an overlapping portion, which was heat-sealed to fabricate a tubular product. The tubular product was then mounted to a mandrel for tube container formation, and a shoulder portion in the shape of a frustum of a cone and a head portion continuous with the shoulder portion were formed at one end of the tubular product. The shoulder portion and the head portion were formed by compression molding of polypropylene. Next, a cap made of polypropylene was attached to the head portion. The other open end of the tubular product was then heat-sealed. In this way, a laminated tube container was successfully fabricated without any problem.

### <Example 1-23>

An infusion bag was fabricated using the multilayer structure (1-2) obtained in Example 1-1. Specifically, the multilayer structure (1-2) was first cut into two pieces of a given shape. The two pieces of the multilayer structure (1-2) were stacked together in such a manner that the CPP layers were located interiorly.

The periphery of the stack was heat-sealed, and a spout made of polypropylene was then attached by heat sealing. In this way, an infusion bag was successfully fabricated without any problem.

### <Example 1-24>

A container lid was fabricated using the multilayer structure (1-2) obtained in Example 1-1. Specifically, the multilayer structure (1-2) was cut to give a container lid in the shape of a circle of 88 mm diameter. Subsequently, a cylindrical container (Hi-Retoflex HR 78-84, manufactured by Toyo Seikan Co., Ltd.) having a three-layer configuration of "polyolefin layer/steel layer/polyolefin layer" and having a diameter of 78 mm, a flange width of 6.5 mm, and a height of 30 mm was almost completely filled with water, and the container lid consisting of the multilayer structure (1-2) was heat-sealed to the flange portion of the container. In this way, a lidded container including the container lid was successfully fabricated without any problem.

### <Example 1-25>

A paper container was fabricated using the multilayer structure (1-1) obtained in Example 1-1. Specifically, an adhesive was first applied to both surfaces of a 400 g/m² paperboard, and then polypropylene was applied to the two surfaces of the paperboard by extrusion lamination to form a 20-µm-thick polypropylene layer on each of the two surfaces. Next, an adhesive was applied to the surface of one of the polypropylene layers, onto which the multilayer structure (1-1) was laminated. An adhesive was then applied to the surface of the laminated multilayer structure (1-1), to which a CPP 70 was bonded. With the use of the multilayer structure thus obtained, a brick-type paper container was successfully fabricated without any problem.

### <Example 1-26>

A vacuum insulator was fabricated using the multilayer structure (1-2) obtained in Example 1-1. Specifically, the multilayer structure (1-2) was first cut into two pieces of a given shape. The two pieces of the multilayer structure (1-2) were then stacked together in such a manner that the CPP layers were located interiorly, and the resulting rectangular stack was heat-sealed at its three sides to form a bag. Next, a heat-insulating core material was put into the bag through the opening of the bag, and the bag was hermetically sealed using a vacuum packaging machine (VAC-STAR 2500, manufactured by Frimark GmbH) so that the internal pressure was 10 Pa at a temperature of 20°C. In this way, a vacuum insulator was successfully fabricated without any problem. The heat-insulating core material used was a silica fine powder dried at 120°C for 4 hours.

### [Example 2] Container

First, the surface of a PET bottle (with a volume of 500 mL, a surface area of 0.041 m², and a weight of 35 g) to be used as a base was subjected to plasma treatment. The coating liquid (T-1) was applied to the surface of this PET bottle by dipping, followed by drying at 110°C for 5 minutes. This was followed by heat treatment at 120°C for 5 minutes to obtain a structure having a configuration of "base (X)/layer (Z1)". Next, the coating liquid (S-1) was applied to the surface of the obtained structure by dipping in such a manner that the dry thickness would be 0.3 µm, and was then dried at 110°C for 5 minutes. In this way, a container (2-1) was obtained. The wall of the container (2-1) has a configuration of "base (X)/layer (Z1)/layer (Y)".

A measurement sample with a size of 15 cm (circumferential direction) × 10 cm (longitudinal direction) was cut out from the body portion of the container (2-1), and was subjected to measurement of the oxygen transmission rate and moisture permeability before stretching. The result was that the oxygen transmission rate was 0.2 mL/(m²•day•atm) and the moisture permeability was 0.1 g/(m²•day) before stretching. The oxygen transmission rate as measured after stretching was 0.6 mL/(m²•day•atm), which demonstrates that the container of the present invention maintained the oxygen barrier properties when exposed to a high physical stress. The stretching was done using the same conditions as in Example 1-1.

### [Example 3] Vertical form-fill-seal bag

A PET 12 was used as the base (X), and the coating liquid (T-1) was applied onto this base using a bar coater in such a manner that the dry thickness would be 0.3 µm, and was then dried at 110°C for 5 minutes. This was followed by heat treatment at 160°C for 1 minute to fabricate a structure having a configuration of "base (X)/layer (Z1)". An infrared absorption spectrum of the obtained structure was measured. The result was that the maximum absorption wavenumber in the region of 800 to 1,400 cm⁻¹ was 1,108 cm⁻¹, and the half width of the maximum absorption band in the same region was 37 cm⁻¹. Subsequently, the coating liquid (S-1) as used in Example 1-1 was applied onto the structure using a bar coater in such a manner that the dry thickness would be 0.05 µm, and was then dried at 220°C for 1 minute to form the layer (Y). In this way, a multilayer structure (3-1) having a configuration of "base (X)/layer (Z1)/layer (Y)" was obtained. The appearance of this multilayer structure (3-1) was evaluated. In addition, the oxygen transmission rate and moisture permeability of the multilayer structure (3-1) were measured by the methods described above. The oxygen transmission rate was 0.2 mL/(m²•day•atm). The moisture permeability was 0.2 g/(m²•day).

An adhesive layer was formed on the obtained multilayer structure (3-1), and then an ONY was laminated onto the adhesive layer to give a layered product. Next, an adhesive layer was formed on the ONY of the layered product, and then a CPP 70 was laminated onto the adhesive layer. The resulting layered product was allowed to stand at 40°C for 5 days for aging. In this way, a multilayer structure (3-1-2) having a configuration of "base (X)/layer (Y)/adhesive layer/ONY/adhesive layer/CPP" was obtained. The two adhesive layers were each formed by applying a two-component reactive adhesive using a bar coater in such a manner that the dry thickness would be 3 µm, and then by drying the applied adhesive. The two-component reactive polyurethane adhesive used was an adhesive composed of "A-525S" (product name) of "TAKELAC" (registered trademark) manufactured by Mitsui Chemicals, Inc. and "A-25" (product name) of "TAKENATE" (registered trademark) manufactured by Mitsui Chemicals, Inc. The multilayer structure (3-1-2) was cut into a 400-mm-wide piece, which was fed to a vertical form-fill-seal packaging machine (manufactured by ORIHIRO Co., Ltd.) in such a manner that the heat sealing was performed with the CPP layers being in contact with each other. Using the vertical form-fill-seal packaging machine, a vertical form-fill-seal bag (3-1) of the fin seal type (having a width of 160 mm and a length of 470 mm) as shown in FIG. 1 was fabricated. A measurement sample was cut out from the vertical form-fill-seal bag (3-1), and was subjected to measurement of the oxygen transmission rate and moisture permeability before stretching. The result was that the oxygen transmission rate was 0.2 mL/(m²•day•atm) and the moisture permeability was 0.2 g/(m²•day) before stretching. The oxygen transmission rate as measured after stretching was 0.5 mL/(m²•day•atm). The stretching was done using the same conditions as in Example 1-1.

The interior of the bag (3-1) was filled with 2 kg of water. The resulting bag was then subjected to retorting using the same conditions as in Example 1-1. The appearance of the bag (3-1) having undergone retorting was evaluated. The multilayer structure did not show interlayer delamination, and the bag had good appearance. A measurement sample was cut out from the bag (3-1) having undergone retorting, and the sample was left in an atmosphere of 23°C and 50% RH for 24 hours, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the bag having undergone retorting was left in an atmosphere of 23°C and 50% RH for 24 hours, after which the sample was subjected to T-peel strength testing. The result was that the peel strength was 420 gf/15 mm.

In a corrugated fiberboard box (15 × 35 × 45 cm) were placed 10 vertical form-fill-seal bags (3-1) having undergone retorting. A gap between the vertical form-fill-seal bags and the corrugated fiberboard box was filled with a buffer material. The corrugated fiberboard box containing the vertical form-fill-seal bags (3-1) was loaded onto a truck, and a transportation test was conducted in which the truck was allowed to run back and forth 10 times between Okayama and Tokyo (a distance of about 700 km). A measurement sample was cut out from each vertical form-fill-seal bag (3-1) having undergone the transportation test, and was subjected to measurement of the oxygen transmission rate. The result was that the oxygen transmission rate was 0.5 mL/(m²•day•atm) after the transportation test. This demonstrates that the vertical form-fill-seal bag of the present invention maintained the barrier performance at a high level when exposed to a high physical stress.

### [Example 4] Vacuum packaging bag

Two pieces of layered product in the shape of a 22 cm × 30 cm rectangle were cut out from the multilayer structure (3-1-2) fabricated in Example 3. The two pieces of the multilayer structure (3-1-2) were stacked together in such a manner that the CPP layers were located interiorly, and the rectangular stack was heat-sealed at its three sides to form a bag. Wood spheres (having a diameter of 30 mm) were selected as a model of a solid food and put into the bag in such a manner that the spheres were closely arranged in a single layer to be in contact with each other. After that, the air inside the bag was removed by degassing, and the remaining one side was heat-sealed to obtain a vacuum packaging bag (4-1) containing the spheres vacuum-packed in such a manner that the bag was in close contact with the spheres along the irregularities of the spheres. A measurement sample was cut out from the vacuum packaging bag (4-1), and was subjected to measurement of the oxygen transmission rate and moisture permeability before stretching. The result was that the oxygen transmission rate was 0.2 mL/(m²•day•atm) and the moisture permeability was 0.2 g/(m²•day) before stretching. The oxygen transmission rate as measured after stretching was 0.5 mL/(m²•day•atm). The stretching was done using the same conditions as in Example 1-1.

Subsequently, the vacuum packaging bag (4-1) was subjected to retorting using a retorting apparatus (RSC-60, manufactured by HISAKA WORKS, LTD.) in hot water/steam at 120°C and 0.15 MPaG for 30 minutes. The appearance of the bag (4-1) having undergone retorting was evaluated. The multilayer structure showed no interlayer delamination, and the bag had good appearance. A measurement sample was cut out from the vacuum packaging bag having undergone retorting, and the sample was left in an atmosphere of 23°C and 50% RH for 24 hours, after which the oxygen transmission rate of the sample was measured. The result was that the oxygen transmission rate was 0.4 mL/(m²•day•atm). In addition, a sample obtained from the bag having undergone retorting was left in an atmosphere of 23°C and 50% RH for 24 hours, after which the sample was subjected to T-peel strength testing. The result was that the peel strength was 400 gf/15 mm.

In a corrugated fiberboard box (15 × 35 × 45 cm) were placed 50 vacuum packaging bags (4-1) having undergone retorting. A gap between the vacuum packaging bags and the corrugated fiberboard box was filled with a buffer material. The corrugated fiberboard box containing the vacuum packaging bags (4-1) was loaded onto a truck, and a transportation test was conducted in which the truck was allowed to run back and forth 10 times between Okayama and Tokyo. A measurement sample was cut out from each vacuum packaging bag (4-1) having undergone the transportation test, and was subjected to measurement of the oxygen transmission rate and moisture permeability. The result was that the oxygen transmission rate was 0.6 mL/(m²•day•atm) after the transportation test. This demonstrates that the vacuum packaging bag of the present invention maintained the barrier performance at a high level when exposed to a high physical stress.

### [Example 5] Laminated tube container

An adhesive layer was formed on two CPP 100s, which were laminated to the multilayer structure (3-1-2) obtained in Example 3. In this way, a laminated film having a configuration of "CPP/adhesive layer/multilayer structure/adhesive layer/CPP" was obtained. The adhesive layer was formed by applying a two-component reactive adhesive ("A-520" and "A-50" used in Example 1-1) using a bar coater in such a manner that the dry thickness would be 3 µm, and then by drying the applied adhesive.

The laminated film obtained was cut into a piece of a given shape, which was formed into a tubular roll having an overlapping portion, which was heat-sealed to produce a tubular body portion. This heat sealing was done between the inner CPP layer and the outer CPP layer. The formation of the tubular body portion was done by rolling the laminate in such a manner that the polyethylene terephthalate film as the base (X) formed the inner surface of the tubular body portion. Next, the tubular body portion was mounted to a mandrel for tube container formation, and a shoulder portion having an outlet portion was joined to one end of the body portion. The shoulder portion was formed by compression molding of a polypropylene resin. Next, a lid (cap) made of polypropylene resin was attached to the outlet portion. Subsequently, a green horseradish paste was put into the body portion through the other open end of the body portion, and the other end was heat-sealed in such a manner that the inner circumferential surfaces formed by the inner CPP layer were in contact with each other. In this way, a laminated tube container (5-1) filled with a green horseradish paste was obtained. A measurement sample was cut out from the laminated tube container (5-1), and was subjected to measurement of the oxygen transmission rate and moisture permeability before stretching. The result was that the oxygen transmission rate was 0.2 mL/(m²•day•atm) and the moisture permeability was 0.2 g/(m²•day). The oxygen transmission rate as measured after stretching was 0.4 mL/(m²•day•atm). The stretching was done using the same conditions as in Example 1-1.

The laminated tube container (5-1) was subjected to retorting using the same conditions as in Example 4. The appearance of the container (5-1) having undergone retorting was evaluated. The multilayer structure showed no interlayer delamination, and the container had good appearance. A measurement sample was cut out from the laminated tube container (5-1) having undergone retorting, and the sample was left in an atmosphere of 23°C and 50% RH for 24 hours, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the container having undergone retorting was left in an atmosphere of 23°C and 50% RH for 24 hours, after which the sample was subjected to T-peel strength testing. The result was that the peel strength was 450 gf/15 mm.

The laminated tube container (5-1) was subjected to a squeeze test in which its body portion was held between fingers and the fingers were moved back and forth along the body portion longitudinally with a certain force being applied to the body portion. After the fingers were moved back and forth 5,000 times, the contained green horseradish paste was removed. A measurement sample was cut out from the laminated tube container (5-1) having undergone the squeeze test, and was subjected to measurement of the oxygen transmission rate. The result was that the oxygen transmission rate was 0.8 mL/(m²•day•atm) after the squeeze test. This demonstrates that the laminated tube container of the present invention maintained the barrier performance at a high level when exposed to a high physical stress.

### [Example 6] Spouted pouch

Two laminates with a size of 20 cm × 13 cm were cut out from the multilayer structure (3-1-2) obtained in Example 3. Subsequently, the two laminates cut out were stacked together in such a manner that the CPP layers were located interiorly, and the outer periphery of the stack was heat-sealed with a seal width of 0.5 cm. Furthermore, a spout made of polypropylene was attached by heat sealing. In this way, a spouted pouch (6-1) of the flat pouch type was fabricated. A measurement sample was cut out from the pouch (6-1), and subjected to measurement of the oxygen transmission rate and moisture permeability before stretching. The result was that the oxygen transmission rate was 0.2 mL/(m²•day•atm) and the moisture permeability was 0.2 g/(m²•day). The oxygen transmission rate as measured after stretching was 0.5 mL/(m²•day•atm). The stretching was done using the same conditions as in Example 1-1.

The pouch (6-1) was filled with 400 mL of distilled water. Subsequently, the resulting pouch was subjected to retorting using a retorting apparatus (Flavor Ace RSC-60, manufactured by HISAKA WORKS, LTD.) in hot water at 130°C and 0.18 MPaG for 30 minutes. The appearance of the pouch (6-1) having undergone retorting was evaluated. The multilayer structure showed no interlayer delamination, and the pouch had good appearance. A measurement sample was cut out from the pouch (6-1) having undergone retorting, and the sample was left in an atmosphere of 23°C and 50% RH for 24 hours, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the pouch having undergone retorting was left in an atmosphere of 23°C and 50% RH for 24 hours, after which the sample was subjected to T-peel strength testing. The result was that the peel strength was 450 gf/15 mm.

The pouch (6-1) having undergone retorting was subjected to a bending test in which the pouch set in a position where a side (heat-sealed side) of the pouch faced downward was dropped from a height of 1.5 m five times. A measurement sample was cut out from the pouch (6-1) having undergone the bending test, and was subjected to measurement of the oxygen transmission rate. The result was that the oxygen transmission rate was 0.8 mL/(m²•day•atm). This demonstrates that the spouted pouch of the present invention maintained the barrier performance at a high level when exposed to a high physical stress.

### [Example 7] Flat pouch

Two laminates with a size of 20 cm × 13 cm were cut out from the multilayer structure (3-1-2) fabricated in Example 3. Subsequently, the two laminates cut out were stacked together in such a manner that the CPP layers were located interiorly, and the three sides of the outer periphery of the stack were heat-sealed with a seal width of 0.5 cm. A pouch opening with a length of 30 mm was then formed at an edge of the one side remaining open. Next, a 30-mm-wide sheet of polytetrafluoroethylene was inserted into the edge of the open side and, in this state, the side was heat-sealed. After the heat sealing, the sheet of polytetrafluoroethylene was removed to obtain a flat pouch (7-1). A measurement sample was cut out from the flat pouch (7-1), and was subjected to measurement of the oxygen transmission rate and moisture permeability before stretching. The result was that the oxygen transmission rate was 0.2 mL/(m²•day•atm) and the moisture permeability was 0.2 g/(m²•day) before stretching. The oxygen transmission rate as measured after stretching was 0.5 mL/(m²•day•atm). The stretching was done using the same conditions as in Example 1-1.

Subsequently, the flat pouch (7-1) was evaluated in a manner similar to that for the spouted pouch of Example 6. In Example 7, the flat pouch was filled with 500 mL of distilled water and then subjected to hot water/steam retorting at 130°C and 0.18 MPaG for 30 minutes. The appearance of the pouch (7-1) having undergone retorting was evaluated. The multilayer structure showed no interlayer delamination, and the pouch had good appearance. A measurement sample was cut out from the pouch (7-1) having undergone retorting, and the sample was left in an atmosphere of 23°C and 50% RH for 24 hours, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the pouch having undergone retorting was left in an atmosphere of 23°C and 50% RH for 24 hours, after which the sample was subjected to T-peel strength testing. The result was that the peel strength was 440 gf/15 mm.

The flat pouch (7-1) having undergone retorting was left at 20°C and 65% RH for 1 hour, after which water was drained through the opening of the pouch. Subsequently, 400 mL of distilled water was put into the pouch so as to narrow the head space area as much as possible. Next, the opening was heat-sealed to hermetically close the pouch so as to prevent leakage of the distilled water contained. The flat pouch having distilled water sealed therein was subjected to a bending test in the same manner as in Example 6. A measurement sample was cut out from the pouch (7-1) having undergone the bending test, and was subjected to measurement of the oxygen transmission rate. The result was that the oxygen transmission rate was 0.7 mL/(m²•day•atm). This demonstrates that the flat pouch of the present invention maintained the barrier performance at a high level when exposed to a high physical stress.

### [Example 8] Gusseted pouch

The multilayer structure (3-1-2) obtained in Example 3 was cut to fabricate two rolls (a 200 m roll having a width of 450 mm and a 200 m roll having a width of 60 mm). Subsequently, these rolls were introduced into a bag making machine (NISHIBE KIKAI CO., LTD.) for both standing bags and three-side-seal bags, and the non-oriented polypropylene portions were heat-sealed to fabricate a bottom-gusseted pouch (its width was 130 mm, its length was 200 mm, and the width of the gusset fold of the bottom gusset was 25 mm). Two side wall portions of the pouch were obtained by cutting the 450-mm-wide roll, while the bottom wall portion (gusset portion) was obtained by cutting the 60-mm-wide roll. Next, a 30-mm-wide sheet of Teflon was inserted into the edge of that one side (opening) of the pouch which had yet to be heat-sealed and, in this state, the one side was heat-sealed. After that, the sheet of Teflon was removed. In this way, a gusseted pouch (8-1) having a pouch opening with a length of 30 mm was obtained. A measurement sample was cut out from the pouch (8-1) and subjected to measurement of the oxygen transmission rate and moisture permeability before stretching. The result was that the oxygen transmission rate was 0.2 mL/(m²•day•atm) and the moisture permeability was 0.2 g/(m²•day). The oxygen transmission rate as measured after stretching was 0.5 mL/(m²•day•atm). The stretching was done using the same conditions as in Example 1-1.

The pouch (8-1) fabricated was evaluated in a manner similar to that for the spouted pouch of Example 6. In Example 8, the gusseted pouch was filled with 500 mL of distilled water and then subjected to steam retorting at 130°C and 0.18 MPaG for 30 minutes. The appearance of the pouch (8-1) having undergone retorting was evaluated. The multilayer structure showed no interlayer delamination, and the pouch had good appearance. A measurement sample was cut out from the gusseted pouch (8-1) having undergone retorting, and the sample was left in an atmosphere of 20°C and 65% RH for 1 hour, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the pouch having undergone retorting was left in an atmosphere of 20°C and 65% RH for 1 hour, after which the sample was subjected to T-peel strength testing. The result was that the peel strength was 450 gf/15 mm.

The pouch (8-1) having undergone retorting was left at 20°C and 65% RH for 1 hour, after which water was drained through the opening of the pouch. Subsequently, 500 ml of distilled water was put into the pouch so as to reduce the head space area as much as possible. Next, the opening was heat-sealed to hermetically close the pouch so as to prevent leakage of the distilled water contained. The gusseted pouch having distilled water sealed therein was subjected to a bending test in the same manner as in Example 6. A measurement sample was cut out from the pouch (8-1) having undergone the bending test and was subjected to measurement of the oxygen transmission rate and moisture permeability. The result was that the oxygen transmission rate was 0.8 mL/(m²•day•atm). This demonstrates that the gusseted pouch of the present invention maintained the barrier performance at a high level when exposed to a high physical stress.

### [Example 9] Infusion bag

Two pieces of multilayer structure with a size of 12 cm × 10 cm were cut out from the multilayer structure (3-1-2) fabricated in Example 3. Subsequently, the two pieces of multilayer structure cut out were stacked together in such a manner that the CPP layers were located interiorly. The periphery of the stack was heat-sealed, and a spout (plug member) made of polypropylene was attached by heat sealing. In this way, an infusion bag (9-1) having the same configuration as that shown in FIG. 5 was fabricated. A measurement sample was cut out from the infusion bag (9-1) and subjected to measurement of the oxygen transmission rate and moisture permeability before stretching. The result was that the oxygen transmission rate was 0.2 mL/(m²•day•atm) and the moisture permeability was 0.2 g/(m²•day). The oxygen transmission rate as measured after stretching was 0.5 mL/(m²•day•atm). The stretching was done using the same conditions as in Example 1-1.

The infusion bag (9-1) fabricated was evaluated in a manner similar to that for the spouted pouch of Example 6. In Example 9, the infusion bag (8-1) was filled with 100 mL of distilled water and then subjected to retorting in hot water at 120°C and 0.15 MPaG for 30 minutes. The appearance of the infusion bag (9-1) having undergone retorting was evaluated. The multilayer structure showed no interlayer delamination, and the bag had good appearance. A measurement sample was cut out from the infusion bag (9-1) having undergone retorting, and the sample was left in an atmosphere of 23°C and 50% RH for 24 hours, after which the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the bag having undergone retorting was left in an atmosphere of 23°C and 50% RH for 24 hours, after which the sample was subjected to T-peel strength testing. The result was that the peel strength was 440 gf/15 mm.

The infusion bag (9-1) having undergone retorting was filled with 100 mL of distilled water, and then subjected to a bending test in which the bag set in a position where a side (heat-sealed side) of the bag faced downward was dropped from a height of 1.5 m five times. A measurement sample was cut out from the infusion bag (9-1) having undergone the bending test and was subjected to measurement of the oxygen transmission rate and moisture permeability. The result was that the oxygen transmission rate was 0.9 mL/(m²•day•atm). This demonstrates that the infusion bag of the present invention maintained the barrier performance at a high level when exposed to a high physical stress.

### [Example 10] Paper container

A polypropylene resin (PP) was applied to both surfaces of a 400 g/m² paperboard by extrusion coating lamination to form non-oriented PP layers (each having a thickness of 20 µm) on the two surfaces of the paperboard. After that, an adhesive layer was formed on the surface of one of the PP layers, onto which the multilayer structure (3-1-2) obtained in Example 3 was laminated. The adhesive layer was formed using the two-component adhesive as used in Example 1-1. Next, the same adhesive was applied to the surface of the multilayer structure, and the multilayer structure and a CPP 50 were bonded together. In this way, a multilayer structure (10-1-2) having a configuration of "PP (outer side)/paperboard/PP/multilayer structure/CPP (inner side)" was fabricated. The lamination of the multilayer structure (3-1-2) was done in such a manner that the layer (Y) was located closer to the paperboard than was the base (X). Next, the multilayer structure (10-1-2) was folded into a container shape in such a manner that the CPP of the multilayer structure (10-1-2) would face the interior of the container to be obtained. The multilayer structure folded into a container shape was subjected to heat sealing to fabricate a brick-type paper container (10-1) (having an inner volume of 500 mL).

A circular sample (with a diameter of 6.5 cm) was cut out from a flat wall portion forming a side surface of the paper container (10-1) in such a manner that the circular sample did not include any of the folded portions. Next, the circular sample cut out (circular flat portion sample) was placed inside a circular hole of 4.5 cm diameter made in a 10-cm-square aluminum foil (with a thickness of 30 µm), and the gap between the sample and the aluminum foil was sealed with a two-component curable epoxy adhesive ("Araldite" (registered trademark), manufactured by Nichiban Co., Ltd.). The oxygen transmission rate and moisture permeability of the sample were measured. The result was that the oxygen transmission rate was 0.2 mL/(m²•day•atm) and the moisture permeability was 0.2 g/(m²•day).

A 6.5 cm × 9.0 cm area including no folded portions was cut out as a sample from a flat wall portion forming a side surface of the paper container (10-1), and the sample was subjected to stretching using the same conditions as in Example 1-1. The oxygen transmission rate of the sample having undergone stretching was measured. The result was that the oxygen transmission rate was 1.4 mL/(m²•day•atm).

Distilled water weighing 500 g was injected into the interior of the paper container (10-1), which was hermetically closed. Subsequently, the container was subjected to retorting using the same conditions as in Example 9. The appearance of the paper container (10-1) having undergone retorting was evaluated. The multilayer structure showed no interlayer delamination, and the container had good appearance. The paper container (10-1) having undergone retorting was left at 20°C and 65% RH for 1 hour, and then drained of water. Subsequently, a circular flat portion sample was cut out from a flat wall portion forming a side surface of the paper container (10-1) in the same manner as before retorting. The oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the container having undergone retorting was left in an atmosphere of 23°C and 50% RH for 24 hours, after which the sample was subjected to T-peel strength testing. The result was that the peel strength was 460 gf/15 mm.

A circular sample (with a diameter of 6.5 cm) was cut out from the paper container (10-1) having undergone retorting, in particular from an area including a folded portion. The oxygen transmission rate of this sample was measured in the same manner as for the circular flat portion sample. The result was that the oxygen transmission rate was 1.0 mL/(m²•day•atm). This demonstrates that the paper container of the present invention maintained the barrier performance at a high level when exposed to a high physical stress during shaping by folding.

### [Example 11] Strip tape

In Example 11, a brick-type paper container including a strip tape was fabricated and evaluated. First, the two-component adhesive as used in Example 1-1 was applied and dried on the multilayer structure (3-1-2) obtained in Example 3, and the multilayer structure and a CPP 50 were laminated together to obtain a laminate. Subsequently, the same two-component adhesive was applied and dried on the multilayer structure of the laminate, and the laminate and a CPP 50 were laminated together. In this way, a multilayer structure (11-1-2) having a configuration of "CPP/adhesive layer/multilayer structure/adhesive layer/CPP" was obtained. This multilayer structure (11-1-2) was cut into a strip shape. A strip tape was thus fabricated.

Next, a paper container was fabricated in a manner similar to that in Example 10. In Example 11, the CPP and the polypropylene resin layer (PP) were heat-sealed at the center of one of the four side surfaces, and the heat-sealed portion lying at the center of the one side surface was covered by the strip tape consisting of the multilayer structure (11-1-2). The portion covered by the strip tape was exposed to heat from the interior of the paper container to bond the multilayer structure to the paper container. A paper container (11-1) was thus fabricated. The paper container (11-1) was subjected to retorting in the same manner as in Example 10.

A circular sample (with a diameter of 6.5 cm) was cut out from the paper container (11-1) having undergone retorting in such a manner that as large a portion as possible of the sample was occupied by the bonded portion at the center of the side surface of the paper container. Next, the oxygen transmission rate of the sample was measured in the same manner as for the circular flat portion sample in Example 10. The result was that the oxygen transmission rate was 0.4 mL/(m²•day•atm). This demonstrates that the strip tape of the present invention maintained the barrier performance at a high level after being exposed to a high physical stress caused by pressure or heat during heat sealing.

### [Example 12] Container lid

A 100-mm-diameter circular piece of multilayer structure was cut out from the multilayer structure (3-1-2) fabricated in Example 3 and used as a lid for a container. A flanged container ("Hi-Retoflex" (registered trademark) "HR 78-84" (product name), manufactured by Toyo Seikan Co., Ltd.) was prepared as a container body. This container has the shape of a 30-mm-high cup whose top surface has a diameter of 78 mm. The top surface of the container is open, and the width of the flange portion formed along the periphery of the top surface is 6.5 mm. The container is made up of a three-layered product having a configuration of "olefin layer/steel layer/olefin layer". Next, the container body was almost completely filled with water, and the lid was heat-sealed to the flange portion, thus obtaining a lidded container (12-1). In this heat sealing of the lid, the lid was set in such a manner that the CPP layer of the lid was in contact with the flange portion. The oxygen transmission rate of the container, as determined by the measurement method used in the present examples, was substantially zero. A measurement sample was cut out from the lid of the lidded container (12-1) and subjected to measurement of the oxygen transmission rate and moisture permeability. The result was that the oxygen transmission rate was 0.2 mL/(m²•day•atm) and the moisture permeability was 0.2 g/(m²•day).

The lidded container (12-1) was subjected to retorting using the same conditions as in Example 9. The appearance of the lidded container (12-1) having undergone retorting was evaluated. The multilayer structure showed no interlayer delamination, and the container had good appearance. The lidded container (12-1) having undergone retorting was left at 20°C and 65% RH for 1 hour, after which a hole was made in the bottom of the container body to drain water. Subsequently, a measurement sample was cut out from the lid of the lidded container (12-1), and the oxygen transmission rate and moisture permeability of the sample were measured. The result was that the oxygen transmission rate was 0.4 mL/(m²•day•atm) and the moisture permeability was 0.2 g/(m²•day). In addition, a sample obtained from the lid of the lidded container having undergone retorting was left in an atmosphere of 23°C and 50% RH for 24 hours, after which the sample was subjected to T-peel strength testing. The result was that the peel strength was 450 gf/15 mm.

In a corrugated fiberboard box (15 × 35 × 45 cm) were placed 10 lidded containers (12-1) having undergone retorting. A gap between the lidded containers (12-1) and the corrugated fiberboard box was filled with a buffer material. The corrugated fiberboard box containing the lidded containers (12-1) was loaded onto a truck, and a transportation test was conducted in which the truck was allowed to run back and forth 10 times between Okayama and Tokyo. Each lidded container (12-1) having undergone the transportation test was left at 20°C and 65% RH for 1 hour, after which a hole was made in the bottom of the container body to drain water. Subsequently, a measurement sample was cut out from the lid of each lidded container (12-1) having undergone the transportation test and was subjected to measurement of the oxygen transmission rate. The result was that the oxygen transmission rate was 0.4 mL/(m²•day•atm). This demonstrates that the lidded container of the present invention maintained the barrier performance at a high level when exposed to a high physical stress.

### [Example 13] In-mold labeled container

A two-component adhesive ("A-520" and "A-50" used in Example 1-1) was applied to two CPP 100s using a bar coater in such a manner that the dry thickness would be 3 µm, and the adhesive was dried. Next, the two CPPs and the multilayer structure (1-1) of Example 1-1 were laminated together, and the resulting laminate was allowed to stand at 40°C for 5 days for aging. In this way, a multilayer label (13-1-2) having a configuration of "CPP/adhesive layer/base (X)/layer (Y)/adhesive layer/CPP" was obtained.

The multilayer label (13-1-2) was cut to fit the inner wall surface of a female mold member of a container-forming mold, and attached to the inner wall surface of the female mold member. A male mold member was then pressed into the female mold member. Next, molten polypropylene ("EA7A" of "NOVATEC" (registered trademark), manufactured by Japan Polypropylene Corporation) was injected into the cavity formed between the male mold member and the female mold member at 220°C. The injection molding was carried out in this way to form the intended container (13-1-3). The container body had a thickness of 700 µm and a surface area of 83 cm². The entire exterior of the container was covered with the multilayer label (13-1-2); that is, the multilayer label (13-1-2) overlapped the seam so that the exterior of the container was free of any area that was not covered with the multilayer label (13-1-2). The appearance of the container (13-1-3) was good.

A measurement sample was cut out from the body of the container in such a manner that the sample did not include the seam of the multilayer label, and the oxygen transmission rate and moisture permeability of the sample were measured. The result was that the oxygen transmission rate was 0.2 mL/(m²•day•atm) and the moisture permeability was 0.2 g/(m²•day). This demonstrates that the in-mold labeled container of the present invention had a high level of barrier performance after being exposed to a high physical stress caused by pressure or heat during in-mold labeling.

### [Example 14] Extrusion coating lamination

An adhesive layer was formed on the layer (Y) of the multilayer structure (1-1) of Example 1-1, and a polyethylene resin (density: 0.917 g/ cm³, melt flow rate: 8 g/10 min) was then applied onto the adhesive layer by extrusion coating lamination at 295°C in such a manner that the applied resin had a thickness of 20 µm. In this way, a multilayer structure (14-1-2) having a configuration of "base (X)/layer (Y)/adhesive layer/polyethylene" was obtained. The adhesive layer was formed by applying a two-component adhesive using a bar coater in such a manner that the dry thickness would be 0.3 µm, and then by drying the applied adhesive. This two-component adhesive used was a two-component reactive polyurethane adhesive composed of "A-3210" of "TAKELAC" (registered trademark) manufactured by Mitsui Chemicals, Inc. and "A-3070" of "TAKENATE" (registered trademark) manufactured by Mitsui Chemicals, Inc.

The oxygen transmission rate and moisture permeability of the multilayer structure (14-1-2) were measured by the methods described above. The result was that the oxygen transmission rate was 0.2 mL/(m²•day•atm) and the moisture permeability was 0.2 g/(m²•day). This demonstrates that by the use of the multilayer structure provided by the present invention, high barrier performance was successfully achieved after exposure to a high physical stress caused by pressure or heat during extrusion coating.

### [Example 15] Vacuum insulator

The two-component reactive polyurethane adhesive as used in Example 1-1 was applied onto a CPP 60 in such a manner that the dry thickness would be 3 µm, and the adhesive was dried to form an adhesive layer on the CPP 60. This CPP and the PET layer of the multilayer structure (3-1-2) fabricated in Example 3 were bonded together to obtain a layered product (15-1-1). Subsequently, the same two-component adhesive was applied onto an ONY in such a manner that the dry thickness would be 3 µm, and the adhesive was dried to form an adhesive layer on the ONY. This ONY and the layered product (15-1-1) were bonded together to obtain a multilayer structure (15-1-2) having a configuration of "CPP/adhesive layer/multilayer structure/adhesive layer/ONY".

The multilayer structure (15-1-2) was cut to obtain two laminates with a size of 70 cm × 30 cm. The two laminates were stacked together in such a manner that the CPP layers would form inner surfaces of a bag to be fabricated, and the stack was heat-sealed at its three sides with a seal width of 10 mm. A three-side-seal bag was thus fabricated. Next, a heat-insulating core material was put into the three-side-seal bag through its opening, and the three-side-seal bag was hermetically closed using a vacuum packaging machine so that the internal pressure was 10 Pa at 20°C. In this way, a vacuum insulator (15-1) was obtained. The heat-insulating core material used was a fine silica powder. The vacuum insulator (15-1) was left at 40°C and 15% RH for 360 days, after which the pressure of the interior of the vacuum insulator was measured using a Pirani gauge. The measured pressure was 37.0 Pa.

A measurement sample was cut out from the vacuum insulator (15-1) and subjected to measurement of the oxygen transmission rate and moisture permeability before stretching. The result was that the oxygen transmission rate was 0.2 mL/(m²•day•atm) and the moisture permeability was 0.2 g/(m²•day) before stretching. The oxygen transmission rate as measured after stretching was 0.4 mL/(m²•day•atm). The sample was left in an atmosphere of 23°C and 50% RH for 24 hours before stretching, and the stretching was then done in the same atmosphere by keeping the sample stretched by 3% in one direction corresponding to the longitudinal direction for 10 seconds. As demonstrated by the above results, the multilayer structure of the present invention maintained the barrier performance at a high level when exposed to a high physical stress, and the vacuum insulator including the multilayer structure successfully maintained its internal pressure.

The vacuum insulator (15-1) was stored in an atmosphere of 85°C and 85% RH for 1,000 hours, after which it was left in an atmosphere of 23°C and 50% RH for 24 hours. After that, a measurement sample was cut out from the vacuum insulator (15-1) and subjected to T-peel strength testing. The result was that the peel strength was 450 gf/15 mm.

### [Example 16] Influence by contained material

### <Example 16-1>

Various liquid materials were put into the flat pouches (7-1) as described in Example 7 in an amount of 500 mL each. The liquid materials used were a 1.5% aqueous ethanol solution (Example 16-1), vinegar (Example 16-2), an aqueous citric acid solution with a pH of 2 (Example 16-3), an edible oil (Example 16-4), ketchup (Example 16-5), soy sauce (Example 16-6), a ginger paste (Example 16-7), and a liquid containing 200 g of Japanese mandarin orange (Example 16-8). The flat pouches thus prepared were stored at 23°C and 50% RH for 6 months. A measurement sample was cut out from each of the flat pouches after the storage, and the oxygen transmission rate of the sample was measured. The oxygen transmission rate was 0.2 mL/(m²•day•atm) for all of the samples of Examples 16-1 to 16-8.

### <Example 16-2>

Various liquid materials were put into the lidded containers (12-1) as described in Example 12, and the containers were sealed. The liquid materials used were a 1.5% aqueous ethanol solution (Example 16-9), vinegar (Example 16-10), an aqueous citric acid solution with a pH of 2 (Example 16-11), an edible oil (Example 16-12), ketchup (Example 16-13), soy sauce (Example 16-14), a ginger paste (Example 16-15), and a liquid containing 100 g of Japanese mandarin orange (Example 16-16). The lidded containers thus prepared were stored at 23°C and 50% RH for 6 months. A measurement sample was cut out from the lid of each of the lidded containers after the storage, and the oxygen transmission rate of the sample was measured. The oxygen transmission rate was 0.2 mL/(m²•day•atm) for all of the samples of Examples 16-9 to 16-16.

As is apparent from Examples 16-1 to 16-16, each packaging material including a multilayer structure of the present invention showed good barrier performance after undergoing a storage test with a food being contained in the packaging material.

### [Example 17] Electronic device

### <Example 17-1>

A PET 12 was used as the base, and the coating liquid (T-1) was applied onto the base (PET) using a bar coater in such a manner that the dry thickness would be 0.5 µm. The coating liquid was then dried at 110°C for 5 minutes. This was followed by heat treatment at 180°C for 1 minute. In this way, a multilayer structure (17-1) having a configuration of "base (X)/layer (Y)" was obtained. An infrared absorption spectrum of the obtained structure was measured. As a result, the maximum absorption wavenumber in the region of 800 to 1,400 cm⁻¹ was determined to be 1,107 cm⁻¹, and the half width of the maximum absorption band was determined to be 37 cm⁻¹.

An adhesive layer was formed on a 50-µm-thick acrylic resin film, which was then laminated to the multilayer structure (17-1) to obtain a layered product. Subsequently, an adhesive layer was formed on the multilayer structure (17-1) of the layered product, and the layered product was then laminated to a PET 50. In this way, a protective sheet (17-1) having a configuration of "PET/adhesive layer/base (X)/layer (Y)/adhesive layer/acrylic resin film" was obtained. The two adhesive layers were each formed by applying a two-component adhesive in such a manner that the dry thickness would be 3 µm, and then by drying the applied adhesive. The two-component adhesive used was a two-component reactive polyurethane adhesive composed of "A-1102" of "TAKELAC" (registered trademark) manufactured by Mitsui Chemicals, Inc. and "A-3070" of "TAKENATE" (registered trademark) manufactured by Mitsui Chemicals, Inc.

The oxygen transmission rate and moisture permeability of the protective sheet (17-1) obtained were measured. The oxygen transmission rate was 0.2 mL/(m²•day•atm), and the moisture permeability was 0.2 g/(m²•day). In addition, a measurement sample with a size of 15 cm × 10 cm was cut out from the protective sheet (17-1). The sample was left at 23°C and 50% RH for 24 hours, after which, under the same conditions, the sample was subjected to stretching in which it was longitudinally stretched by 3% and allowed to keep the stretched state for 10 seconds. The oxygen transmission rate of the protective sheet (17-1) having undergone stretching was measured. The oxygen transmission rate as measured after stretching was 0.5 mL/(m²•day•atm).

The protective sheet (17-1) was stored in an atmosphere of 85°C and 85% RH for 1,000 hours, after which a measurement sample was cut out from the protective sheet (17-1). The sample was subjected to T-peel strength testing. The result was that the peel strength was 420 gf/15 mm.

### <Comparative Example 17-1>

A multilayer structure (C17-1) was fabricated in the same manner as in the fabrication of the multilayer structure (17-1) of Example 17-1, except for using the coating liquid (CS-1) instead of the coating liquid (S-1).

A protective sheet (C17-1) was fabricated in the same manner as in the fabrication of the protective sheet (17-1) of Example 17-1, except for using the multilayer structure (C17-1) instead of the multilayer structure (17-1). The protective sheet (C17-1) was evaluated in the same manner as in Example 17-1. The oxygen transmission rate was 0.2 mL/(m²•day•atm), and the moisture permeability was 0.2 g/(m²•day), as measured before stretching. The oxygen transmission rate as measured after stretching was 0.5 mL/(m²•day•atm).

The protective sheet (C17-1) was stored in an atmosphere of 85°C and 85% RH for 1,000 hours, after which a measurement sample was cut out from the protective sheet (C17-1). The sample was subjected to T-peel strength testing. The result was that the peel strength was 150 gf/15 mm.

The protective sheet (multilayer structure) of Example was more resistant to appearance defects such as delamination than the protective sheet of Comparative Example at high temperature and high humidity.

### <Example 17-2>

The protective sheet (17-1) obtained in Example 17-1 was tested for flexibility. Specifically, a test was conducted in which the protective sheet (17-1) was wound 20 times around the outer circumferential surface of a stainless steel cylindrical tube (outer diameter: 30 cm). The protective sheet (17-1) showed no damage caused by this test. This confirmed that the protective sheet (17-1) had flexibility.

### <Example 17-3>

A solar cell module was fabricated using the multilayer structure (17-1) obtained in Example 17-1. Specifically, an amorphous silicon solar cell placed on 10-cm-square tempered glass was sandwiched between ethylene-vinyl acetate copolymer films with a thickness of 450 µm first. The multilayer structure (17-1) was then bonded onto one of the films in such a manner that the polyethylene terephthalate layer of the multilayer structure (17-1) faced outwardly. In this way, the solar cell module was fabricated. The bonding was done by vacuum drawing at 150°C for 3 minutes, followed by compression bonding for 9 minutes. The thus fabricated solar cell module operated well and continued to show good electrical output characteristics over a long period of time.

The present invention is applicable to a multilayer structure, a packaging material including the multilayer structure, and a method for producing a multilayer structure. The present invention can provide a multilayer structure having good gas barrier properties and capable of maintaining the gas barrier properties at a high level even when exposed to physical stresses such as deformation and impact. The present invention can provide a multilayer structure that has good interlayer adhesion and that does not suffer from appearance defects such as delamination even after undergoing retorting. The use of the multilayer structure of the present invention can provide a good packaging material.

The multilayer structure of the present invention is particularly preferably used as or in a packaging material. Examples of applications other than the use as or in a packaging material include uses as or in electronic device-related members, including: display members such as a substrate film for LCDs, a substrate film for organic EL devices, a substrate film for electronic paper, a sealing film for electronic devices, and a film for PDPs; a film for LEDs; a film for IC tags; a solar cell module; and solar cell members such as a back sheet for solar cells and a protective film for solar cells. Other examples include: a member for optical communication; a flexible film for electronic equipment; a barrier membrane for fuel cells; a sealing film for fuel cells; and a substrate film for various functional films.

### DESCRIPTION OF REFERENCE NUMERALS

- 10: Vertical form-fill-seal bag
- 11: Multilayer structure
- 11a: Edge portion
- 11b, 331: Body portion
- 131, 132, 410a, 410b, 631, 632: Film material
- 101: Vacuum packaging bag
- 111, 11c, 411, 412, 413, 414, 611: Edge
- 112: Central portion
- 150: Substance
- 20: Flat pouch
- 301: Laminated tube container
- 310: Laminated film
- 311: End sealed portion
- 312: Side sealed portion
- 320, 420, 620: Separation barrier
- 332: Shoulder portion
- 341: Base portion
- 342: Outlet portion
- 360: Container
- 361, 362, 363: Multilayer label
- 361a: Through hole
- 370: Container body
- 371: Flange portion
- 372: Body portion
- 373: Bottom portion
- 371a: Projection
- 401: Infusion bag
- 431: Bag body
- 432: Plug member
- 433: Hanging hole
- 40: Electronic device
- 41: Electronic device body
- 42: Sealing material
- 43: Protective sheet (multilayer structure)
- 50: Extrusion coating lamination apparatus
- 51: Extruder
- 52: T-die
- 53: Cooling roll
- 54: Rubber roll
- 501: Layered product
- 502: Resin film
- 503: Laminated film (multilayer structure)
- 510: Paper container
- 511: Window portion
- 601, 602: Vacuum insulator
- 610: Sheath material
- 651, 652: Core material

## Claims

1. A multilayer structure comprising a base (X), a layer (Y), and a layer (Z) disposed contiguous to the layer (Y), wherein
the layer (Y) comprises a compound (A) containing a phosphorus atom and a polymer (B) having a hydroxy group and/or carboxyl group,
a mass ratio between the compound (A) and the polymer (B) is 15 : 85 to 99 : 1 in the layer (Y), and
the layer (Z) is a layer containing aluminum atoms, wherein
the compound (A) is a polymer having at least one functional group selected from the group consisting of a phosphoric acid group, a phosphorous acid group, a phosphonic acid group, a phosphonous acid group, a phosphinic acid group, and a phosphinous acid group.

2. The multilayer structure according to claim 1, wherein the compound (A) is poly(vinylphosphonic acid).

3. The multilayer structure according to claim 1 or 2, wherein the polymer (B) is a polyvinyl alcohol-based polymer.

4. The multilayer structure according to any one of claims 1 to 3, wherein
the layer (Z) comprises a layer (Z1) containing a reaction product (E),
the reaction product (E) is a reaction product formed by a reaction between a metal oxide (C) containing aluminum and a phosphorus compound (D), and
in an infrared absorption spectrum of the layer (Z1), a maximum absorption wavenumber in a region of 800 to 1,400 cm⁻¹ is 1,080 to 1,130 cm⁻¹.

5. The multilayer structure according to any one of claims 1 to 4, wherein the layer (Z) comprises a deposited layer (Z2) of aluminum or a deposited layer (Z3) of aluminum oxide.

6. The multilayer structure according to any one of claims 1 to 5, wherein the base (X) comprises at least one selected from the group consisting of a thermoplastic resin film layer and a paper layer.

7. A method for producing the multilayer structure according to any one of claims 1 to 6, the method comprising:
a step (Y-i) of mixing a compound (A) containing a phosphorus atom, a polymer (B) having a hydroxy group and/or carboxyl group, and a solvent to prepare a coating liquid (S) containing the compound (A), the polymer (B), and the solvent;
a step (Y-ii) of forming a layer (Y) using the coating liquid (S); and
a layer (Z) formation step of forming a layer (Z) containing aluminum atoms, wherein
the layer (Y) and the layer (Z) are formed contiguous to each other, and
the compound (A) and the polymer (B) are mixed at a mass ratio of 15 : 85 to 99 : 1 in the step (Y-i), wherein
the compound (A) is a polymer having at least one functional group selected from the group consisting of a phosphoric acid group, a phosphorous acid group, a phosphonic acid group, a phosphonous acid group, a phosphinic acid group, and a phosphinous acid group.

8. A packaging material comprising the multilayer structure according to any one of claims 1 to 6.

9. The packaging material according to claim 8, further comprising a layer formed by extrusion coating lamination.

10. The packaging material according to claim 8 or 9, being a vertical form-fill-seal bag, a vacuum packaging bag, a pouch, a laminated tube container, an infusion bag, a paper container, a strip tape, a container lid, or an in-mold labeled container.

11. A product comprising the packaging material according to any one of claims 8 to 10 in at least a part of the product.

12. The product according to claim 11, adapted to function as a vacuum insulator,
the product having an interior with a reduced pressure,
the product comprising a substance contained in the interior, the substance being a core material.

13. An electronic device comprising the multilayer structure according to any one of claims 1 to 6.

14. The electronic device according to claim 13, comprising a protective sheet that protects a surface of a main body of the electronic device, wherein
the protective sheet comprises the multilayer structure according to any one of claims 1 to 6.

15. The electronic device according to claim 13 or 14, being a photoelectric conversion device, an information display device, or a lighting device.

## Patentansprüche

1. Mehrschichtige Struktur, umfassend eine Grundlage (X), eine Schicht (Y) und eine Schicht (Z), welche in Bezug auf die Schicht (Y) angrenzend angeordnet ist, wobei
die Schicht (Y) eine Verbindung (A), enthaltend ein Phosphoratom, und ein Polymer (B) mit einer Hydroxygruppe und/oder Carboxylgruppe umfasst,
ein Massenverhältnis zwischen der Verbindung (A) und dem Polymer (B) 15 : 85 bis 99 : 1 in der Schicht (Y) beträgt und
die Schicht (Z) eine Schicht, welche Aluminiumatome enthält, ist, wobei die Verbindung (A) ein Polymer mit mindestens einer funktionellen Gruppe, ausgewählt aus der Gruppe, bestehend aus einer Phosphorsäuregruppe, einer phosphorigen Säuregruppe, einer Phosphonsäuregruppe, einer phosphonigen Säuregruppe, einer Phosphinsäuregruppe und einer phosphinigen Säuregruppe, ist.

2. Mehrschichtige Struktur nach Anspruch 1, wobei die Verbindung (A) Poly(vinylphosphonsäure) ist.

3. Mehrschichtige Struktur nach Anspruch 1 oder 2, wobei das Polymer (B) ein Polymer auf Polyvinylalkoholbasis ist.

4. Mehrschichtige Struktur nach einem der Ansprüche 1 bis 3, wobei
die Schicht (Z) eine Schicht (Z1), enthaltend ein Reaktionsprodukt (E), umfasst, das Reaktionsprodukt (E) ein Reaktionsprodukt ist, welches durch eine Reaktion zwischen einem Metalloxid (C), enthaltend Aluminium, und einer Phosphorverbindung (D) gebildet ist, und
in einem Infrarotabsorptionsspektrum der Schicht (Z1) eine Wellenzahl der maximalen Absorption in einem Bereich von 800 bis 1400 cm⁻¹ 1080 bis 1130 cm⁻¹
beträgt.

5. Mehrschichtige Struktur nach einem der Ansprüche 1 bis 4, wobei die Schicht (Z) eine abgeschiedene Schicht (Z2) aus Aluminium oder eine abgeschiedene Schicht (Z3) aus Aluminiumoxid umfasst.

6. Mehrschichtige Struktur nach einem der Ansprüche 1 bis 5, wobei die Grundlage (X) mindestens eines, ausgewählt aus der Gruppe, bestehend aus einer thermoplastischen Harzfolienschicht und einer Papierschicht, umfasst.

7. Verfahren zur Herstellung der mehrschichtigen Struktur nach einem der Ansprüche 1 bis 6, wobei das Verfahren umfasst:
einen Schritt (Y-i) des Mischens einer Verbindung (A), enthaltend ein Phosphoratom, eines Polymers (B) mit einer Hydroxygruppe und/oder Carboxylgruppe und eines Lösungsmittels, um eine Beschichtungsflüssigkeit (S), enthaltend die Verbindung (A), das Polymer (B) und das Lösungsmittel, herzustellen;
einen Schritt (Y-ii) des Bildens einer Schicht (Y) unter Verwendung der Beschichtungsflüssigkeit (S); und
einen Schicht (Z)-Bildungsschritt des Bildens einer Schicht (Z), welche Aluminiumatome enthält, wobei
die Schicht (Y) und die Schicht (Z) aneinander angrenzend gebildet werden und
die Verbindung (A) und das Polymer (B) bei einem Massenverhältnis von 15 : 85 bis 99 : 1 in dem Schritt (Y-i) gemischt werden, wobei
die Verbindung (A) ein Polymer mit mindestens einer funktionellen Gruppe, ausgewählt aus der Gruppe, bestehend aus einer Phosphorsäuregruppe, einer phosphorigen Säuregruppe, einer Phosphonsäuregruppe, einer phosphonigen Säuregruppe, einer Phosphinsäuregruppe und einer phosphinigen Säuregruppe, ist.

8. Verpackungsmaterial, umfassend die mehrschichtige Struktur nach einem der Ansprüche 1 bis 6.

9. Verpackungsmaterial nach Anspruch 8, weiter umfassend eine durch Extrusionsbeschichtungslaminierung gebildete Schicht.

10. Verpackungsmaterial nach Anspruch 8 oder 9, welches ein vertikaler Form-Füll-Siegel-Beutel, ein Vakuumverpackungsbeutel, ein Beutelsack, ein laminierter Röhrenbehälter, ein Infusionsbeutel, ein Papierbehälter, ein Streifenband, ein Behälterdeckel oder ein In-Mold-etikettierter Behälter ist.

11. Erzeugnis, umfassend das Verpackungsmaterial nach einem der Ansprüche 8 bis 10 in mindestens einem Teil des Erzeugnisses.

12. Erzeugnis nach Anspruch 11, eingerichtet, um als ein Vakuumisolator zu dienen, wobei
das Erzeugnis einen Innenraum mit einem verringerten Druck aufweist,
das Erzeugnis einen in dem Innenraum enthaltenen Stoff umfasst, wobei der Stoff ein Kernmaterial ist.

13. Elektronische Vorrichtung, umfassend die mehrschichtige Struktur nach einem der Ansprüche 1 bis 6.

14. Elektronische Vorrichtung nach Anspruch 13, umfassend ein Schutzblatt, das eine Oberfläche eines Hauptkörpers der elektronischen Vorrichtung schützt, wobei
das Schutzblatt die mehrschichtige Struktur nach einem der Ansprüche 1 bis 6 umfasst.

15. Elektronische Vorrichtung nach Anspruch 13 oder 14, welche eine photoelektrische Umwandlungsvorrichtung, eine Informationsanzeigevorrichtung oder eine Beleuchtungsvorrichtung ist.

## Revendications

1. Structure multicouche comprenant une base (X), une couche (Y) et une couche (Z) disposée de manière contiguë à la couche (Y), où
la couche (Y) comprend un composé (A) contenant un atome de phosphore et un polymère (B) ayant un groupe hydroxyle et/ou un groupe carboxyle,
le rapport massique entre le composé (A) et le polymère (B) se situe dans l'intervalle allant de 15:85 à 99:1 dans la couche (Y), et
la couche (Z) est une couche contenant des atomes d'aluminium, où le composé (A) est un polymère ayant au moins un groupe fonctionnel choisi parmi le groupe consistant en un groupe acide phosphorique, un groupe acide phosphoreux, un groupe acide phosphonique, un groupe acide phosphoneux, un groupe acide phosphinique et un groupe acide phosphineux.

2. Structure multicouche selon la revendication 1, où le composé (A) est le poly(acide vinylphosphonique).

3. Structure multicouche selon la revendication 1 ou 2, où le polymère (B) est un polymère à base de poly(alcool vinylique).

4. Structure multicouche selon l'une quelconque des revendications 1 à 3, où la couche (Z) comprend une couche (Z1) contenant un produit de réaction (E), le produit de réaction (E) étant le produit formé par la réaction entre un oxyde métallique (C) contenant de l'aluminium et un composé du phosphore (D), et dans le spectre d'absorption infrarouge de la couche (Z1), le nombre d'onde du pic d'absorption maximale dans la région allant de 800 à 1400 cm⁻¹ se situe dans l'intervalle allant de 1080 à 1130 cm⁻¹.

5. Structure multicouche selon l'une quelconque des revendications 1 à 4, où la couche (Z) comprend une couche déposée (Z2) d'aluminium ou une couche déposée (Z3) d'oxyde d'aluminium.

6. Structure multicouche selon l'une quelconque des revendications 1 à 5, où la base (X) comprend au moins l'un des éléments faisant partie du groupe consistant en un film de résine thermoplastique et une couche en papier.

7. Procédé de production de la structure multicouche selon l'une quelconque des revendications 1 à 6, le procédé comprenant :
une étape (Y-i) de mélange d'un composé (A) contenant un atome de phosphore, d'un polymère (B) ayant un groupe hydroxyle et/ou un groupe carboxyle, et d'un solvant pour préparer un liquide de revêtement (S) contenant le composé (A), le polymère (B) et le solvant ;
une étape (Y-ii) de formation d'une couche (Y) à l'aide du liquide de revêtement (S), et;
une étape de formation de la couche (Z) destinée à former une couche (Z) contenant des atomes d'aluminium, où
la couche (Y) et la couche (Z) sont formées de manière contiguë l'une à l'autre, et à l'étape (Y-i), le composé (A) et le polymère (B) sont mélangés en un rapport massique se situant dans l'intervalle allant de 15:85 à 99:1, où
le composé (A) est un polymère ayant au moins un groupe fonctionnel choisi parmi le groupe consistant en un groupe acide phosphorique, un groupe acide phosphoreux, un groupe acide phosphonique, un groupe acide phosphoneux, un groupe acide phosphinique et un groupe acide phosphineux.

8. Matériau d'emballage comprenant la structure multicouche selon l'une quelconque des revendications 1 à 6.

9. Matériau d'emballage selon la revendication 8, comprenant en outre, une couche formée par stratification par revêtement par extrusion.

10. Matériau d'emballage selon la revendication 8 ou 9, qui est un sachet vertical pour mise en forme-remplissage-scellement, un sachet d'emballage sous vide, une poche, un récipient tubulaire stratifié, une poche de perfusion, un récipient en papier, une bande adhésive, un couvercle de récipient,ou un récipient étiqueté dans le moule.

11. Produit contenant le matériau d'emballage selon l'une quelconque des revendications 8 à 11 dans au moins une partie du produit.

12. Produit selon la revendication 11, adapté pour fonctionner comme isolant sous vide,
le produit présentant un intérieur sous pression réduite,
le produit comprenant une substance présente à l'intérieur, la substance étant un matériau de base.

13. Dispositif électronique comprenant la structure multicouche selon l'une quelconque des revendications 1 à 6.

14. Dispositif électronique selon la revendication 13, comprenant une feuille protectrice qui protège la surface d'un corps principal du dispositif électronique, où la feuille protectrice comprend la structure multicouche selon l'une quelconque des revendications 1 à 6.

15. Dispositif électronique selon la revendication 13 ou 14, qui est un dispositif de conversion photoélectrique, un dispositif d'affichage d'information ou un dispositif d'éclairage.
